(19) Europäisches Patentamt
European Patent Office
Office européen des brevets

(11) EP 3 854 835 A1

(12) **EUROPEAN PATENT APPLICATION**

(43) Date of publication:
**28.07.2021 Bulletin 2021/30**

(21) Application number: **20206000.0**

(22) Date of filing: **05.11.2020**

(51) Int Cl.:
***C08G 75/30*** *(2006.01)* ***C08L 81/10*** *(2006.01)*
***H01L 21/00*** *(2006.01)* ***H01M 10/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.01.2020 US 202062965560 P**
**17.02.2020 US 202062977521 P**

(71) Applicant: **HYDRO-QUEBEC**
**Montréal, Québec H2Z 1A4 (CA)**

(72) Inventors:
- **DAIGLE, Jean-Christophe**
**St-Bruno-de-Montarville, J3V 1V7 (CA)**
- **LAROUCHE, Annie-Pier**
**Sainte-Julie, J3E 1J3 (CA)**
- **CHAREST, Patrick**
**SAINTE JULIE, J3E 1P2 (CA)**
- **GUERFI, Abdelbast**
**BROSSARD, J4X 1W2 (CA)**
- **DONTIGNY, Martin**
**Varennes, J3X 1Y6 (CA)**
- **ARMAND, Michel**
**75014 PARIS (FR)**
- **HINTENNACH, Andreas**
**71732 TAMM (DE)**
- **ZAGHIB, Karim**
**LONGUEUIL, J4N 1T8 (CA)**

(74) Representative: **Lavoix**
**Bayerstraße 83**
**80335 München (DE)**

(54) **POLYMER COMPOSITIONS COMPRISING AT LEAST ONE POLYMER BASED ON IONIC MONOMERS, METHODS OF MAKING SAME AND THEIR USE IN ELECTROCHEMICAL APPLICATIONS**

(57) The present technology relates to an ionic polymer comprising at least one repeating unit comprising the reaction product between at least one compound comprising two or more functional groups and a metal bis(halosulfonyl)imide for use in electrochemical applications, particularly in electrochemical accumulators such as batteries, electrochromic devices, and supercapacitors. The present technology also relates to a polymer composition, a solid polymer electrolyte composition, a solid polymer electrolyte, an electrode material comprising said ionic polymer. Their uses in electrochemical cells and electrochemical accumulators as well as their processes of manufacturing are also described.

EP 3 854 835 A1

## Description

### TECHNICAL FIELD

The present application relates to the field of polymers and their use in electrochemical applications. More particularly, the present application relates to the field of solid polymer electrolytes, polymer compositions, solid polymer electrolyte compositions, their methods of production and their uses in electrochemical cells, electrochromic devices, supercapacitors, electrochemical accumulators, particularly in solid state batteries.

### BACKGROUND

Solid polymer electrolytes are promising material for many technological applications as they allow for the development of solid-state electrochemical devices which are substantially safer, lighter, more flexible and efficient than their counterparts based on the use of liquid electrolytes.

Despite their significant advantages, the use of solid polymer electrolytes is still limited mainly due to their limited electrochemical stability, low transport number and relatively low ionic conductivity. The electrochemical stability window of conventional solid polymer electrolytes is indeed still relatively limited, and as such, conventional solid-state polymer electrolytes do not support high-voltage operation (≥ 4 V vs Li/Li+).

In addition, conventional solid polymer electrolytes such as those based on poly(ethylene oxide) (PEO) face problems associated with their low ionic conductivity at ambient temperatures. For example, the ionic conductivity of PEO in the molten state is of the order of $10^{-3}$ $S.cm^{-1}$ (Hallinan et al., Annual review of materials research 43 (2013): 503-525). However, ion transport occurs mainly in the amorphous phase and decreases within the crystalline phase leading to a significant reduction in ionic conductivity of PEO-based polymers. Indeed, the ionic conductivity of PEO-based polymer substantially decreases at operation temperatures below its melting point (Armand, M. Solid State Ionics 9 (1983): 745-754). The degree of crosslinking is also associated with electrochemical stability and low ionic conductivity issues, in particular due to a reduced segmental mobility.

A common approach to address the low ionic conductivity at room temperature issue involves the modification of the polymer structure to decrease its crystallinity, for example, by using branched or block PEO-based polymers comprising monomeric units decreasing the crystallization temperature, the glass transition temperature, or increasing the ionic transport number. Another strategy employed to address this problem involves the incorporation of nano-scale ceramic fillers such as titanium dioxide ($TiO_2$), alumina ($Al_2O_3$), silicon dioxide ($SiO_2$) and lithium aluminate ($LiAlO_2$) particles in PEO-based polymers in order to improve mechanical strength. However, the presence of these fillers can contribute to a decrease in electrochemical and/or mechanical properties of the polymer.

Consequently, there is a need for the development of solid polymer electrolytes excluding one or more of the drawbacks of conventional solid polymer electrolytes.

### SUMMARY

According to one aspect, the present technology relates to an ionic polymer comprising at least one repeating unit being the reaction product between at least one compound of Formula 1 comprising two or more functional groups and a metal bis(halosulfonyl)imide of Formula 2:

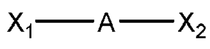

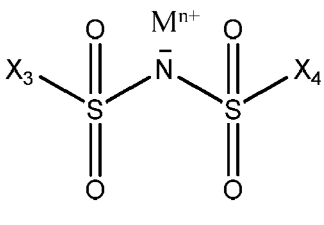

Formula 1 Formula 2

wherein,

A is an optionally substituted organic group selected from a linear or branched $C_1$-$C_{10}$alkylene, a linear or branched $C_1$-$C_{10}$alkyleneoxy$C_1$-$C_{10}$alkylene, a linear or branched poly($C_1$-$C_{10}$alkyleneoxy)$C_1$-$C_{10}$alkylene, a linear or branched polyether and a linear or branched polyester;

$X_1$ and $X_2$ are functional groups independently and at each occurrence selected from the group consisting of a hydroxyl group, a thiol group and an amino group;

$X_3$ and $X_4$ are halogen atoms each independently selected from the group consisting of F, Cl, Br and I; and

$M^{n+}$ is an alkali or alkaline earth metal ion selected from the group consisting of $Na^+$, $K^+$, $Li^+$, $Ca^{2+}$ and $Mg^{2+}$ ions.

In one embodiment, the compound of Formula 1 is selected from the group consisting of glycerol, alkane diols, 1,3-propanediol, 1,4-butanediol, 1,5-pentanediol, 1,6-hexanediol, 1,8-octanediol, 1,2-propanediol, 1,2-butanediol, 2,3-butanediol, 1,3-butanediol, 1,2-pentanediol, etohexadiol, p-menthane-3,8-diol, 2-methyl-2,4-pentanediol, polycaprolactone diol, ethylene glycol, diethylene glycol, triethylene glycol, tetraethylene glycol, pentaethylene glycol, polyethylene glycol, 2,2,3,3,4,4,5,5-octafluoro-1,6-hexanediol, a combination of at least two thereof and other similar glycols and diols.

In another embodiment, the compound of Formula 1 is selected from the group consisting of alkane diamines, 1,3-propanediamine, 1,4-butanediamine, 1,5-pentanediamine, 1,6-hexanediamine, 1,8-octanediamine, 1,2-propanediamine, 1,2-butanediamine, 2,3-butanediamine, 1,3-butanediamine, 1,2-pentanediamine, 2,4-diamino-2-methylpentane, ethylenediamine, 1,8-diamino-3,6-dioxaoctane, 1,11-diamino-3,6,9-trioxaundecane, 4,9-dioxa-1,12-dodecanediamine, 1,14-diamino-3,6,9,12-tetraoxatetradecane, poly(ethylene glycol) diamines, JEFFAMINE® D, ED or EDR series products, a combination of at least two thereof and other similar diamines.

In another embodiment, A is an optionally substituted linear or branched $C_1$-$C_{10}$alkylene group and the compound comprising two or more functional groups may be of Formula 3:

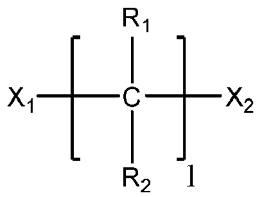

Formula 3

wherein,

$X_1$ and $X_2$ are as herein defined;

$R_1$ and $R_2$ are independently and at each occurrence selected from a hydrogen atom, a hydroxyl group, a thiol group, an amino group, a halogen atom selected from F, Cl, Br and I, and a linear or branched substituent selected from the group consisting of $C_1$-$C_{10}$alkyl, $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkylacrylate; and

I is an integer selected from the range of 1 to 10.

In another embodiment, A is an optionally substituted linear or branched poly(Ci-$C_{10}$alkyleneoxy)$C_1$-$C_{10}$alkylene and the compound including two or more functional groups may be of Formula 4:

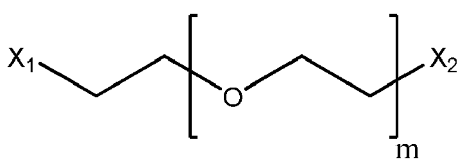

Formula 4

wherein,

$X_1$ and $X_2$ are as herein defined;

m is an integer selected from the range of 1 to 68.

In another embodiment, A is an optionally substituted linear or branched polyether and the compound including two or more functional groups may be of Formula 5:

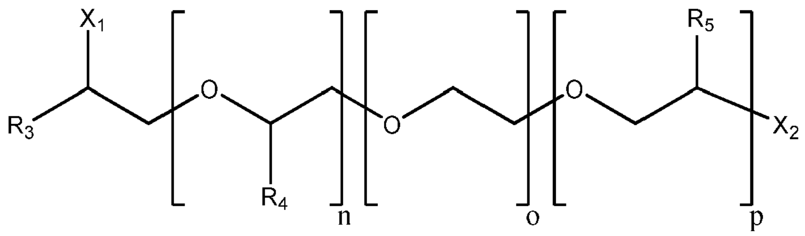

Formula 5

wherein,

$X_1$ and $X_2$ are as herein defined;

$R_3$, $R_4$ and $R_5$ are alkyl groups independently and at each occurrence selected from the group consisting of $C_1$-$C_{10}$alkyl;

n, o and p are selected such that the number average molecular weight of the polyether is from about 220 g/mol to about 2 000 g/mol, limits included;

n and p are selected such that n + p is in the range of from about 1 to about 6; and

o is selected in the range of from about 2 to about 39.

In one embodiment, $R_3$, $R_4$ and $R_5$ are methyl groups.
In another embodiment, $X_1$ and $X_2$ are both amino groups.
In another embodiment, A is an optionally substituted aliphatic polyester such as a polycaprolactone and the compound including two or more functional groups may be of Formula 7:

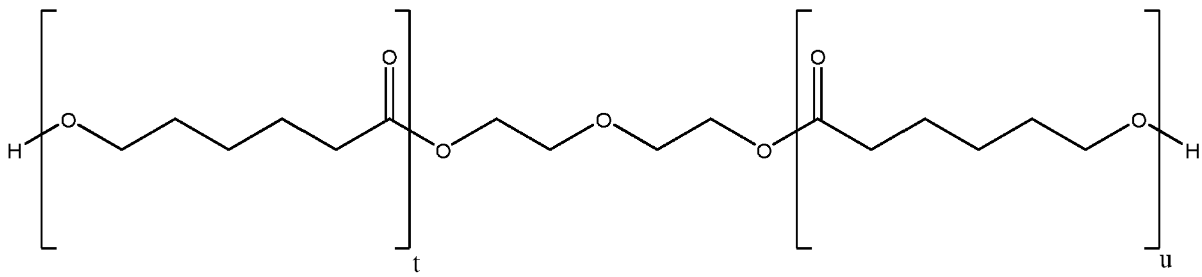

Formula 7

wherein,
t and u are integers selected from the range of 1 to 10.
According to another aspect, the present technology relates to an ionic polymer comprising at least the repeating unit of Formula 8 (a) or being of Formula 8 (b):

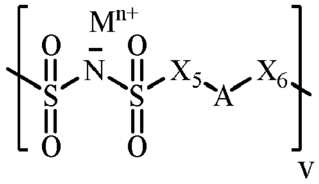
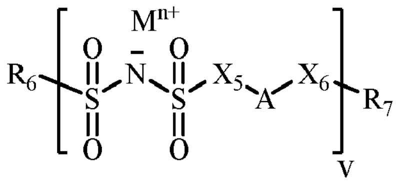

Formula 8 (a) Formula 8 (b)

wherein,

A is an optionally substituted organic group independently and at each occurrence selected from a linear or branched $C_1$-$C_{10}$alkylene, a linear or branched $C_1$-$C_{10}$alkyleneoxy$C_1$-$C_{10}$alkylene, a linear or branched poly($C_1$-$C_{10}$alkyleneoxy)$C_1$-$C_{10}$alkylene, a linear or branched polyether and a linear or branched polyester;

$X_5$ and $X_6$ are each independently selected from the group consisting of an oxygen atom, a sulfur atom and a -NH group;

$R_6$ is selected from a hydroxyl group, a thiol group, an amino group and a $R_7$-$X_5$-$AX_6$- group;

$R_7$ is a crosslinkable group independently and at each occurrence selected from $C_1$-$C_{10}$alkyl-acrylate, $C_1$-$C_{10}$alkyl-methacrylate, carbonylamino-Ci-Cioalkyl-methacrylate and carbonylamino-Ci-Cioalkyl-acrylate;

$M^{n+}$ is an alkali or alkaline earth metal ion selected from the group consisting of $Na^+$, $K^+$, $Li^+$, $Ca^{2+}$ and $Mg^{2+}$ ions; and

v is an integer selected such that the number average molecular weight of the ionic polymer is from about 8 000 g/mol to about 150 000 g/mol, limits included.

According to another aspect, the present technology relates to an ionic polymer comprising at least one repeating unit of Formula 9:

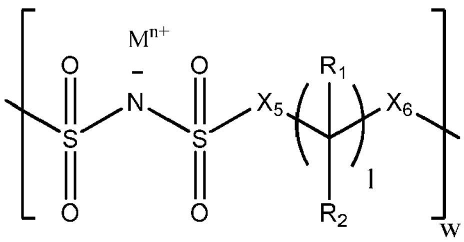

Formula 9

wherein,

$M^{n+}$ is an alkali or alkaline earth metal ion selected from the group consisting of $Na^+$, K+, Li+, $Ca^{2+}$ and $Mg^{2+}$ ions;

$X_5$ and $X_6$ are each independently selected from the group consisting of an oxygen atom, a sulfur atom and a -NH group;

$R_1$ and $R_2$ are independently and at each occurrence selected from a hydrogen atom, a hydroxyl group, a thiol group, an amino group, a halogen atom selected from F, Cl, Br and I, and a linear or branched substituent selected from the group consisting of $C_1$-$C_{10}$alkyl, $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkylacrylate;

l is an integer selected from the range of 1 to 10; and

w is an integer selected such that the number average molecular weight of the ionic polymer is from about 8 000 g/mol to about 150 000 g/mol, limits included.

According to another aspect, the present technology relates to an ionic polymer comprising at least one repeating unit of Formula 10:

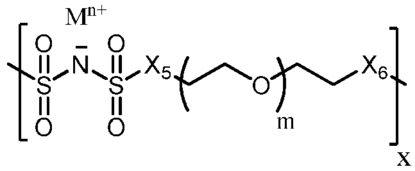

Formula 10

wherein,

$M^{n+}$ is an alkali or alkaline earth metal ion selected from the group consisting of $Na^+$, K+, Li+, $Ca^{2+}$ and $Mg^{2+}$ ions;

$X_5$ and $X_6$ are each independently selected from the group consisting of an oxygen atom, a sulfur atom and a -NH group;

m is an integer selected from the range of 1 to 68; and

x is an integer selected such that the number average molecular weight of the ionic polymer is from about 8 000 g/mol to about 150 000 g/mol, limits included.

According to another aspect, the present technology relates to an ionic polymer comprising at least one repeating unit of Formula 11:

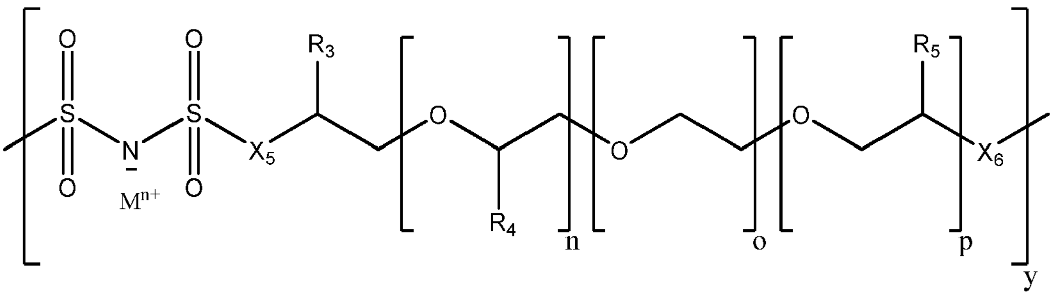

Formula 11

wherein,

$M^{n+}$ is an alkali or alkaline earth metal ion selected from the group consisting of $Na^+$, $K^+$, $Li^+$, $Ca^{2+}$ and $Mg^{2+}$ ions;

$X_5$ and $X_6$ are each independently selected from the group consisting of an oxygen atom, a sulfur atom and a -NH group;

$R_3$, $R_4$ and $R_5$ are alkyl groups independently and at each occurrence selected from the group consisting of $C_1$-$C_{10}$alkyl;

n and p are selected such that n + p is in the range of from about 1 to about 6; and

o is selected in the range of from about 2 to about 39; and

y is an integer selected such that the number average molecular weight of the ionic polymer is from about 8 000 g/mol to about 150 000 g/mol, limits included.

According to another aspect, the present technology relates to an ionic polymer comprising at least one repeating

unit of Formula 12:

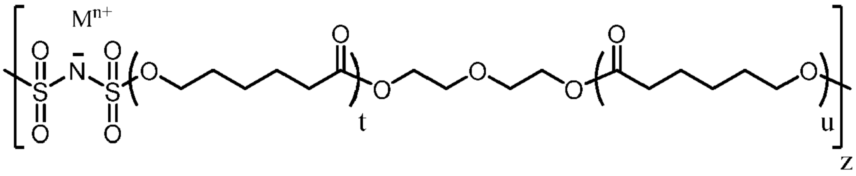

Formula 12

wherein,

$M^{n+}$ is an alkali or alkaline earth metal ion selected from the group consisting of $Na^+$, $K^+$, $Li^+$, $Ca^{2+}$ and $Mg^{2+}$ ions;

t and u are integers selected from the range of 1 to 10; and

z is an integer selected such that the number average molecular weight of the ionic polymer is from about 8 000 g/mol to about 150 000 g/mol, limits included.

According to another aspect, the present technology relates to an ionic polymer of Formula 13:

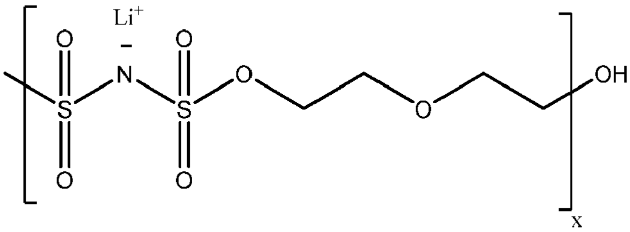

Formula 13

wherein,
x is an integer selected such that the number average molecular weight of the ionic polymer is from about 8 000 g/mol to about 150 000 g/mol, limits included.

According to another aspect, the present technology relates to an ionic polymer of Formula 14:

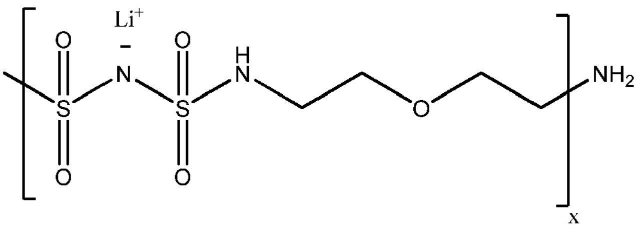

Formula 14

wherein,
x is an integer selected such that the number average molecular weight of the ionic polymer is from about 8 000 g/mol to about 150 000 g/mol, limits included.

According to another aspect, the present technology relates to an ionic polymer of Formula 15:

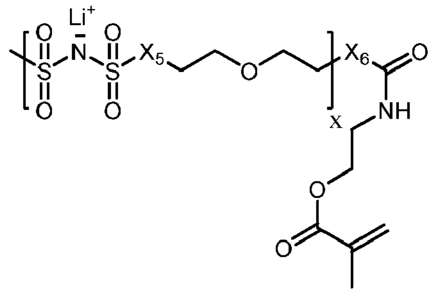

Formula 15

wherein,

$X_5$ and $X_6$ are each independently selected from the group consisting of an oxygen atom, a sulfur atom and a -NH group; and

x is an integer selected such that the number average molecular weight of the ionic polymer is from about 8 000 g/mol to about 150 000 g/mol, limits included.

According to another aspect, the present technology relates to an ionic polymer of Formula 16:

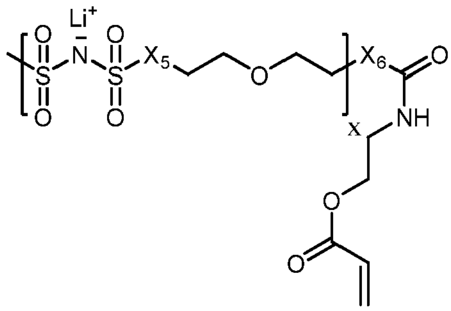

Formula 16

wherein,

$X_5$ and $X_6$ are each independently selected from the group consisting of an oxygen atom, a sulfur atom and a -NH group; and

x is an integer selected such that the number average molecular weight of the ionic polymer is from about 8 000 g/mol to about 150 000 g/mol, limits included.

According to another aspect, the present technology relates to an ionic polymer of Formula 17:

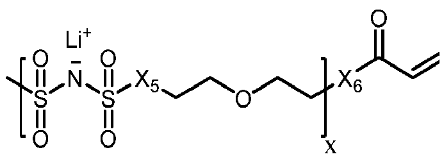

Formula 17

wherein,

$X_5$ and $X_6$ are each independently selected from the group consisting of an oxygen atom, a sulfur atom and a -NH

group; and

x is an integer selected such that the number average molecular weight of the ionic polymer is from about 8 000 g/mol to about 150 000 g/mol, limits included.

According to another aspect, the present technology relates to an ionic polymer of Formula 18:

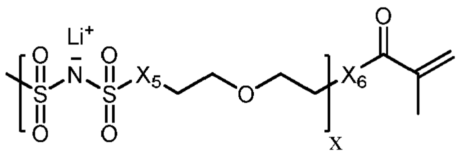

Formula 18

wherein,

$X_5$ and $X_6$ are each independently selected from the group consisting of an oxygen atom, a sulfur atom and a -NH group; and

x is an integer selected such that the number average molecular weight of the ionic polymer is from about 8 000 g/mol to about 150 000 g/mol, limits included.

According to another aspect, the present technology relates to an ionic polymer of Formula 19:

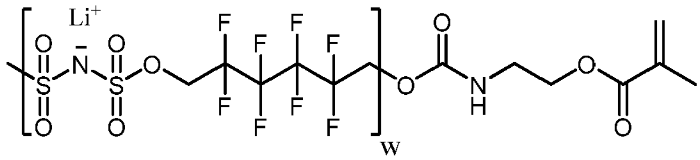

Formula 19

wherein,
w is an integer selected such that the number average molecular weight of the ionic polymer is from about 8 000 g/mol to about 150 000 g/mol, limits included.
According to another aspect, the present technology relates to an ionic polymer of Formula 20:

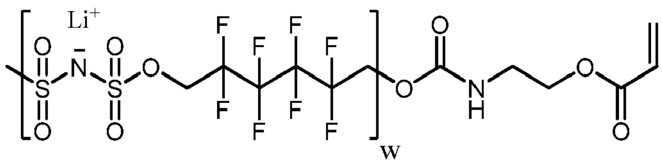

Formula 20

wherein,
w is an integer selected such that the number average molecular weight of the ionic polymer is from about 8 000 g/mol to about 150 000 g/mol, limits included.
According to another aspect, the present technology relates to an ionic polymer of Formula 21:

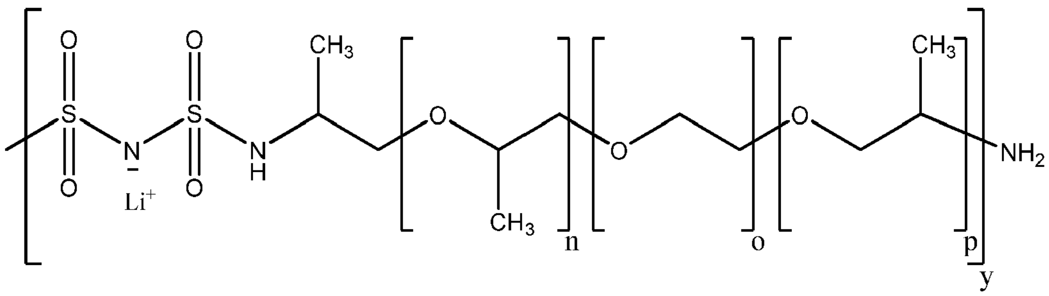

Formula 21

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

According to another aspect, the present technology relates to an ionic polymer of Formula 22:

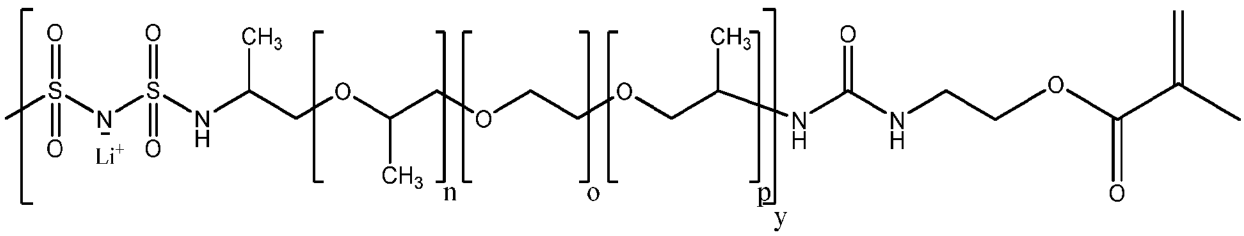

Formula 22

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

According to another aspect, the present technology relates to an ionic polymer of Formula 23:

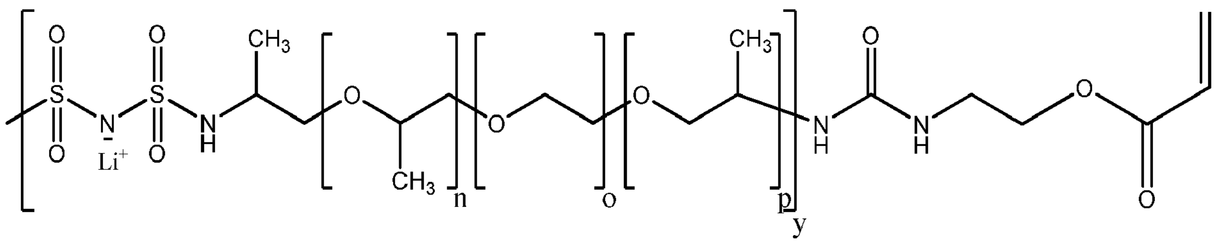

Formula 23

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

According to another aspect, the present technology relates to an ionic polymer of Formula 24:

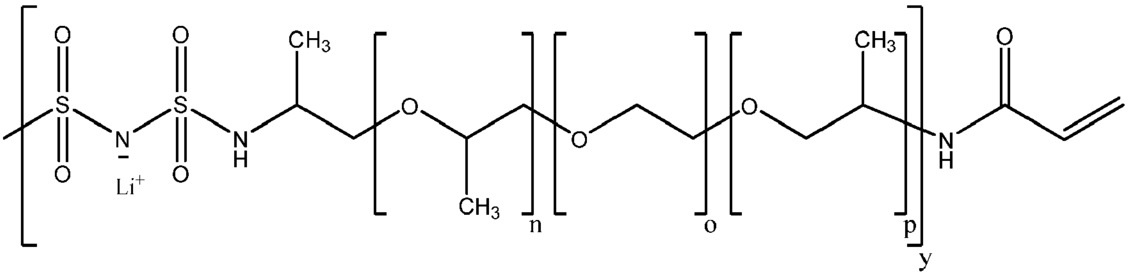

Formula 24

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

According to another aspect, the present technology relates to an ionic polymer of Formula 25:

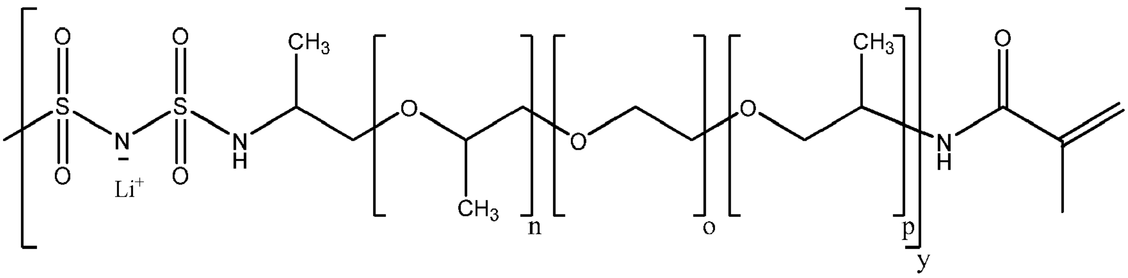

Formula 25

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

According to another aspect, the present technology relates to an ionic polymer of Formula 26:

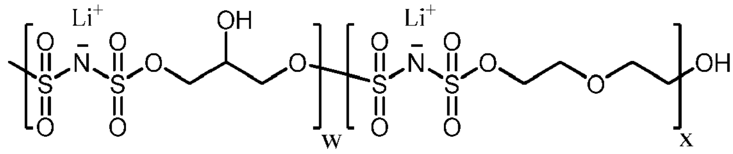

Formula 26

wherein,
w and x are integers selected such that the number average molecular weight of the ionic polymer is from about 8 000 g/mol to about 150 000 g/mol, limits included.

According to another aspect, the present technology relates to an ionic polymer of Formula 27:

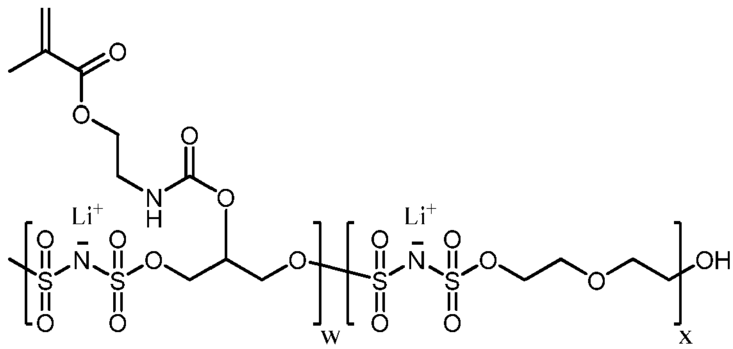

Formula 27

wherein,
w and x are integers selected such that the number average molecular weight of the ionic polymer is from about 8 000 g/mol to about 150 000 g/mol, limits included.

According to another aspect, the present technology relates to an ionic polymer of Formula 28:

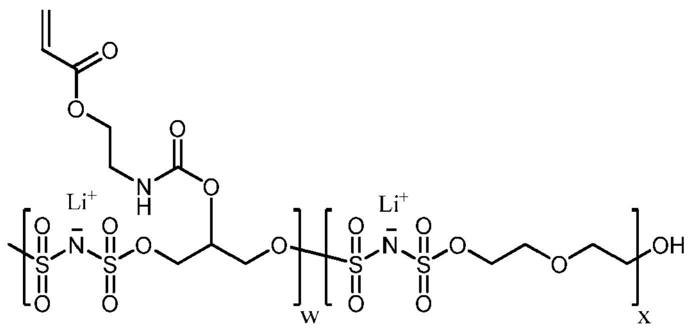

Formula 28

wherein,
w and x are integers selected such that the number average molecular weight of the ionic polymer is from about 8 000 g/mol to about 150 000 g/mol, limits included.

According to another aspect, the present technology relates to a polymer composition comprising at least one ionic polymer as defined herein.

In one embodiment, the polymer composition further comprises at least one additional component or additive. For example, the additional component or additive is selected from the group consisting of ionic conductors, inorganic particles, glass particles, ceramic particles, a combination of at least two thereof and other similar additives. For example, the additional component or additive is a filler selected from the group consisting of titanium dioxide ($TiO_2$), alumina ($Al_2O_3$) and silicon dioxide ($SiO_2$) particles or nanoparticles.

In another embodiment, said polymer composition is used in an electrochemical cell. In another embodiment, said polymer composition is a solid polymer electrolyte composition. In another embodiment, said polymer composition is a binder in an electrode material. In another embodiment, said polymer composition is used in a supercapacitor. For example, the supercapacitor is a carbon-carbon supercapacitor. In another embodiment, said polymer composition is used in an electrochromic material.

According to another aspect, the present technology relates to a solid polymer electrolyte composition comprising a polymer composition as defined herein.

In one embodiment, the solid polymer electrolyte composition further comprises at least one salt. In one example, the salt is an ionic salt selected from the group consisting of a lithium salt, a sodium salt, a potassium salt, a calcium salt and a magnesium salt.

In one embodiment, the solid polymer electrolyte composition further comprises at least one additional component or additive. For example, the additional component or additive is selected from the group consisting of ionically conductive materials, inorganic particles, glass particles, ceramic particles, a combination of at least two thereof and other similar additives.

According to another aspect, the present technology relates to a solid polymer electrolyte comprising a solid polymer electrolyte composition as defined herein.

According to another aspect, the present technology relates to an electrode material comprising an electrochemically active material and a polymer composition as defined herein. In one embodiment, the polymer composition is a binder.

In another embodiment, the electrochemically active material is in the form of particles. In one example, the electrochemically active material is selected from the group consisting of metal oxides, lithium metal oxides, metal phosphates, lithium metal phosphates, titanates and lithium titanates. In another example, the metal of the electrochemically active material is selected from the group consisting of titanium (Ti), iron (Fe), magnesium (Mg), manganese (Mn), vanadium (V), nickel (Ni), cobalt (Co), aluminum (Al) and a combination of at least two thereof.

In another embodiment, the electrode material further comprises at least one electronically conductive material. For example, the electronically conductive material is selected from the group consisting of carbon black, acetylene black, graphite, graphene, carbon fibers, carbon nanofibers, carbon nanotubes and a combination of at least two thereof.

In another embodiment, the electrode material further comprises at least one additional component or additive. In one example, the additional component or additive is selected from the group consisting of ionic conductors, inorganic particles, glass or ceramic particles, nanoceramics, salts and other similar additives. In another example, the additional component or additive is selected from the group consisting of $Al_2O_3$, $TiO_2$ and $SiO_2$.

In another embodiment, the electrode material is a positive electrode material. In another embodiment, the electrode material is a negative electrode material. For example, the electrochemically active material is a lithium titanate or a carbon-coated lithium titanate.

According to another aspect, the present technology relates to an electrode comprising an electrode material as defined herein on a current collector.

According to another aspect, the present technology relates to an electrochemical cell comprising a negative electrode, a positive electrode and an electrolyte, wherein at least one of the negative electrode, the positive electrode and the electrolyte comprises the polymer composition as defined herein.

According to another aspect, the present technology relates to an electrochemical cell comprising a negative electrode, a positive electrode and an electrolyte, wherein at least one of the negative electrode and the positive electrode is as defined herein.

According to another aspect, the present technology relates to an electrochemical cell comprising a negative electrode, a positive electrode and a solid polymer electrolyte as defined herein.

According to another aspect, the present technology relates to an electrochemical accumulator comprising at least one electrochemical cell as defined herein.

In one embodiment, electrochemical accumulator is a battery selected from the group consisting of a lithium battery, a lithium-ion battery, a sodium battery, a sodium-ion battery, a magnesium battery and a magnesium-ion battery. For example, the battery is a lithium or a lithium-ion battery.

According to another aspect, the present technology relates to a process for the preparation of a polymer or polymer composition as defined herein, the process comprising the steps of:

(i) preparation of a metal bis(halosulfonyl)imide; and

(ii) reaction of at least one compound including two or more functional groups as defined herein with said metal bis(halosulfonyl)imide.

In one embodiment, the process further comprises a step of preparing a bis(halosulfonyl)imide. In another

embodiment, the step of preparing a bis(halosulfonyl)imide is carried out by the reaction between sulfamic acid and a halosulfonic acid in the presence of at least one halogenating agent. For example, the halogenating agent is selected from the group consisting of phosphorus trichloride, phosphorus pentachloride, thionyl chloride, thionyl fluoride, phosphoryl chloride and oxalyl chloride. For example, the halogenating agent is thionyl chloride. In another example, the halosulfonic acid is chlorosulfonic acid.

In another embodiment, the step of preparing a bis(halosulfonyl)imide is carried out at a temperature in the range of from about 60 °C to about 150 °C, or from about 70 °C to about 145 °C, or from about 80 °C to about 140 °C, or from about 90 °C to about 100 °C, or from about 110 °C to about 140 °C, or from about 120 °C to about 140 °C, or from about 125 °C to about 140 °C, or from about 125 °C to about 135 °C, limits included.

In another embodiment, the bis(halosulfonyl)imide is a bis(chlorosulfonyl)imide.

In another embodiment, the step of preparing a metal bis(halosulfonyl)imide is carried out by a metalation reaction between a bis(halosulfonyl)imide and at least one metalating agent, in the presence of a solvent.

In one example, the metalating agent comprises an alkali or alkaline earth metal selected from the group consisting of lithium, sodium, potassium, calcium and magnesium. For example, the metalating agent is a lithiating agent selected from the group consisting of lithium hydroxide, lithium carbonate, lithium hydrogen carbonate, lithium hydride, lithium chloride, lithium bromide, lithium iodide, a lithium carboxylate of formula $RCO_2Li$ (wherein R is a linear or branched $C_1$-$C_{10}$alkyl group or an aromatic hydrocarbon), lithium oxalate and metallic lithium. For example, the lithiating agent is lithium chloride (LiCl).

In another embodiment, the solvent is selected from the group consisting of N,N-dimethylformamide, N-methyl-2-pyrrolidone, dimethylacetamide, carbon tetrachloride, chloroform, acetonitrile, tetrahydrofuran and a miscible combination of at least two thereof. For example, the solvent is N,N-dimethylformamide.

In another embodiment, the step of preparing a metal bis(halosulfonyl)imide is carried out at a temperature in the range of from about 20 °C to about 150 °C, or from about 30 °C to about 135 °C, or from about 40 °C to about 130 °C, or from about 50 °C to about 125 °C, or from about 60 °C to about 120 °C, or from about 70 °C to about 115 °C, or from about 80 °C to about 110 °C, or from about 90 °C to about 105 °C, limits included.

In another embodiment, the step of preparing a metal bis(halosulfonyl)imide is carried out for a time period in the range of from about 10 hours to about 48 hours, or from about 10 hours to about 24 hours, or from about 12 hours to about 24 hours, limits included.

In another embodiment, the reaction of at least one compound including two or more functional groups with the metal bis(halosulfonyl)imide is a polymerization reaction. In one example, the polymerization is carried out by polycondensation. In another example, the polymerization is carried out by polyesterification. For example, the polyesterification is carried out by a Fischer esterification reaction or a Steglich esterification reaction.

In another embodiment, the reaction of at least one compound including two or more functional groups with the metal bis(halosulfonyl)imide is carried out in the presence of a solvent. For example, the solvent is selected from the group consisting of N,N-dimethylformamide, N-methyl-2-pyrrolidone, dimethylacetamide, carbon tetrachloride, chloroform, acetonitrile, tetrahydrofuran and or a miscible combination of at least two thereof. For instance, the solvent is N,N-dimethylformamide.

In another embodiment, the polymerization step is carried out in the presence of at least one base and optionally of at least one polymerization catalyst and/or at least one cocatalyst and/or optionally at least one acylation catalyst.

In another embodiment, the polymerization catalyst is selected from the group consisting of an acid catalyst, nucleophilic catalyst and a boron-based catalyst.

In a further embodiment, the nucleophilic catalyst is selected from the group consisting of 4-dimethylaminopyridine, pyridine and other pyridine derivatives.

In yet another embodiment, the boron-based catalyst is a boric acid-based catalyst or a boronic acid-based catalyst. For example, the polymerization catalyst is selected from the group consisting of diarylboronic acids of formula Ar2BOH (wherein Ar is an aryl group), diphenylboronic acid, trifluorophenyl boronic acid, 9H-9-bora-10-thiaanthracene-9-ol, 10H-phenoxaborinin-10-ol, boron tribromide, boron trichloride, acyl fluoroborates, triethyloxonium fluoroborate, boron trifluoride etherate, boron trifluoride, tris(pentafluorophenyl)borane, a combination of at least two thereof when compatible and other similar boron-derived catalysts.

In another embodiment, the base is selected from the group consisting of triethylamine, N,N-diisopropylethylamine, pyridine and pyridine derivatives. For example, the base is triethylamine.

In another embodiment, the process further comprises a post-functionalization or a post-polymerization modification step. For example, the post-functionalization or the post-polymerization modification step is carried out to introduce at least one crosslinkable functional group. For instance, the post-functionalization or the post-polymerization modification step is carried out by a reaction between at least one functional group and at least one crosslinkable functional group. In some embodiments, the crosslinkable functional group is selected from the group consisting of $C_1$-$C_{10}$alkyl-acrylate, $C_1$-$C_{10}$alkylmethacrylate, oxycarbonylamino-$C_1$-$C_{10}$alkyl-methacrylate, oxycarbonylamino-Ci-$C_{10}$alkyl-acrylate, carbonylamino-Ci-Cioalkyl-methacrylate and carbonylamino-Ci-$C_{10}$alkyl-acrylate.

In another embodiment, the process further comprises a separation or purification step. For example, the separation or purification step is carried out by a liquid chromatography method or a filtration method.

In another embodiment, the process further comprises a step of coating the polymer composition. For example, the coating step is carried out by at least one of a doctor blade coating method, a comma coating method, a reverse-comma coating method, a printing method such as gravure coating, or a slot-die coating method.

In another embodiment, the process further comprises a step of drying the polymer composition to remove any residual solvent and/or water. For example, the step of drying the polymer composition and the coating step are performed simultaneously.

In another embodiment, the process further comprises a crosslinking step. For example, the crosslinking step is carried out by UV irradiation, or by heat treatment, or by microwave irradiation, or by using an electron beam, or by gamma irradiation, or by X-ray irradiation. For instance, the crosslinking step is carried out in the presence of at least one of a crosslinking agent, a thermal initiator, a photoinitiator, a catalyst, a plasticizing agent and a combination of at least two thereof.

## BRIEF DESCRIPTION OF THE DRAWINGS

Figure 1 is a size exclusion chromatography (SEC) chromatogram obtained for Polymer 2, as described in Example 3 (b).

Figure 2 is a proton nuclear magnetic resonance ($^1$H NMR) spectrum obtained for Polymer 2, as described in Example 3 (b).

Figure 3 is a graph showing the results of the differential scanning calorimetry (DSC) analysis obtained for Polymer 2, as described in Example 3 (b).

Figure 4 is a size exclusion chromatography chromatogram obtained for Polymer 4, as described in Example 3 (d).

Figure 5 is a proton nuclear magnetic resonance spectrum obtained for a homopolymer obtained by the polymerization of diethylene glycol with lithium bis(chlorosulfonyl)imide, as described in Example 3 (e).

Figure 6 is a proton nuclear magnetic resonance spectrum obtained for Polymer 5, as described in Example 3 (e).

Figure 7 is a carbon-13 nuclear magnetic resonance ($^{13}$C NMR) spectrum obtained for Polymer 5, as described in Example 3 (e).

Figure 8 is a graph showing the results of the differential scanning calorimetry analysis obtained for Polymer 5, as described in Example 3 (e).

Figure 9 is a graph of the ionic conductivity ($S.cm^{-1}$) as a function of temperature (1000/T, $K^{-1}$) for Cell 1, as described in Example 4 (h).

Figure 10 is a graph of the ionic conductivity ($S.cm^{-1}$) as a function of temperature (1000/T, $K^{-1}$) for Cell 2, as described in Example 4 (h).

Figure 11 is a graph of the ionic conductivity ($S.cm^{-1}$) as a function of temperature (1000/T, $K^{-1}$) for Cell 3, as described in Example 4 (h).

Figure 12 is a graph of the ionic conductivity ($S.cm^{-1}$) as a function of temperature (1000/T, $K^{-1}$) for Cell 4, as described in Example 4 (h).

Figure 13 is a graph of the ionic conductivity ($S.cm^{-1}$) as a function of temperature (1 000/T, $K^{-1}$) for Cell 5 (comparative cell), as described in Example 4 (h).

Figure 14 is a graph of the ionic conductivity ($S.cm^{-1}$) as a function of temperature (1 000/T, $K^{-1}$) for Cell 6 (comparative cell), as described in Example 4 (h).

Figure 15 displays cyclic voltammograms obtained for Cell 7 (comparative cell) (solid line) recorded at a scan rate of 0.067 mV/s and for Cell 8 (comparative cell) (dashed line) recorded at a scan rate of 0.05 mV/s between 2.7 V and 4.3 V *vs* Li/Li+, as described in Example 5 (c).

Figure 16 is a cyclic voltammogram obtained for Cell 7 (comparative cell) recorded at a scan rate of 0.067 mV/s between 2.5 V and 5.0 V *vs* Li/Li+, as described in Example 5 (c).

Figure 17 displays cyclic voltammograms obtained for Cell 9 (solid line) and for Cell 10 (dashed line) recorded at a scan rate of 0.067 mV/s between 2.5 V and 5.0 V *vs* Li/Li+, as described in Example 5 (c).

Figure 18 displays cyclic voltammograms obtained for Cell 7 (comparative cell) (dash dot dot line), for Cell 10 (dash dot line), for Cell 9 (dashed line) and for Cell 11 (comparative cell) (solid line) recorded at a scan rate of 0.067 mV/s between 2.5 V and 5.0 V *vs* Li/Li+, as described in Example 5 (c).

## DETAILED DESCRIPTION

The following detailed description and examples are illustrative and should not be interpreted as further limiting the scope of the invention.

All technical and scientific terms and expressions used herein have the same definitions as those commonly understood by the person skilled in the art when relating to the present technology. The definition of some terms and expressions used herein is nevertheless provided below for clarity purposes.

When the term "approximately" or its equivalent term "about" are used herein, it means around or in the region of. When the terms "approximately" or "about" are used in relation to a numerical value, it modifies it; for example, by a variation of 10% above and below its nominal value. This term may also take into account rounding of a number or the probability of random errors in experimental measurements, for instance, due to equipment limitations.

When a range of values is mentioned herein, the lower and upper limits of the range are, unless otherwise indicated, always included in the definition. When a range of values is mentioned in the present application then all intermediate ranges and subranges, as well as individual values included in the ranges, are intended to be included.

For more clarity, the expression "monomeric units derived from" and equivalent expressions, as used herein, refers to polymer repeat units obtained from the polymerization of a polymerizable monomer.

The chemical structures described herein are drawn according to conventional standards. Also, when an atom, such as a carbon atom as drawn, seems to include an incomplete valency, then the valency is assumed to be satisfied by one or more hydrogen atoms even if they are not necessarily explicitly drawn.

As used herein, the term "alkyl" refers to saturated hydrocarbons having from one to ten carbon atoms, including linear or branched alkyl groups. Examples of alkyl groups may include, without limitation, methyl, ethyl, propyl, butyl, pentyl, hexyl, heptyl, octyl, nonyl, decyl, isopropyl, *tert*-butyl, *sec*-butyl, isobutyl, and the like. When the alkyl group is located between two functional groups, then the term alkyl also encompasses alkylene groups such as methylene, ethylene, propylene, and the like. The terms "$C_m$-$C_n$alkyl" and "$C_m$-$C_n$alkylene" respectively refer to an alkyl or alkylene group having from the indicated "m" to the indicated "n" number of carbon atoms.

As used herein, the term "aryl" refers to functional groups including rings having an aromatic character containing 6 to 14 ring atoms, preferably from 6 ring atoms. The term "aryl" applies to both conjugated monocyclic and polycyclic systems. The term "aryl" also applies to both unsubstituted aryl groups and substituted aryl groups. Examples of aryl groups include, without limitation, phenyl, benzyl, phenethyl, 1-phenylethyl, tolyl, naphthyl, biphenyl, terphenyl, indenyl, benzocyclooctenyl, benzocycloheptenyl, azulenyl, acenaphthylenyl, fluorenyl, phenanthrenyl, anthracenyl, and the like.

The present technology relates to an ionic polymer including at least one repeating unit from the reaction product between at least one compound including two or more functional groups of Formula 1 and a metal bis(halosulfonyl)imide of Formula 2:

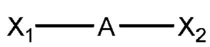

Formula 1

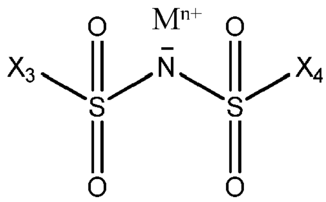

Formula 2

wherein,

A is an optionally substituted organic group selected from a linear or branched $C_1$-$C_{10}$alkylene, a linear or branched $C_1$-$C_{10}$alkyleneoxy$C_1$-$C_{10}$alkylene, a linear or branched poly($C_1$-$C_{10}$alkyleneoxy)$C_1$-$C_{10}$alkylene, a linear or branched polyether and a linear or branched polyester;

$X_1$ and $X_2$ are functional groups independently and at each occurrence selected from the group consisting of a hydroxyl group, a thiol group and an amino group;

$X_3$ and $X_4$ are halogen atoms each independently selected from the group consisting of F, Cl, Br and I; and

$M^{n+}$ is an alkali or alkaline earth metal ion selected from the group consisting of $Na^+$, $K^+$, $Li^+$, $Ca^{2+}$ and $Mg^{2+}$ ions.

According to one example, $X_1$ and $X_2$ may be functional groups independently and at each occurrence selected from the group consisting of a hydroxyl group, a thiol group and a primary amino group. In one variant of interest, $X_1$ and $X_2$ may be functional groups independently and at each occurrence selected from the group consisting of a hydroxyl group and a primary amine group.

According to another example, $X_1$ and $X_2$ may be the same. In one example, $X_1$ and $X_2$ are both hydroxyl groups, or both thiol groups, or both primary amino groups. In one variant of interest, $X_1$ and $X_2$ are both hydroxyl groups. In another variant of interest, $X_1$ and $X_2$ are both primary amino groups.

According to one example, $X_3$ and $X_4$ may be the same, for example, $X_3$ and $X_4$ are both chlorine atoms.

According to another example, $M^{n+}$ may be an alkali metal ion selected from the group consisting of $Na^+$, $K^+$ and $Li^+$ ions, for example, $M^{n+}$ is a $Li^+$ ion.

For example, $X_3$ and $X_4$ are both chlorine atoms and $M^{n+}$ is a $Li^+$ ion, *i.e.* the metal bis(halosulfonyl)imide being lithium bis(chlorosulfonyl)imide.

In a further example, A is an optionally substituted organic group selected from a linear or branched $C_2$-$C_{10}$alkylene, a linear or branched $C_2$-$C_{10}$alkyleneoxy$C_2$-$C_{10}$alkylene, a linear or branched poly($C_2$-$C_{10}$alkyleneoxy)$C_2$-$C_{10}$alkylene, a linear or branched polyether and a linear or branched polyester.

According to another example, A is an optionally substituted linear or branched $C_1$-$C_{10}$alkylene group and the compound including two or more functional groups may be of Formula 3:

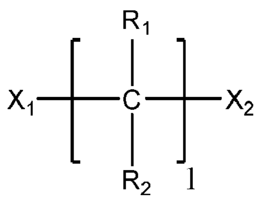

Formula 3

wherein,

$X_1$ and $X_2$ are as herein defined;

$R_1$ and $R_2$ are independently and at each occurrence selected from a hydrogen atom, a hydroxyl group, a thiol group, an amino group, a halogen atom selected from F, Cl, Br and I, and a linear or branched substituent selected from the group consisting of $C_1$-$C_{10}$alkyl, $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkylacrylate; and

l is an integer selected from the range of 1 to 10.

According to another example, $R_1$ and $R_2$ are independently and at each occurrence selected from a hydrogen atom, a hydroxyl group, a thiol group, an amino group, a fluorine atom and a linear or branched substituent selected from the group consisting of $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkyl-acrylate.

According to another example, $R_1$ and $R_2$ are independently and at each occurrence selected from a hydrogen

atom, a hydroxyl group, a thiol group, a primary amino group, a fluorine atom and a linear or branched substituent selected from the group consisting of $C_1$-$C_{10}$alkyl-acrylate, $C_1$-$C_{10}$alkyl-methacrylate, oxycarbonylamino-$C_1$-$C_{10}$alkylmethacrylate and oxycarbonylamino-$C_1$-$C_{10}$alkyl-acrylate.

In one example, l is an integer selected from the range of 2 to 10.

According to another example, A is an optionally substituted linear or branched poly($C_1$-$C_{10}$alkyleneoxy)-$C_1$-$C_{10}$alkylene and the compound including two or more functional groups may be of Formula 4:

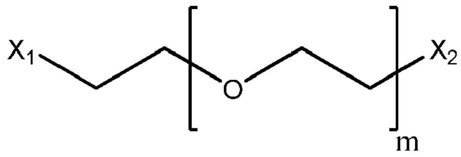

Formula 4

wherein,

$X_1$ and $X_2$ are as herein defined; and

m is selected from the range of 1 to 68.

In one variant of interest, $X_1$ and $X_2$ are both hydroxyl groups or both amino groups and the compound including two or more functional groups is of Formulae 4 (a) or 4 (b):

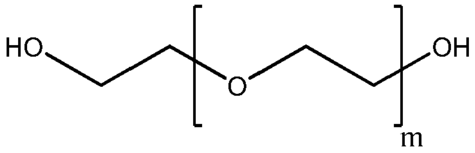

Formula 4 (a)

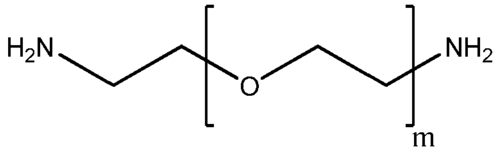

Formula 4 (b)

wherein,
m is selected from the range of 1 to 6.

In another variant of interest, the compound including two or more functional groups of Formula 4 (b) may be a JEFFAMINE® D series product and the compound including two or more functional groups is of Formula 4 (c):

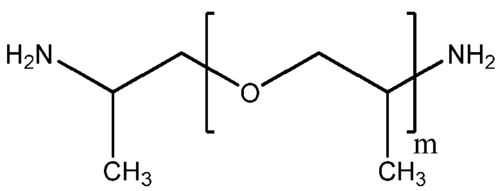

Formula 4 (c)

wherein,
m is selected from the range of 1 to 68.

In one example, the JEFFAMINE® D series product may be JEFFAMINE® D-230, where m is about 2.5 and the number average molecular weight of the polyether diamine is about 230 g/mol.

In another example, the JEFFAMINE® D series product may be JEFFAMINE® D-400, where m is about 6.1 and the number average molecular weight of the polyether diamine is about 430 g/mol.

In another example, the JEFFAMINE® D series product may be JEFFAMINE® D-2000, where m is about 33

and the number average molecular weight of the polyether diamine is about 2 000 g/mol.

In another example, the JEFFAMINE® D series product may be JEFFAMINE® D-4000, where m is about 68 and the number average molecular weight of the polyether diamine is about 4 000 g/mol.

According to another example, A is an optionally substituted polyether. In one example, the optionally substituted polyether may be based on propylene oxide (PO), ethylene oxide (EO) or a mixed PO/EO. For instance, A is an optionally substituted polyether predominantly based on polyethylene glycol (PEG) and the compound including two or more functional groups may be of Formula 5:

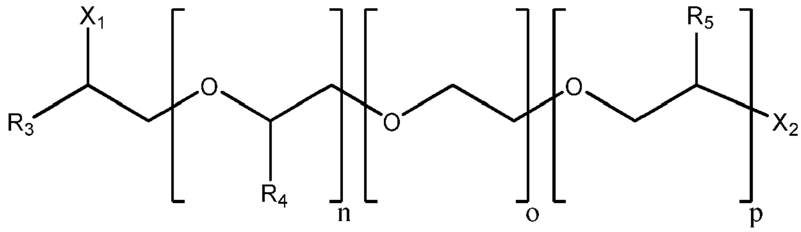

Formula 5

wherein,

$X_1$ and $X_2$ are as herein defined;

$R_3$, $R_4$ and $R_5$ are alkyl groups independently and at each occurrence selected from the group consisting of $C_1$-$C_{10}$alkyl;

n, o and p are selected such that the number average molecular weight of the polyether is from about 220 g/mol to about 2 000 g/mol, limits included;

n and p are selected such that n + p is in the range of from about 1 to about 6; and

o is selected in the range of from about 2 to about 39.

In one variant of interest, the compound including two or more functional groups of Formula 5 may be a JEFFAMINE® ED series product and the compound including two or more functional groups is of Formula 5 (a):

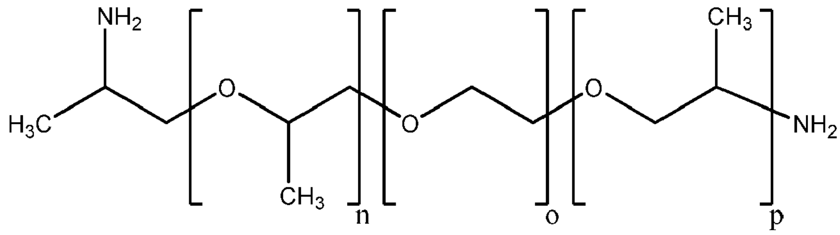

Formula 5 (a)

wherein,

n, o and p are selected such that the number average molecular weight of the polyether is from about 220 g/mol to about 2 000 g/mol, limits included;

n and p are elected such that n + p is in the range of from about 1 to about 6; and

o is selected in the range of from about 2 to about 39.

In one example, the JEFFAMINE® ED series product may be JEFFAMINE® HK-511, where o is about 2, n +

p is about 1.2 and the number average molecular weight of the polyether diamine is about 220 g/mol.

In another example, the JEFFAMINE® ED series product may be JEFFAMINE® ED-2003, where o is about 39, n + p is about 6 and the number average molecular weight of the polyether diamine is about 2 000 g/mol.

In another example, the JEFFAMINE® ED series product may be JEFFAMINE® ED-900, where o is about 12.5, n + p is about 6 and the number average molecular weight of the polyether diamine is about 900 g/mol.

In another alternative, the JEFFAMINE® ED series product may be JEFFAMINE® ED-600, where o is about 9, n + p is about 3.6 and the number average molecular weight of the polyether diamine is about 600 g/mol.

In one variant of interest, the JEFFAMINE® ED series product may be selected from the group consisting of JEFFAMINE® ED-600, ED-900, and ED-2003.

According to another example, A is an optionally substituted linear or branched poly($C_1$-$C_{10}$alkyleneoxy)-$C_1$-$C_{10}$alkylene and the compound including two or more functional groups may be of Formula 6:

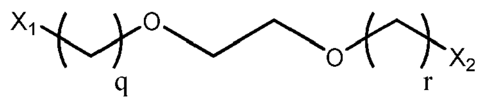

Formula 6

wherein,

$X_1$ and $X_2$ are as herein defined; and

q and r are integers selected from the range of 1 to 10.

In one variant of interest, the compound including two or more functional groups of Formula 6 may be a JEFFAMINE® EDR series product and the compound including two or more functional groups is of Formula 6 (a):

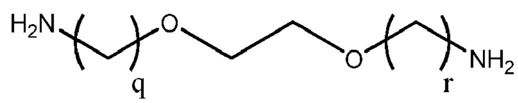

Formula 6 (a)

wherein,
$X_1$, $X_2$, q and r are as herein defined.

In one example, the JEFFAMINE® EDR series product may be JEFFAMINE® EDR-148, where q and r are about 2 and the number average molecular weight of the polyether diamine is about 148 g/mol.

In another example, the JEFFAMINE® EDR series product may be JEFFAMINE® EDR-176, where q and r are about 3 and the number average molecular weight of the polyether diamine is about 176 g/mol.

According to another example, A is an optionally substituted aliphatic polyester such as a polycaprolactone and the compound including two or more functional groups may be of Formula 7:

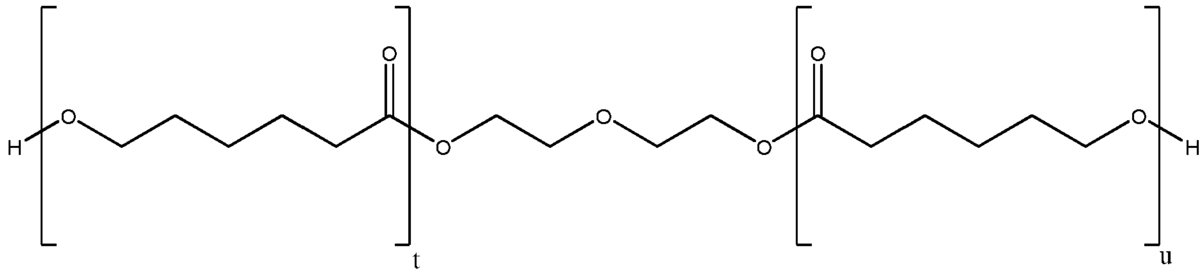

Formula 7

wherein,
t and u are integers selected from the range of 1 to 10.

According to another example, the compound including two or more functional groups may be an alcohol (or a polyalcohol) including two or more hydroxyl groups, a glycol ether, or a polyol such as a diol (or glycol), a triol, a tetraol, a pentol, a hexol, a heptol and the like. For example, the compound including two or more hydroxyl groups may be a linear or branched diol (or glycol) and may be aliphatic or aromatic, for example, all diols (or glycols) are contemplated. Non-limiting examples of compounds including two or more hydroxyl groups include glycerol, alkane diols, 1,3-propanediol, 1,4-butanediol, 1,5-pentanediol, 1,6-hexanediol, 1,8-octanediol, 1,2-propanediol (or propylene glycol), 1,2-butanediol, 2,3-butanediol (or dimethylene glycol), 1,3-butanediol (or butylene glycol), 1,2-pentanediol, etohexadiol, p-menthane-3,8-diol, 2-methyl-2,4-pentanediol, polycaprolactone diol, ethylene glycol (1,2-ethanediol), diethylene glycol (or ethylene diglycol), triethylene glycol, tetraethylene glycol, pentaethylene glycol, polyethylene glycol, combinations thereof and other similar glycols and diols. For example, the compound including two or more hydroxyl groups may be selected from the group consisting of glycerol, diethylene glycol, ethylene glycol, propanediol, triethylene glycol, tetraethylene glycol, 2,2,3,3,4,4,5,5-octafluoro-1,6-hexanediol and polycaprolactone diol.

According to a variant of interest, the compound including two or more hydroxyl groups may be glycerol. According to another variant of interest, the compound including two or more hydroxyl groups may be diethylene glycol. According to another variant of interest, the compound including two or more hydroxyl groups may be 2,2,3,3,4,4,5,5-octafluoro-1,6-hexanediol.

According to another example, the compound including two or more functional groups may be a polyamine including two or more amino groups such as a diamine, a triamine and the like. For example, the compound including two or more amino groups may be a linear or branched diamine and may be aliphatic or aromatic, for example, all diamines are contemplated. Non-limiting examples of compounds including two or more amino groups include propane-1,2,3-triamine, alkane diamines, 1,3-propanediamine, 1,4-butanediamine, 1,5-pentanediamine, 1,6-hexanediamine, 1,8-octanediamine, 1,2-propanediamine, 1,2-butanediamine, 2,3-butanediamine, 1,3-butanediamine, 1,2-pentanediamine, 2,4-diamino-2-methylpentane, ethylenediamine (1,2-diaminoethane), 1,8-diamino-3,6-dioxaoctane, 1,11-diamino-3,6,9-trioxaundecane, 4,9-dioxa-1,12-dodecanediamine, 1,14-diamino-3,6,9,12-tetraoxatetradecane, diaminopolyethylene glycol (or PEG-diamine), JEFFAMINE® D series products (amine-terminated polypropylene glycols), JEFFAMINE® ED series products (diamines based on a predominantly polyethylene glycol backbone), JEFFAMINE® EDR series products, combinations thereof and other similar polyamines.

According to a variant of interest, the compound including two or more amino groups may be a PEG-diamine of formula $H_2NCH_2CH_2(OCH_2CH_2)_nNH_2$, where n is 1 or 2. According to another variant of interest, the compound including two or more amino groups may be a JEFFAMINE® ED series product (or O,O'-bis(2-aminopropyl) polypropylene glycol-block-polyethylene glycol-block-polypropylene glycol). For example, the JEFFAMINE® ED series product may be selected from the group consisting of JEFFAMINE® ED-600, ED-900 and ED-2003.

The present technology also relates to an ionic polymer including at least one repeating unit of Formula 8a and/or is a polymer of Formula 8b:

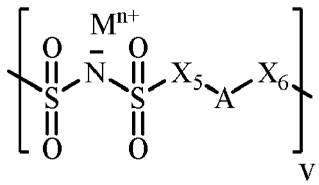

Formula 8 (a)

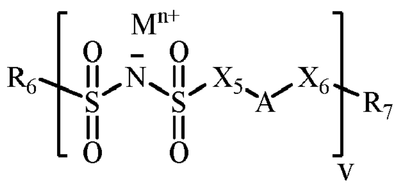

Formula 8 (b)

wherein,

A is an optionally substituted organic group selected from a linear or branched $C_1$-$C_{10}$alkylene, a linear or branched $C_1$-$C_{10}$alkyleneoxy$C_1$-$C_{10}$alkylene, a linear or branched poly($C_1$-$C_{10}$alkyleneoxy)$C_1$-$C_{10}$alkylene, a linear or branched polyether and a linear or branched polyester;

$X_5$ and $X_6$ are each independently selected from the group consisting of an oxygen atom, a sulfur atom and a -NH group;

$R_6$ is selected from the group consisting of a hydroxyl group, a thiol group, an amino group and a $R_7$-$X_5$-A-$X_6$- group;

$R_7$ is a crosslinkable group independently and at each occurrence selected from $C_1$-$C_{10}$alkyl-acrylate, $C_1$-$C_{10}$alkyl-methacrylate, carbonylamino-Ci-Cioalkyl-methacrylate and carbonylamino-Ci-Cioalkyl-acrylate;

$M^{n+}$ is an alkali or alkaline earth metal ion selected from the group consisting of $Na^+$, $K^+$, $Li^+$, $Ca^{2+}$ and $Mg^{2+}$ ions; and

v is an integer selected such that the number average molecular weight of the ionic polymer is from about 8 000 g/mol to about 150 000 g/mol, limits included.

According to one example, $X_5$ and $X_6$ may be the same. For example, $X_5$ and $X_6$ are both oxygen atoms, or both sulfur atoms, or both -NH groups. In one variant of interest, $X_5$ and $X_6$ are both oxygen atoms. In another variant of interest, $X_5$ and $X_6$ are both -NH groups.

In one example, the number average molecular weight of the ionic polymer is from about 8 000 g/mol to about 60 000 g/mol, limits included.

According to another example, the ionic polymer includes at least one repeating unit of Formula 9:

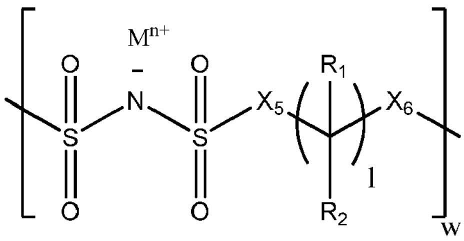

Formula 9

wherein,

$M^{n+}$, $R_1$, $R_2$, l, $X_5$ and $X_6$ are as herein defined; and

w is an integer selected such that the number average molecular weight of the ionic polymer is from about 8 000 g/mol to about 150 000 g/mol, limits included.

In one example, the number average molecular weight of the ionic polymer is from about 8 000 g/mol to about 60 000 g/mol, limits included.

According to another example, the ionic polymer includes at least one repeating unit of Formula 10:

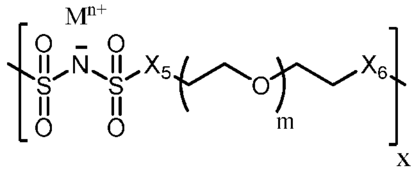

Formula 10

wherein,

$M^{n+}$, m, $X_5$ and $X_6$ are as herein defined; and

x is an integer selected such that the number average molecular weight of the ionic polymer is from about 8 000 g/mol to about 150 000 g/mol, limits included.

In one example, the number average molecular weight of the ionic polymer is from about 8 000 g/mol to about 60 000 g/mol, limits included.

In one variant of interest, $X_5$ and $X_6$ are both oxygen atoms or both -NH groups and the ionic polymer is of Formulae 10 (a) or 10 (b):

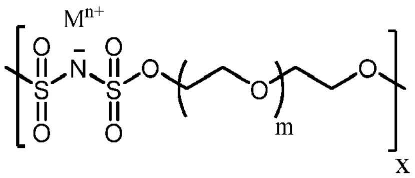

Formula 10 (a)

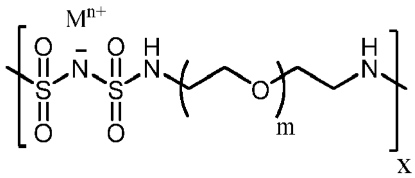

Formula 10 (b)

wherein,

$M^{n+}$, m, and x are as herein defined.

According to another example, the ionic polymer includes at least one repeating unit of Formula 11:

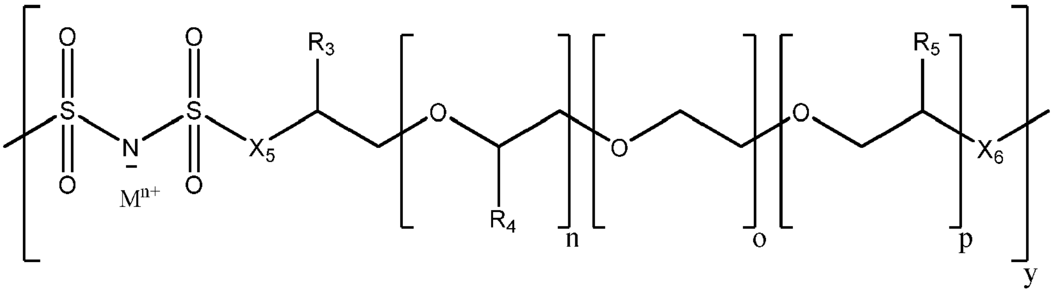

Formula 11

wherein,

$M^{n+}$, $R_3$, $R_4$, $R_5$, n, o, p $X_5$ and $X_6$ are as herein defined; and

y is an integer selected such that the number average molecular weight of the ionic polymer is from about 8 000 g/mol to about 150 000 g/mol, limits included.

In one example, the number average molecular weight of the ionic polymer is from about 8 000 g/mol to about 60 000 g/mol, limits included.

In one variant of interest, $X_5$ and $X_6$ are both -NH groups , $R_3$, $R_4$ and $R_5$ are methyl groups and the ionic polymer is of Formula 11 (a):

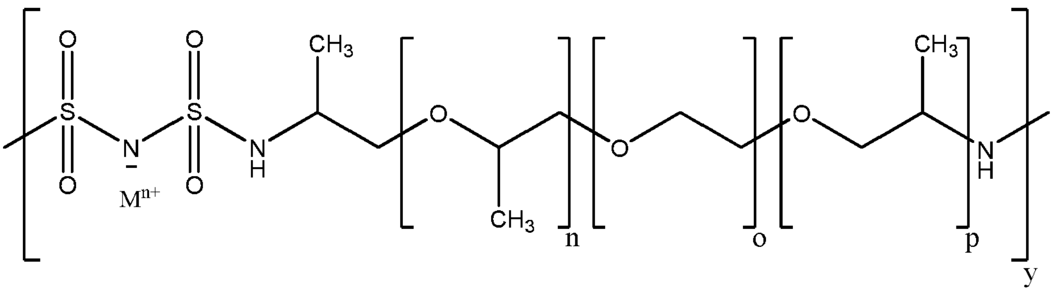

Formula 11 (a)

wherein,

$M^{n+}$, n, o, p and y are as herein defined.

According to another example, the ionic polymer includes at least one repeating unit of Formula 12:

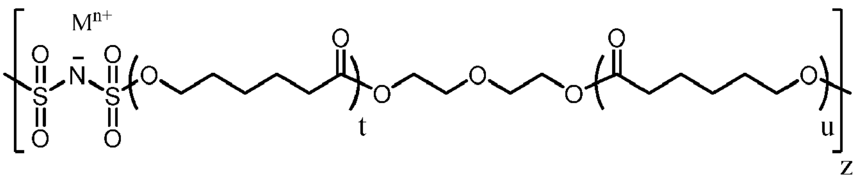

Formula 12

wherein,

$M^{n+}$, t and u are as herein defined; and

z is an integer selected such that the number average molecular weight of the ionic polymer is from about 8 000 g/mol to about 150 000 g/mol, limits included.

In one example, the number average molecular weight of the ionic polymer is from about 8 000 g/mol to about 60 000 g/mol, limits included.

According to another example, the ionic polymer may be an ionic prepolymer. According to another example, the ionic polymer may be an ionic homopolymer or an ionic copolymer.

The present technology also relates to the ionic polymer as herein defined, wherein said ionic polymer is a crosslinked ionic polymer. According to one example, the ionic polymer may further include at least one crosslinkable functional group. According to another example, the crosslinkable functional group may be a terminal functional group and may, for instance, be present on at least one end of the carbon chain backbone of the ionic polymer. According to another example, the crosslinkable functional group may be located on a side chain of the carbon chain backbone of the ionic polymer. According to a further example, the crosslinkable functional group may be present on at least one end of the carbon chain backbone of the ionic polymer and in a side chain thereof. For example, the crosslinkable functional group may be selected from the group consisting of cyanate, acrylate and methacrylate. According to a variant of interest, the crosslinkable functional group may be selected from the group consisting of a $C_1$-$C_{10}$alkyl-acrylate, $C_1$-$C_{10}$alkylmethacrylate, oxycarbonylamino-$C_1$-$C_{10}$alkyl-methacrylate, oxycarbonylamino-$C_1$-$C_{10}$alkyl-acrylate, carbonylamino-Ci-Cioalkyl-methacrylate and carbonylamino-Ci-$C_{10}$alkyl-acrylate.

According to one example of interest, the ionic polymer may be an ionic homopolymer of Formula 13:

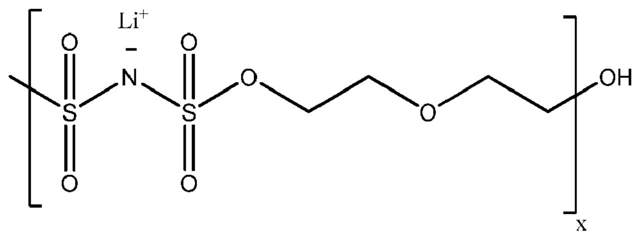

Formula 13

wherein,
x is as herein defined.

According to one example of interest, the ionic polymer may be an ionic homopolymer of Formula 14:

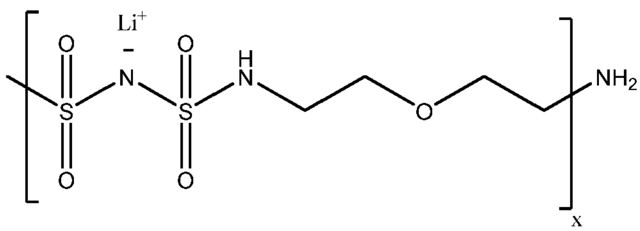

Formula 14

wherein,
x is as herein defined.

According to another example of interest, the ionic polymer may be an ionic homopolymer of Formula 15:

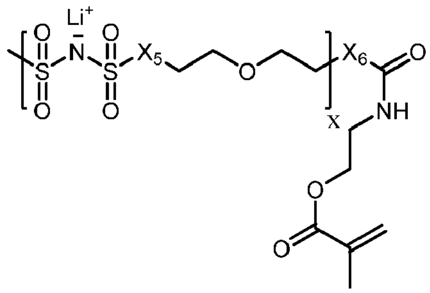

Formula 15

wherein,
$X_5$, $X_6$ and x are as herein defined.

In one example, the ionic polymer may be an ionic homopolymer of Formula 15 (a):

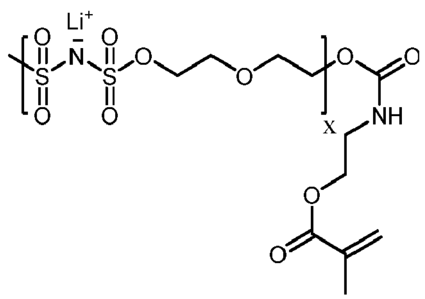

Formula 15 (a)

wherein,
x is as herein defined.

In another example, the ionic polymer may be an ionic homopolymer of Formula 15 (b):

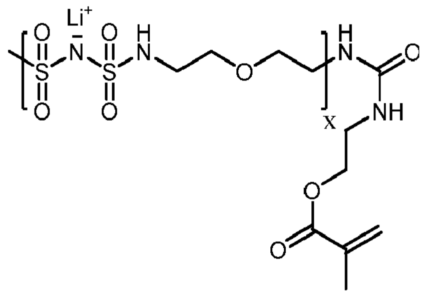

Formula 15 (b)

wherein,
x is as herein defined.

According to another example of interest, the ionic polymer may be an ionic homopolymer of Formula 16:

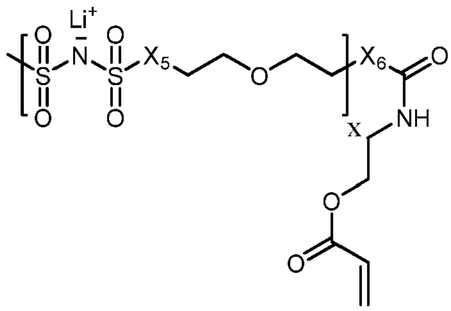

Formula 16

wherein,
x is as herein defined.

In one example, the ionic polymer may be an ionic homopolymer of Formula 16 (a):

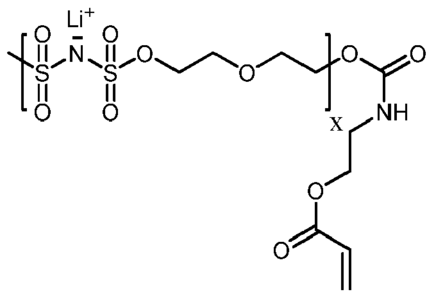

Formula 16 (a)

wherein,
x is as herein defined.

In another example, the ionic polymer may be an ionic homopolymer of Formula 16 (b):

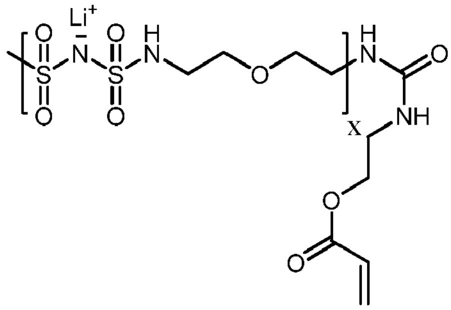

Formula 16 (b)

wherein,
x is as herein defined.

According to another example of interest, the ionic polymer may be an ionic homopolymer of Formula 17:

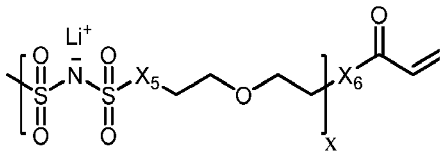

Formula 17

wherein,
$X_5$, $X_6$ and x are as herein defined.

In one example, the ionic polymer may be an ionic homopolymer of Formula 17 (a):

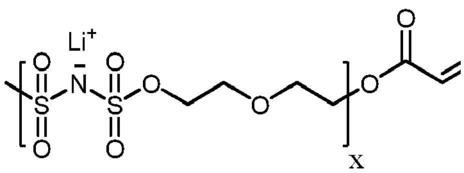

Formula 17 (a)

wherein,
x is as herein defined.

In another example, the ionic polymer may be an ionic homopolymer of Formula 17 (b):

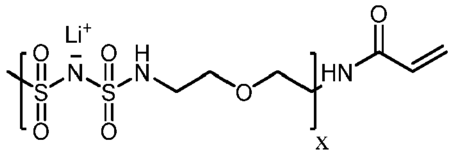

Formula 17 (b)

wherein,
x is as herein defined.

According to another example of interest, the ionic polymer may be an ionic homopolymer of Formula 18:

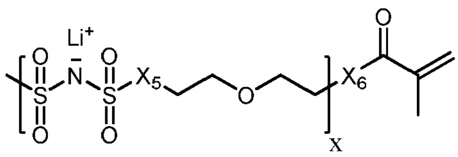

Formula 18

wherein,
$X_5$, $X_6$ and x are as herein defined.

In one example, the ionic polymer may be an ionic homopolymer of Formula 18 (a):

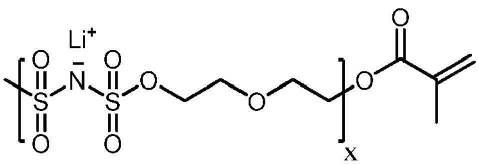

Formula 18 (a)

wherein,
x is as herein defined.

In another example, the ionic polymer may be an ionic homopolymer of Formula 18 (b):

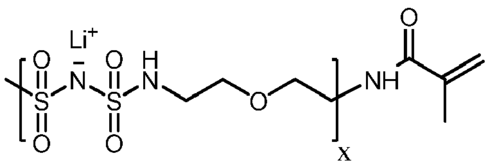

Formula 18 (b)

wherein,
x is as herein defined.

According to another example of interest, the ionic polymer may be an ionic homopolymer of Formula 19:

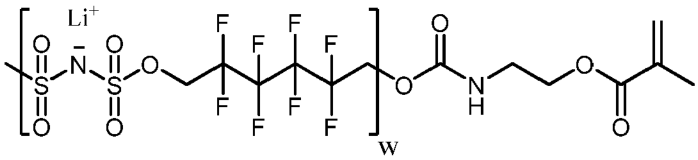

Formula 19

wherein,
w is as herein defined.

According to another example of interest, the ionic polymer may be an ionic homopolymer of Formula 20:

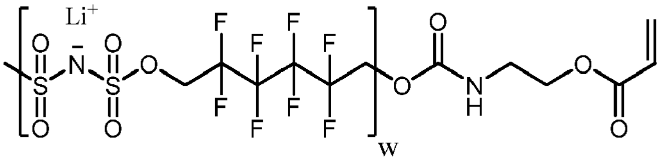

Formula 20

wherein,
w is as herein defined.

According to one example of interest, the ionic polymer may be an ionic homopolymer of Formula 21:

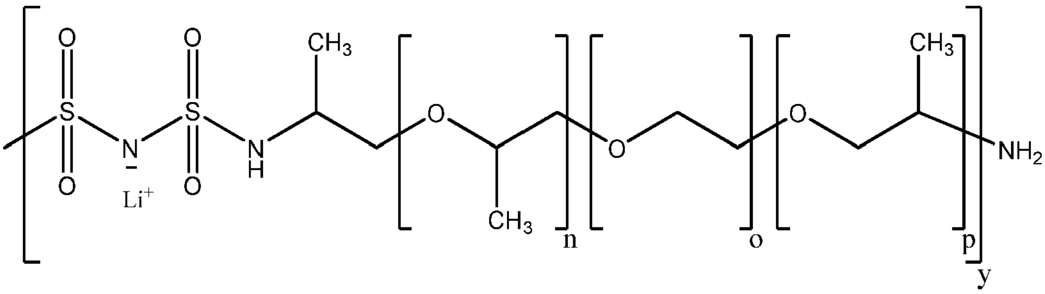

Formula 21

wherein,
n, o, p and y are as herein defined.

According to one example of interest, the ionic polymer may be an ionic homopolymer of Formula 22:

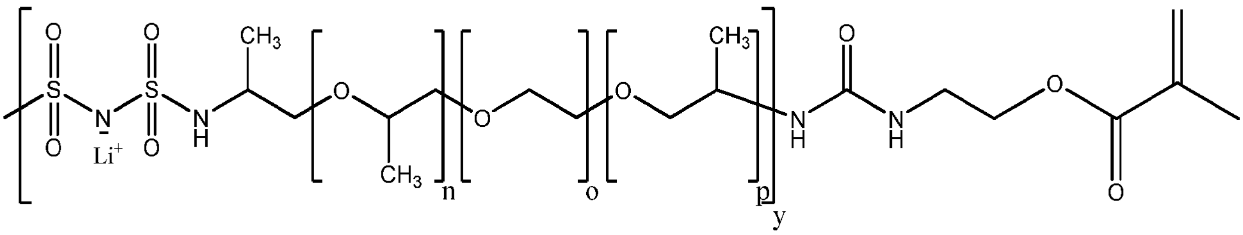

Formula 22

wherein,
n, o, p and y are as herein defined.

According to one example of interest, the ionic polymer may be an ionic homopolymer of Formula 23:

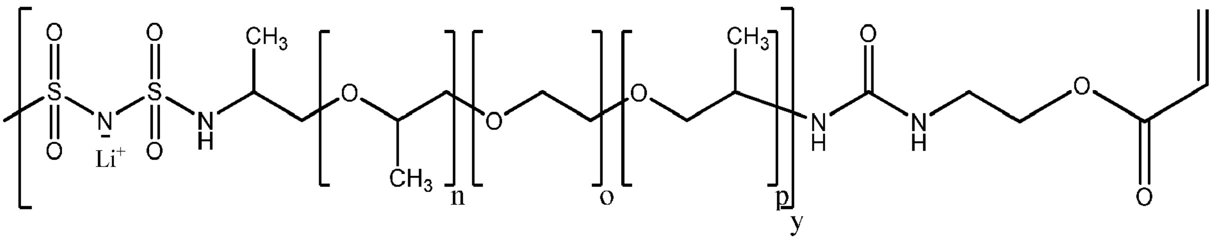

Formula 23

wherein,
n, o, p and y are as herein defined.

According to one example of interest, the ionic polymer may be an ionic homopolymer of Formula 24:

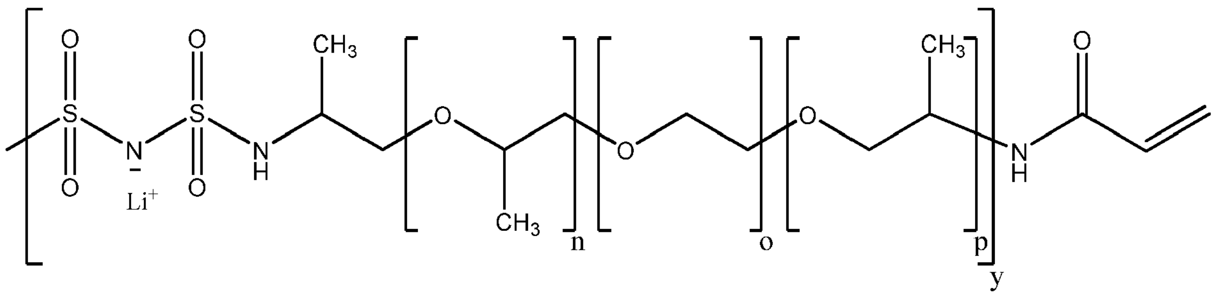

Formula 24

wherein,
n, o, p and y are as herein defined.

According to one example of interest, the ionic polymer may be an ionic homopolymer of Formula 25:

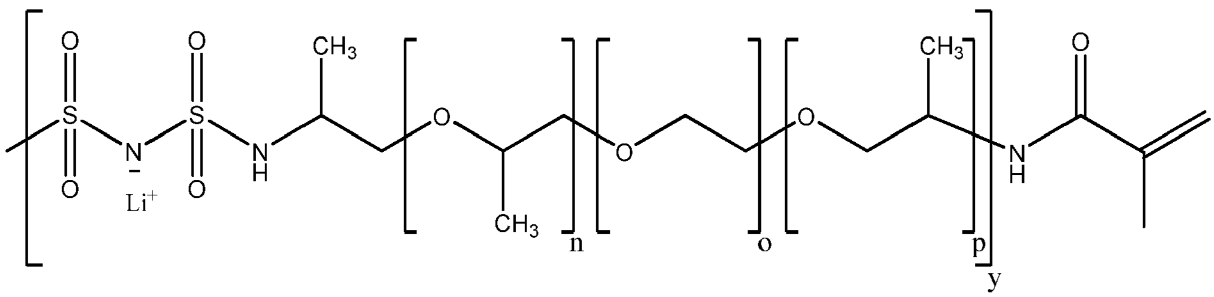

Formula 25

wherein,
n, o, p and y are as herein defined.

According to another example of interest, the ionic polymer may be an ionic copolymer of Formula 26:

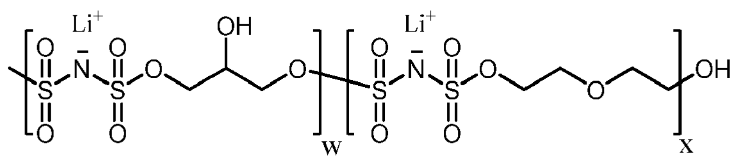

Formula 26

wherein,
w and x are as herein defined.

According to another example of interest, the ionic polymer may be an ionic copolymer of Formula 27:

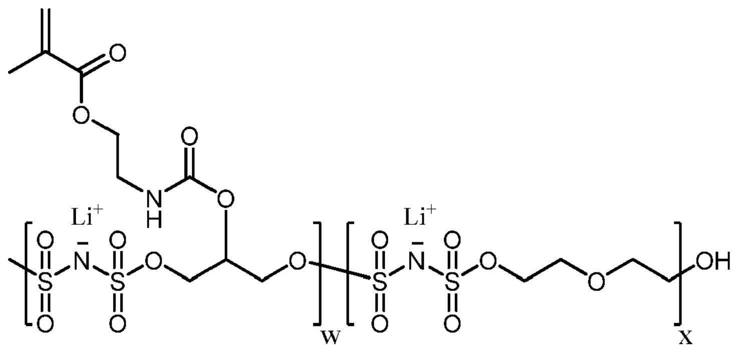

Formula 27

wherein,
w and x are as herein defined.

According to another example of interest, the ionic polymer may be an ionic copolymer of Formula 28:

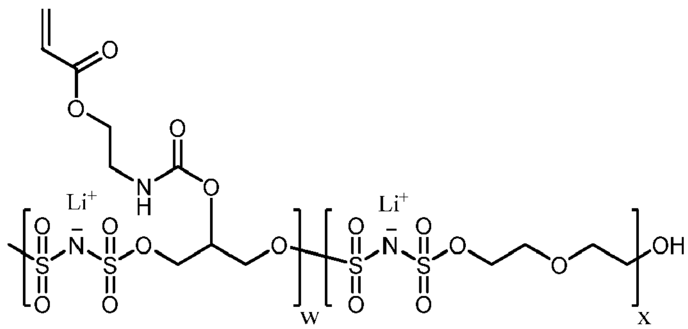

Formula 28

wherein,
w and x are as herein defined.

The present technology also relates to a polymer composition including an ionic polymer as herein defined.

According to one example, the polymer composition or the ionic polymer may further include at least one additional component or additive such as ionic conductors, inorganic particles, glass particles, ceramic particles (for example nanoceramics), their combinations and other similar additives. For example, the additional component or additive may be a filler and may include metal oxide particles or nanoparticles. For example, the filler may include particles or nanoparticles of titanium dioxide ($TiO_2$), alumina ($Al_2O_3$) and/or silicon dioxide ($SiO_2$).

The present technology also relates to a process for the preparation of an ionic polymer or of a polymer composition as herein defined, the process including the steps of:

(i) preparation of a metal bis(halosulfonyl)imide; and

(ii) reaction of at least one compound including two or more functional groups as described above with said metal bis(halosulfonyl)imide.

According to one example, the process further includes a step of preparing a bis(halosulfonyl)imide. For example, the preparation of a bis(halosulfonyl)imide may be carried out by the reaction between sulfamic acid ($H_3NSO_3$) and halosulfonic acid of formula $HSO_3X_3$ (in which $X_3$ is as defined above) in the presence of at least one halogenating agent. For example, the preparation of a bis(halosulfonyl)imide may be carried out by a process as described by Beran *et al.,* and may be as illustrated in Scheme 1 (Beran et al., Zeitschrift für anorganische und allgemeine Chemie 631.1 (2005): 55-59):

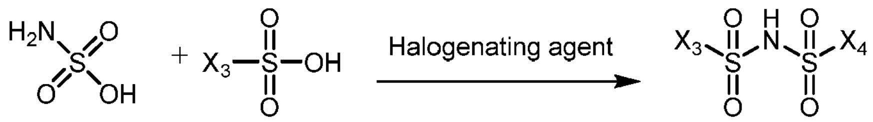


Scheme 1

wherein $X_3$ and $X_4$ are as defined above.

According to a variant of interest, the bis(halosulfonyl)imide is a bis(chlorosulfonyl)imide ($HN(SO_2Cl)_2$).

According to one example, the bis(chlorosulfonyl)imide may be prepared by the reaction between sulfamic acid and chlorosulfonic acid ($HSO_3Cl$) in the presence of at least one halogenating agent.

According to another example, the step of preparing the bis(halosulfonyl)imide may further include a purification step. For example, the purification step may be carried out by all known compatible purification methods. For example, the purification step may be carried out by distillation.

According to another example, the halogenating agent may be selected from all known compatible halogenating agents. For example, the halogenating agent may also serve as a reaction medium and/or solvent and may be selected for its ability to be readily isolated during an optional subsequent purification step. For example, the halogenating agent may be selected from the group consisting of phosphorus trichloride ($PCl_3$), phosphorus pentachloride ($PCl_5$), thionyl chloride ($SOCl_2$), thionyl fluoride ($SOF_2$), phosphoryl chloride ($POCl_3$) and oxalyl chloride ($(COCl)_2$). For example, the halogenating agent is a chlorinating agent. According to a variant of interest, the halogenating agent is thionyl chloride.

Without wishing to be bound by theory, the thionyl chloride may, for example, react with the amino group to form a (-N=S=O) group. For example, the reaction mechanism between sulfamic acid and chlorosulfonic acid in the presence of thionyl chloride can be as illustrated in Scheme 2:

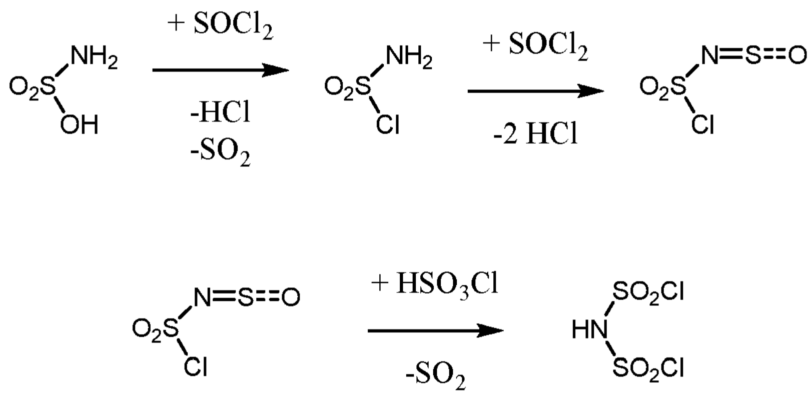


Scheme 2

For example, one equivalent of sulfamic acid reacts with one equivalent of chlorosulfonic acid in the presence of two equivalents of thionyl chloride to form a bis(chlorosulfonyl)imide.

According to another example, the halogenating agent (for example, thionyl chloride) may be added in excess. For example, the amount of halogenating agent may be in the range of from about 2 equivalents to about 5 equivalents per equivalent of sulfamic acid, limits included. For example, the amount of halogenating agents may be in the range of from about 2 equivalents to about 4 equivalents, or from about 2 equivalents to about 3 equivalents, or from about 2 equivalents to about 2.75 equivalents, or from about 2 equivalents to about 2.5 equivalents per equivalent of sulfamic acid, limits included. According to a variant of interest, the amount of halogenating agent is about 2.75 equivalents per equivalent of sulfamic acid.

According to another example, the reaction between the sulfamic acid and the halosulfonic acid in the presence of at least one halogenating agent may be carried out at a sufficiently high temperature and given sufficient time to allow a substantially complete reaction. For example, the reaction between the sulfamic acid and the halosulfonic acid in the presence of at least one halogenating agent may be carried out at a temperature in the range of from about 60 °C to about 150 °C, limits included. For example, the step of preparing the bis(halosulfonyl)imide may be carried out at a temperature in the range of from about 70 °C to about 145 °C, or from about 80 °C to about 140 °C, or from about 90 °C to about 100 °C, or from about 110 °C to about 140 °C, or from about 120 °C to about 140 °C, or from about 125 °C

to about 140 °C, or from about 125 °C to about 135 °C, limits included. According to a variant of interest, the step of preparing the bis(halosulfonyl)imide may be carried out at a temperature of about 130 °C, for example, for a period of about 24 hours.

According to another example, the metal bis(halosulfonyl)imide is prepared by a metalation reaction of a bis(halosulfonyl)imide. For example, the step of preparing a metal bis(halosulfonyl)imide or the metalation step can be carried out by the reaction between a bis(halosulfonyl)imide and at least one metalating agent in the presence of a solvent. For example, the step of preparing a metal bis(halosulfonyl)imide or the metalation step is carried out by a process as illustrated in Scheme 3:

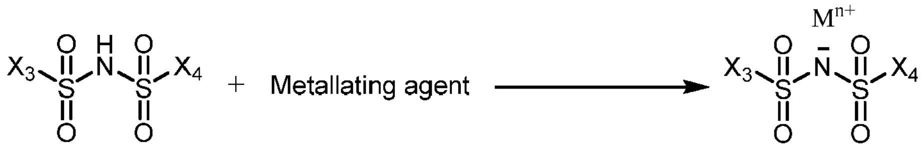


Scheme 3

wherein $X_3$, $X_4$ and $M^{n+}$ are as defined above.

According to another example, the metalating agent may be selected from all known compatible metalating agents. According to a variant of interest, the metal of the metalating agent is an alkali or alkaline earth metal selected from the group consisting of lithium, sodium, potassium, calcium and magnesium. For example, the metal of the metalating agent is an alkali metal selected from the group consisting of lithium, sodium and potassium. According to another variant of interest, the alkali metal is lithium, the metalating agent is a lithiating agent and the metalation step is a lithiation step. For example, the lithiating agent may be selected for its ability to readily deprotonate and lithiate the bis(halosulfonyl)imide, for example, a bis(chlorosulfonyl)imide. According to a variant of interest, the bis(halosulfonyl)imide of lithium may be prepared by a process as described in Paul et al., Journal of Inorganic and Nuclear Chemistry 39.3 (1977): 441-442.

Non-limiting examples of lithiating agents include lithium hydroxide (LiOH), lithium carbonate ($Li_2CO_3$), lithium hydrogen carbonate ($LiHCO_3$), lithium hydride (LiH), metallic lithium, lithium chloride (LiCl), lithium bromide (LiBr), lithium iodide, a lithium carboxylate of formula $RCO_2Li$ (in which R is a linear or branched $C_1$-$C_{10}$alkyl group or an aromatic hydrocarbon) and lithium oxalate ($C_2Li_2O_4$). According to a variant of interest, the lithiating agent is lithium chloride.

According to another example, the solvent used in the step of preparing a metal bis(halosulfonyl)imide or the metalation step may be an organic solvent, for example, a polar aprotic solvent. For example, the solvent can be selected from the group consisting of N,N-dimethylformamide (DMF), N-methyl-2-pyrrolidone (NMP), dimethylacetamide (DMAc), carbon tetrachloride, chloroform, acetonitrile, tetrahydrofuran (THF) and a miscible combination of at least two thereof. According to a variant of interest, the solvent for the metalation reaction is N,N-dimethylformamide. For example, the solvent may also act as an activator for the subsequent polymerization reaction. In one example, the N,N-dimethylformamide may form a complex with the metal bis(halosulfonyl)imide thereby substantially improving the yield of the subsequent reaction of at least one compound including two or more functional groups as described above with the metal bis(halosulfonyl)imide as herein defined. For instance, the complex may be a complex as described in Higashi et al., Journal of Polymer Science: Polymer Chemistry Edition 22, No. 7 (1984): 1653-1660.

According to another example, the metalating agent may be added in a bis(halosulfonyl)imide: metalating agent molar ratio of 1:1. Alternatively, the metalating agent may be added in excess relative to the bis(halosulfonyl)imide. For example, the amount of metalating agents may be in the range of from about 1 equivalent to about 5 equivalents per equivalent of bis(halosulfonyl)imide, limits included. For example, the amount of metalating agents may be in the range of from about 1 equivalent to about 4 equivalents, or from about 1 equivalent to about 3 equivalents, or from about 1 equivalent to about 1.5 equivalent, or from about 1 equivalent to about 1.3 equivalent, or from about 1 equivalent to about 1.2 equivalent per equivalent of bis(halosulfonyl)imide, limits included. According to a variant of interest, the amount of metalation agents may be in the range of from about 1 equivalent to about 1.5 equivalent per equivalent of bis(halosulfonyl)imide.

According to another example, the step of preparing a metal bis(halosulfonyl)imide or the metalation step may be carried out at a temperature in the range of from about 20 °C to about 150 °C, limits included. For example, the step of preparing a metal bis(halosulfonyl)imide or the metalation step may be carried out at a temperature in the range of from about 30 °C to about 135 °C, or from about 40 °C to about 130 °C, or from about 50 °C to about 125 °C, or from about 60 °C to about 120 °C, or from about 70 °C to about 115 °C, or from about 80 °C to about 110 °C, or from about 90 °C to about 105 °C, limits included. According to a variant of interest, the step of preparing a metal bis(halosulfonyl)imide or the metalation step may be carried out at a temperature of about 100 °C.

According to another example, the step of preparing a metal bis(halosulfonyl)imide or the metalation step may be carried out at a sufficiently high temperature and given sufficient time to allow a substantially complete metalation reaction.

For example, the metalation reaction may be carried out for a time period in the range of from about 10 hours to about 48 hours, or from about 10 hours to about 24 hours, or from about 12 hours to about 24 hours, limits included. According to a variant of interest, the metalation reaction may be carried out for a period in the range of from about 12 hours to about 24 hours.

According to another example, the reaction of at least one compound including two or more functional groups as described above with the metal bis(halosulfonyl)imide as herein defined is a polymerization step. For example, any compatible polymerization method is contemplated. According to a variant of interest, the polymerization of the metal bis(halosulfonyl)imide and of the at least one compound including two or more functional groups may be carried out by polycondensation or by polyesterification, for example, by a Fischer esterification reaction (or Fischer-Speier esterification) or by a Steglich esterification reaction. For example, polycondensation may be a thermal polycondensation. In one example of interest, the polycondensation may be carried out by a process as described in Slavko et al., Chemical Science 8.10 (2017): 7106-7111.

According to another example, the reaction of at least one compound including two or more functional groups as described above with the metal bis(halosulfonyl)imide may be carried out in the presence of a solvent, for example, an organic solvent. In one example, the solvent may be selected from the group consisting of N,N-dimethylformamide, N-methyl-2-pyrrolidone, dimethylacetamide, carbon tetrachloride, chloroform, acetonitrile, tetrahydrofuran and or a miscible combination of at least two thereof. According to a variant of interest, the solvent for the polymerization reaction may be N,N-dimethylformamide. For example, the solvent can also act as an activator for the polymerization reaction.

According to another example, the polymerization may optionally be carried out in the presence of at least one polymerization catalyst and optionally of at least one co-catalyst and/or optionally at least one acylation catalyst. According to another example, the polymerization may also be carried out in the presence of a base and without a polymerization catalyst. For example, any type of compatible polymerization catalysts, cocatalysts, acylation catalysts and bases are contemplated. According to one example, the polymerization catalyst may be an acid catalyst (for example, a Lewis acid catalyst). For example, the catalyst may be a boron-based catalyst, a boric acid-based catalyst or a boronic acid-based catalyst as described by Slavko *et al.,* (Slavko et al., Chemical Science 8.10 (2017): 7106-7111). Non-limiting examples of polymerization catalysts include diarylboronic acids of formula $Ar_2BOH$ (wherein Ar is an aryl group), diphenylboronic acid, trifluorophenyl boronic acid, 9H-9-bora-10-thiaanthracene-9-ol, 10H-phenoxaborinin-10-ol, boron tribromide ($BBr_3$), boron trichloride ($BCl_3$), acyl fluoroborates, triethyloxonium fluoroborate, boron trifluoride etherate, boron trifluoride ($BF_3$), tris(pentafluorophenyl)borane, a combination of at least two thereof when compatible and other similar boron-derived catalysts.

According to another example, the polymerization catalyst may be a nucleophilic catalyst. For example, the polymerization may be catalyzed by a base such as pyridine, 4-dimethylaminopyridine (DMAP) and pyridine derivatives.

According to another example, the polymerization may be carried out in the presence of a base such as triethylamine ($Et_3N$), N,N-diisopropylethylamine ($iPr_2NEt$), pyridine and pyridine derivatives. According to a variant of interest, the auxiliary base is triethylamine. For example, the base may be used to deprotonate the catalyst or to regenerate it. The base may also be used to neutralize the acid released during the reaction (for example, hydrochloric acid (HCl)).

According to a variant of interest, the polymerization can be carried out in the presence of triethylamine, diphenylboronic acid or trifluorophenyl boronic acid, N,N-dimethylformamide and 4-dimethylaminopyridine. According to another variant of interest, the polymerization may be carried out in the presence of triethylamine, diphenylboronic acid or trifluorophenyl boronic acid and of N,N-dimethylformamide. Alternatively, the polymerization can be carried out in the presence of N,N-dimethylformamide and optionally a base without the addition of a catalyst, a co-catalyst and/or an acylation catalyst.

According to another example, the polymerization may be carried out by a process as illustrated in Scheme 4:

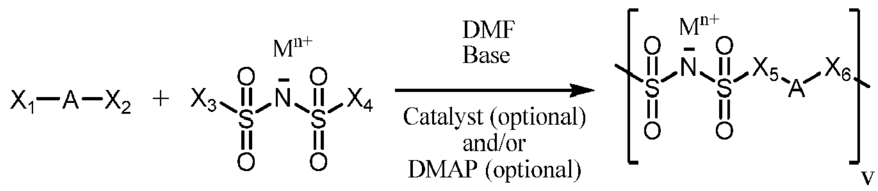


Scheme 4

wherein $X_1$, $X_2$, $X_3$, $X_4$, $X_5$, $X_6$, $M^{n+}$, A and v are as defined above.

According to another example, the process further includes a post-functionalization or a post-polymerization modification step, for example, a post-functionalization of the ionic polymer in view of its crosslinking. For example, the post-functionalization of the ionic polymer may optionally be carried out to functionalize the ionic polymer, for example, by the introduction of at least one functional group as defined above, for example, a crosslinkable functional group. For example, the crosslinkable functional group may be present on at least one end of the carbon chain backbone of the ionic polymer and/or in a side chain thereof. For example, at least one terminal group or a substituent in the carbon chain backbone of the ionic polymer (for example, $R_1$ and $R_2$) includes functionalities allowing the crosslinking of said ionic polymer. For example, the presence of the functional group can modulate the properties of the ionic polymer.

According to another example, the post-functionalization or a post-polymerization modification step may be carried out by the reaction between at least one functional group and at least one crosslinkable functional group. For example, by the reaction between at least one functional group and a crosslinkable functional group selected from the group consisting of $C_1$-$C_{10}$alkyl-acrylate, $C_1$-$C_{10}$alkyl-methacrylate, oxycarbonylamino-$C_1$-$C_{10}$alkyl-methacrylate, oxycarbonylamino-$C_1$-$C_{10}$alkyl-acrylate, carbonylamino-$C_1$-$C_{10}$alkyl-methacrylate and carbonylamino-$C_1$-$C_{10}$alkyl-acrylate.

According to another example, the post-functionalization reaction may be selected from an esterification reaction and an amidation reaction. For example, the post-functionalization reaction may be a Fisher esterification, a Steglich esterification, or a reaction as described in US Patent Number 7,897,674 B2 (Zaghib et al.). According to another example, a carbamate functionalized ionic polymer can be obtained by the reaction of 2-isocyanatoethyl methacrylate with a functional group of the ionic polymer. According to another example, an acrylate functionalized ionic polymer can be obtained by the reaction of an acrylic acid ($CH_2$=CHCOOH), or a methacrylic acid ($CH_2C(CH_3)COOH$), or an acryloyl chloride ($CH_2$=CHCO(Cl)), or a methacryloyl chloride ($CH_2=C(CH_3)CO(Cl)$), or another compatible carboxylic acid derivative with a functional group of the ionic polymer.

According to another example, the process further includes a separation or a purification step. The separation or purification step may be carried out by any known compatible separation or purification method. For example, the separation or purification step may be carried out by a separation method based on the molecular weight. The separation or purification step may be carried out by a liquid chromatography method (for example, steric exclusion chromatography (SEC)) or a filtration method (for example, a membrane filtration or separation method). For example, the separation or purification step is carried out by a membrane filtration method (for example nanofiltration or ultrafiltration). In some embodiments, the separation or purification step may be carried out by ultrafiltration. For example, the ultrafiltration can be carried out with a membrane having a molecular weight cut off (MWCO) limit of 1,000 DA (daltons) (or $1.66 \times 10^{-15}$ $\mu$g). For example, the separation or purification step can be carried out in order to remove low molecular weight impurities (less than 1,000 DA) from the ionic polymer. According to another example, the separation or purification step can be carried out before and/or after the post-functionalization or the post-polymerization modification step.

According to another example, the process further includes substituting at least one halogen atom, for example, a chlorine atom. For example, the substitution step can be carried out by a nucleophilic substitution reaction of halogen atoms with a nucleophilic reagent. For example, the nucleophilic reagent may be a salt, for instance, a lithium salt such as lithium bis(trifluoromethanesulfonyl)imide (LiTFSI). According to a variant of interest, the substitution step may be carried out by the nucleophilic substitution of a chlorine atoms by LiTFSI. According to one example, the ionic polymer is brought into contact so as to react with at least one nucleophilic reagent. For example, the ionic polymer can be contacted with a corresponding ratio of said nucleophilic reagent at a sufficiently high temperature and given enough time to ensure a substantially complete nucleophilic substitution reaction. In some embodiments, the ionic polymer may be contacted with about 10 wt.% of LiTFSI at a temperature of about 40 °C for about 2 hours to ensure a substantially complete nucleophilic substitution reaction. For example, the nucleophilic reagent can subsequently be removed by filtration and precipitation in a suitable solvent, for example a nonpolar solvent such as ethyl acetate.

According to another example, the process further includes coating the polymer composition or of a suspension comprising the ionic polymer as described above. For example, the coating step may be carried out by at least one of a doctor blade coating method, a comma coating method, a reverse-comma coating method, a printing method such as gravure coating, or a slot-die coating method. According to a variant of interest, said coating step is carried out by a doctor blade coating method or a slot-die coating method. According to one example, the polymer composition or the suspension comprising the ionic polymer may be coated on a substrate or support film (for example, a substrate made of silicone, polypropylene or siliconized polypropylene). For example, said substrate or support film may be subsequently removed. According to another example, the polymer composition or the suspension including the ionic polymer may be coated directly on an electrode.

According to another example, the process further includes the polymer composition or the ionic polymer as described above. According to one example, the drying step can be carried out in order to remove any residual solvent. According to another example, the drying step and the coating step may be performed simultaneously and/or separately.

According to another example, the process further includes crosslinking the polymer composition or the ionic polymer as described above. For example, at least one terminal group or a substituent in the carbon chain backbone of

the ionic polymer (for example, $R_1$ and $R_2$) comprises at least one functional group allowing the crosslinking of said ionic polymer. According to another example, the crosslinking step may be carried out by UV irradiation, by heat treatment, by microwave irradiation, electron beam, by gamma irradiation, or by X-ray irradiation. According to a variant of interest, the crosslinking step is carried out by UV irradiation. According to another variant of interest, the crosslinking step is carried out by heat treatment. According to another variant of interest, the crosslinking step is carried out using an electron beam. According to another example, the crosslinking step can be carried out in the presence of a crosslinking agent, a thermal initiator, a photoinitiator, a catalyst, a plasticizing agent or a combination of at least two thereof. For example, the photoinitiator is 2,2-dimethoxy-2-phenylacetophenone (Irgacure™ 651). For example, the polymer composition or the ionic polymer may become solid after crosslinking.

The present technology also relates to the use of a polymer composition or of an ionic polymer as defined above in electrochemical applications.

According to one example, the polymer composition or the ionic polymer may be used in electrochemical cells, batteries, supercapacitors (for example, a carbon-carbon supercapacitor, hybrid supercapacitors, etc.). According to another example, the polymer composition or the ionic polymer may be used in electrochromic materials, electrochromic cells, electrochromic devices (ECD) and electrochromic sensors as described in US Pat. No. 5,356,553.

According to another example, the polymer composition as herein defined can be a solid polymer electrolyte composition. According to another example, the polymer composition as herein defined can be used as a component of an electrode material, for example, as a binder in an electrode material.

The present technology also relates to a solid polymer electrolyte comprising a polymer composition as defined above (*i.e.* comprising an ionic polymer as defined above), where the polymer may be further crosslinked if crosslinkable functional groups are present in the polymer.

According to one example, the solid polymer electrolyte composition or the solid polymer electrolyte as defined above may further comprise at least one salt. For example, the salt may be dissolved in the solid polymer electrolyte composition or in the solid polymer electrolyte.

According to another example, the salt may be an ionic salt such as a lithium salt, a sodium salt, a potassium salt, a calcium salt or a magnesium salt. According to a variant of interest, the ionic salt is a lithium salt. Non-limiting examples of lithium salt include lithium hexafluorophosphate ($LiPF_6$), lithium bis(trifluoromethanesulfonyl)imide (LiTFSI), lithium bis(fluorosulfonyl)imide (LiFSI), lithium 2-trifluoromethyl-4,5-dicyanoimidazolate (LiTDI), lithium 4,5-dicyano-1,2,3-triazolate (LiDCTA), lithium bis(pentafluoroethylsulfonyl)imide (LiBETI), lithium tetrafluoroborate ($LiBF_4$), lithium bis(oxalato)borate (LiBOB), lithium nitrate ($LiNO_3$), lithium chloride (LiCl), lithium bromide (LiBr), lithium fluoride (LiF), lithium perchlorate ($LiClO_4$), lithium hexafluoroarsenate ($LiAsF_6$), lithium trifluoromethanesulfonate ($LiSO_3CF_3$) (LiTf), lithium fluoroalkylphosphate $Li[PF_3(CF_2CF_3)_3]$ (LiFAP), lithium tetrakis(trifluoroacetoxy)borate $Li[B(OCOCF_3)_4]$ (LiTFAB), lithium bis(1,2-benzenediolato(2-)-O,O')borate $[B(C_6O_2)_2]$ (LBBB) and a combination of at least two thereof. According to a variant of interest, the lithium salt may be $LiPF_6$. According to another variant of interest, the lithium salt may be LiFSI. According to another variant of interest, the lithium salt may be LiTFSI. Non-limiting examples of sodium salts include the salts described above where the lithium ion is replaced by a sodium ion. Non-limiting examples of potassium salts include the salts described above where the lithium ion is replaced by a potassium ion.

According to another example, the solid polymer electrolyte composition or the solid polymer electrolyte as defined above may further comprise additional components or additives such as ionically conductive materials, inorganic particles, glass particles, ceramic particles (for example, nanoceramics), a combination of at least two thereof and other similar additives. For example, the additional component or additive may be selected for its high ionic conductivity and may, for example, be added in order to improve the lithium ion conduction. In one variant of interest, the additional component or additive may be selected from the group consisting of NASICON, LISICON, thio-LISICON, garnet, in crystalline and/or amorphous form and a combination of at least two thereof.

According to another example, the solid polymer electrolyte may be in the form of a thin film. For example, the film comprises at least one electrolytic layer including the solid polymer electrolyte. For example, the additional components or additives may be included and/or substantially dispersed in the electrolytic layer or separately in an ion-conductive layer, for example, deposited on the electrolytic layer.

The present technology also relates to an electrode material comprising at least one electrochemically active material and a polymer composition as defined herein (*i.e.* comprising an ionic polymer as defined herein). According to one example, the polymer composition is a binder in an electrode material. In one example, the electrode material is a positive electrode material. In another example, the electrode material is a negative electrode material.

According to one example, the electrochemically active material may be in the form of particles. Non-limiting examples of electrochemically active materials include metal oxides, lithium metal oxides, metal phosphates, lithium metal phosphates, titanates and lithium titanates.

For example, the metal of the electrochemically active material may be selected from the group consisting of titanium (Ti), iron (Fe), magnesium (Mg), manganese (Mn), vanadium (V), nickel (Ni), cobalt (Co), aluminum (Al), chromium (Cr), copper (Cu), antimony (Sb) and a combination of at least two thereof when applicable. In one example of

interest, the metal of the electrochemically active material may be selected from the group consisting of titanium (Ti), iron (Fe), magnesium (Mg), manganese (Mn), vanadium (V), nickel (Ni), cobalt (Co), aluminum (Al) and a combination of at least two thereof when applicable.

Non-limitative examples of electrochemically active materials also include titanates and lithium titanates (for example, $TiO_2$, $Li_2TiO_3$, $Li_4Ti_5O_{12}$, $H_2Ti_5O_{11}$, $H_2Ti_4O_9$, or a combination thereof), metal phosphates and lithium metal phosphates (for example, $LiM'PO_4$ and $M'PO_4$, where M' may be Fe, Ni, Mn, Mg, Co and a combination thereof), vanadium oxides and lithium vanadium oxides (for example, $LiV_3O_8$, $V_2O_5$, $LiV_2O_5$ and the like), and other lithium metal oxides of formulae $LiMn_2O_4$, $LiM''O_2$ (where M" is selected from Mn, Co, Ni and a combination thereof), $Li(NiM''')O_2$ (where M''' is selected from Mn, Co, Al, Fe, Cr, Ti, Zr, another similar metal and a combination thereof) and a combination of at least two thereof when compatible.

According to another example, the electrochemically active material may also be further doped with other elements or impurities, which may be included in smaller amounts, for example, to modulate or optimize its electrochemical properties. For example, the electrochemically active material may be doped by the partial substitution of the metal with other ions. For instance, the electrochemically active material may be doped with a transition metal (for example, Ti, V, Cr, Mn, Fe, Co, Ni, Cu, Zn or Y) and/or a non-transition element (for example, Mg, Al or Sb).

According to another example, the electrochemically active material may be in the form of particles (for example, microparticles and/or nanoparticles) which can be freshly formed or of commercial sources and may further comprise a coating material. The coating material may be an electronically conductive material, for example, the coating may be a carbon coating.

According to another example, the electrode material is a negative electrode material comprising, for example, a carbon-coated lithium titanate (C-LTO) as the electrochemically active material.

According to another example, the electrode material may also optionally comprise additional components or additives such as ionic conductors, inorganic particles, glass or ceramic particles, nanoceramics (for example, $Al_2O_3$, $TiO_2$, $SiO_2$ and other similar compounds), salts (for example, lithium salts) and other similar additives. For example, the additional component or additive may be an ionic conductor selected from the group consisting of NASICON, LISICON, thio-LiSICON, garnets, sulfides, sulfur halides, phosphates and thio-phosphates, of crystalline and/or amorphous form, and a combination of at least two thereof.

According to another example, the electrode material as described herein may further optionally comprise an electronically conductive material. Non-limiting examples of electronically conductive materials include carbon black (*e.g.* Ketjen™ black and Super P™), acetylene black (*e.g.* Shawinigan black and Denka™ black), graphite, graphene, carbon fibers (*e.g.* vapor grown carbon fibers (VGCF)), carbon nanofibers, carbon nanotubes (CNTs) and a combination of at least two thereof.

The present technology also relates to an electrode comprising the electrode material as defined herein applied on a current collector (for example, aluminum or copper).

Alternatively, the electrode may be a self-supported electrode. According to a variant of interest, the electrode as defined herein may be a positive electrode. According to another variant of interest, the electrode as defined herein may be a negative electrode.

The present technology also relates to an electrochemical cell comprising a negative electrode, a positive electrode and an electrolyte, wherein at least one of the negative electrode, the positive electrode and the electrolyte comprises the polymer composition as defined herein.

The present technology also relates to an electrochemical cell comprising a negative electrode, a positive electrode and an electrolyte, wherein at least one of the negative electrode, the positive electrode and the electrolyte is as defined herein. According to a variant of interest, the electrolyte is a solid polymer electrolyte as defined herein. According to another variant of interest, the negative electrode is as defined herein. According to another variant of interest, the positive electrode is as defined herein. According to a variant of interest, the electrolyte is a solid polymer electrolyte as defined herein and the positive electrode is as defined herein.

The present technology further relates to a battery comprising at least one electrochemical cell as defined herein. For example, said battery may be selected from a lithium battery, a lithium-ion battery, a lithium-sulfur battery, a sodium battery, a sodium-ion battery, a magnesium battery and a magnesium ion battery. According to one variant of interest, the battery is a lithium or a lithium-ion battery. For instance, the battery may be an all solid-state battery (e.g., all solid-state lithium battery).

The present application further refers to the following items:

1. An ionic polymer comprising at least one repeating unit which is the reaction product between at least one compound of Formula 1 comprising two or more functional groups and a metal bis(halosulfonyl)imide of Formula 2:

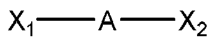

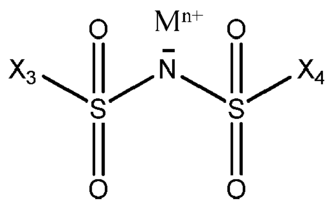

Formula 1 Formula 2

wherein,

A is an optionally substituted organic group selected from a linear or branched $C_1$-$C_{10}$alkylene, a linear or branched $C_1$-$C_{10}$alkyleneoxy$C_1$-$C_{10}$alkylene, a linear or branched poly($C_1$-$C_{10}$alkyleneoxy)$C_1$-$C_{10}$alkylene, a linear or branched polyether and a linear or branched polyester;

$X_1$ and $X_2$ are functional groups independently and at each occurrence selected from the group consisting of a hydroxyl group, a thiol group and an amino group;

$X_3$ and X4 are halogen atoms each independently selected from the group consisting of F, Cl, Br and I; and

$M^{n+}$ is an alkali or alkaline earth metal ion selected from the group consisting of $Na^+$, $K^+$, $Li^+$, $Ca^{2+}$ and $Mg^{2+}$ ions.

2. The ionic polymer of item 1, wherein $X_3$ and $X_4$ are both chlorine atoms.

3. The ionic polymer of item 1 or 2, wherein $M^{n+}$ is an alkali metal ion selected from the group consisting of Na+, $K^+$ and $Li^+$ ions.

4. The ionic polymer of item 3, wherein $M^{n+}$ is $Li^+$.

5. The ionic polymer of any one of items 1 to 4, wherein $X_1$ and $X_2$ are each OH.

6. The ionic polymer of item 5, wherein the compound of Formula 1 is selected from the group consisting of glycerol, alkane diols, 1,3-propanediol, 1,4-butanediol, 1,5-pentanediol, 1,6-hexanediol, 1,8-octanediol, 1,2-propanediol, 1,2-butanediol, 2,3-butanediol, 1,3-butanediol, 1,2-pentanediol, etohexadiol, p-menthane-3,8-diol, 2-methyl-2,4-pentanediol, polycaprolactone diol, ethylene glycol, diethylene glycol, triethylene glycol, tetraethylene glycol, pentaethylene glycol, polyethylene glycol, 2,2,3,3,4,4,5,5-octafluoro-1,6-hexanediol, a combination of at least two thereof and other similar glycols and diols.

7. The ionic polymer of item 6, wherein the compound of Formula 1 is a glycol.

8. The ionic polymer of item 6, wherein the compound of Formula 1 is glycerol.

9. The ionic polymer of any one of items 1 to 4, wherein the compound comprising two or more functional groups is selected from the group consisting of alkane diamines, 1,3-propanediamine, 1,4-butanediamine, 1,5-pentanediamine, 1,6-hexanediamine, 1,8-octanediamine, 1,2-propanediamine, 1,2-butanediamine, 2,3-butanediamine, 1,3-butanediamine, 1,2-pentanediamine, 2,4-diamino-2-methylpentane, ethylenediamine, 1,8-diamino-3,6-dioxaoctane, 1,11 -diamino-3,6,9-trioxaundecane, 4,9-dioxa-1,12-dodecanediamine, 1,14-diamino-3,6,9,12-tetraoxatetradecane, poly(ethylene glycol) diamines, JEFFAMINE® D, ED or EDR series products, a combination of at least two thereof and other similar diamines.

10. The ionic polymer of item 9, wherein the compound comprising two or more functional groups is a JEFFAMINE® ED series product selected from the group consisting of JEFFAMINE® ED-600, ED-900 and ED-2003.

11. The ionic polymer of item 9, wherein the compound comprising two or more functional groups is a poly(ethylene glycol) diamine of formula $H_2NCH_2CH_2(OCH_2CH_2)_nNH_2$, where n is 1 or 2.

12. The ionic polymer of any one of items 1 to 4, wherein A is an optionally substituted linear or branched $C_1$-$C_{10}$alkylene group and the compound comprising two or more hydroxyl groups and is of Formula 3:

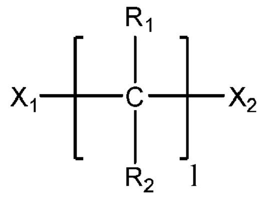

Formula 3

wherein,

$X_1$ and $X_2$ are as defined in item 1;

$R_1$ and $R_2$ are independently and at each occurrence selected from a hydrogen atom, a hydroxyl group, a thiol group, an amino group, a halogen atom selected from F, Cl, Br and I, and a linear or branched substituent selected from the group consisting of $C_1$-$C_{10}$alkyl, $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkylacrylate; and

l is an integer selected from the range of 1 to 10.

13. The ionic polymer of item 12, wherein $X_1$ and $X_2$ are each OH.

14. The ionic polymer of item 12 or 13, wherein $R_1$ and $R_2$ are independently and at each occurrence selected from a hydrogen atom, a hydroxyl group, a thiol group, an amino group, a fluorine atom and a linear or branched substituent selected from the group consisting of $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkyl-acrylate.

15. The ionic polymer of any one of items 1 to 4, wherein A is an optionally substituted linear or branched poly($C_1$-$C_{10}$alkyleneoxy)$C_1$-$C_{10}$alkylene and the compound including two or more functional groups and is of Formula 4:

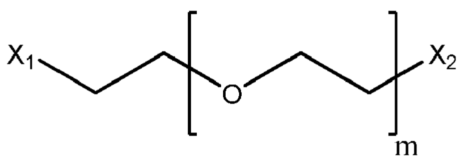

Formula 4

wherein,

$X_1$ and $X_2$ are as defined in item 1; and

m is an integer selected from the range of 1 to 68.

16. The ionic polymer of item 15, wherein $X_1$ and $X_2$ are each OH.

17. The ionic polymer of item 15 or 16, wherein m is an integer selected from the range of 1 to 10.

18. The ionic polymer of any one of items 1 to 4, wherein A is an optionally substituted linear or branched polyether and the compound including two or more functional groups and is of Formula 5:

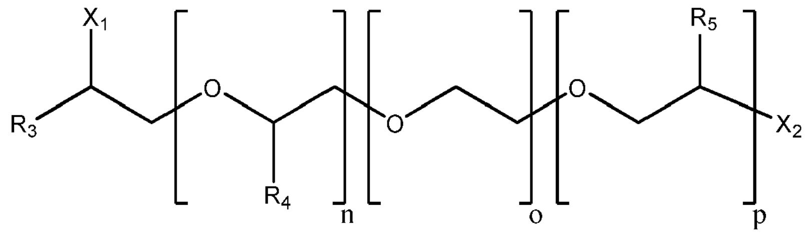

Formula 5

wherein,

$X_1$ and $X_2$ are as defined in item 1;

$R_3$, $R_4$ and $R_5$ are alkyl groups independently and at each occurrence selected from the group consisting of $C_1$-$C_{10}$alkyl;

n, o and p are selected such that the number average molecular weight of the polyether is from about 220 g/mol to about 2 000 g/mol, limits included;

n and p are selected such that n + p is in the range of from about 1 to about 6; and

o is selected in the range of from about 2 to about 39.

19. The ionic polymer of item 18, wherein $R_3$, $R_4$ and $R_5$ are methyl groups.

20. The ionic polymer of item 18 or 19, wherein $X_1$ and $X_2$ are both amino groups.

21. The ionic polymer of any one of items 1 to 4, wherein A is an optionally substituted aliphatic polyester such as a polycaprolactone and the compound including two or more functional groups may be of Formula 7:

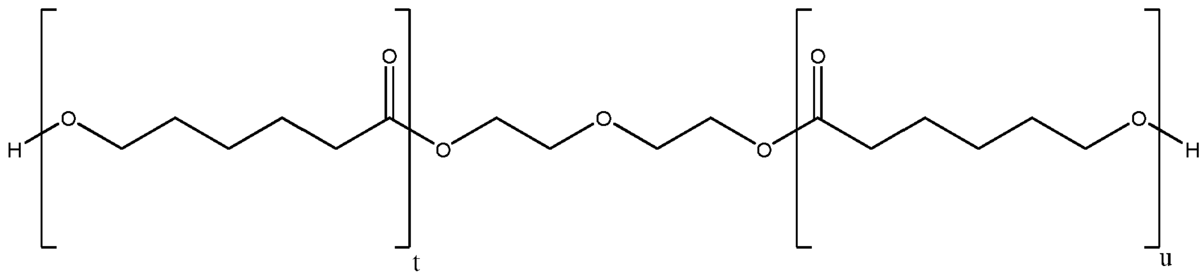

Formula 7

wherein,
t and u are integers selected from the range of 1 to 10.

22. An ionic polymer comprising at least one repeating unit of Formula 8 (a) or a polymer of Formula 8 (b):

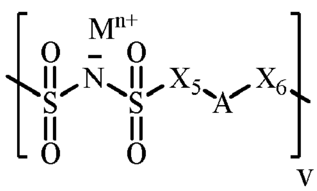

Formula 8 (a)

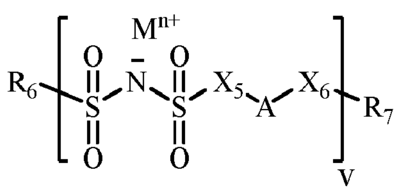

Formula 8 (b)

wherein,

A is an optionally substituted organic group independently and at each occurrence selected from a linear or branched $C_1$-$C_{10}$alkylene, a linear or branched $C_1$-$C_{10}$alkyleneoxy$C_1$-$C_{10}$alkylene, a linear or branched poly($C_1$-$C_{10}$alkyleneoxy)$C_1$-$C_{10}$alkylene, a linear or branched polyether and a linear or branched polyester;

$X_5$ and $X_6$ are each independently selected from the group consisting of an oxygen atom, a sulfur atom and a -NH group;

$R_6$ is selected from a hydroxyl group, a thiol group, an amino group and a $R_7$-$X_5$-$AX_6$- group;

$R_7$ is a crosslinkable group independently and at each occurrence selected from $C_1$-$C_{10}$alkyl-acrylate, $C_1$-$C_{10}$alkyl-methacrylate, carbonylamino-$C_1$-$C_{10}$alkyl-methacrylate and carbonylamino-Ci-Cioalkyl-acrylate;

$M^{n+}$ is an alkali or alkaline earth metal ion selected from the group consisting of $Na^+$, $K^+$, $Li^+$, $Ca^{2+}$ and $Mg^{2+}$ ions; and

v is an integer selected such that the number average molecular weight of the ionic polymer is from about 8 000 g/mol to about 150 000 g/mol, limits included.

23. The ionic polymer of item 22, wherein $M^{n+}$ is an alkali metal ion selected from the group consisting of $Na^+$, $K^+$ and $Li^+$ ions.

24. The ionic polymer of item 22 or 23, wherein $M^{n+}$ is $Li^+$.

25. The ionic polymer of any one of items 22 to 24, wherein $X_5$ and $X_6$ are both oxygen atoms.

26. The ionic polymer of any one of items 22 to 24, wherein $X_5$ and $X_6$ are both sulfur atoms.

27. The ionic polymer of any one of items 22 to 24, wherein $X_5$ and $X_6$ are both -NH groups.

28. The ionic polymer of any one of items 22 to 27, wherein the number average molecular weight of the ionic polymer is from about 8 000 g/mol to about 60 000 g/mol, limits included.

29. An ionic polymer comprising at least one repeating unit of Formula 9:

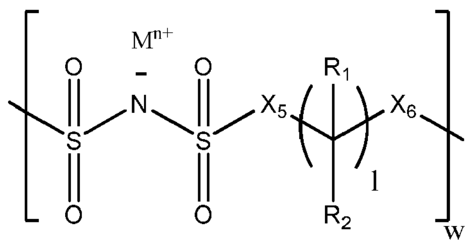

Formula 9

wherein,

$M^{n+}$ is an alkali or alkaline earth metal ion selected from the group consisting of $Na^+$, $K^+$, $Li^+$, $Ca^{2+}$ and $Mg^{2+}$ ions;

$X_5$ and $X_6$ are each independently selected from the group consisting of an oxygen atom, a sulfur atom and a -NH group;

$R_1$ and $R_2$ are independently and at each occurrence selected from a hydrogen atom, a hydroxyl group, a thiol group, an amino group, a halogen atom selected from F, Cl, Br and I, and a linear or branched substituent selected from the group consisting of $C_1$-$C_{10}$alkyl, $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkylacrylate;

l is an integer selected from the range of 1 to 10; and

w is an integer selected such that the number average molecular weight of the ionic polymer is from about 8 000 g/mol to about 150 000 g/mol, limits included.

30. The ionic polymer of item 29, wherein $M^{n+}$ is an alkali metal ion selected from the group consisting of $Na^+$, $K^+$ and $Li^+$ ions.

31. The ionic polymer of item 29 or 30, wherein $M^{n+}$ is $Li^+$.

32. The ionic polymer of any one of items 29 to 31, wherein $R_1$ and $R_2$ are independently and at each occurrence selected from a hydrogen atom, a hydroxyl group, a thiol group, an amino group, a fluorine atom and a linear or branched substituent selected from the group consisting of $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkyl-acrylate.

33. The ionic polymer of any one of items 29 to 32, wherein $X_5$ and $X_6$ are both oxygen atoms.

34. The ionic polymer of any one of items 29 to 32, wherein $X_5$ and $X_6$ are both sulfur atoms.

35. The ionic polymer of any one of items 29 to 32, wherein $X_5$ and $X_6$ are both -NH groups.

36. The ionic polymer of any one of items 29 to 35, wherein the number average molecular weight of the ionic polymer is from about 8 000 g/mol to about 60 000 g/mol, limits included.

37. An ionic polymer comprising at least one repeating unit of Formula 10:

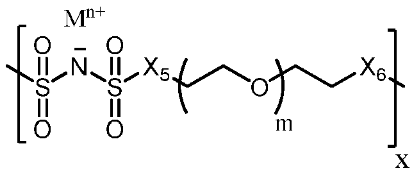

Formula 10

wherein,

$M^{n+}$ is an alkali or alkaline earth metal ion selected from the group consisting of $Na^+$, $K^+$, $Li^+$, $Ca^{2+}$ and $Mg^{2+}$ ions;

$X_5$ and $X_6$ are each independently selected from the group consisting of an oxygen atom, a sulfur atom and a -NH group;

m is an integer selected from the range of 1 to 68; and

x is an integer selected such that the number average molecular weight of the ionic polymer is from about 8 000 g/mol to about 150 000 g/mol, limits included.

38. The ionic polymer of item 37, wherein $M^{n+}$ is an alkali metal ion selected from the group consisting of $Na^+$, $K^+$ and $Li^+$ ions.

39. The ionic polymer of item 37 or 38, wherein $M^{n+}$ is $Li^+$.

40. The ionic polymer of any one of items 37 to 38, wherein $X_5$ and $X_6$ are both oxygen atoms.

41. The ionic polymer of any one of items 37 to 38, wherein $X_5$ and $X_6$ are both sulfur atoms.

42. The ionic polymer of any one of items 37 to 38, wherein $X_5$ and $X_6$ are both -NH groups.

43. The ionic polymer of any one of items 37 to 42, wherein the number average molecular weight of the ionic polymer is from about 8 000 g/mol to about 60 000 g/mol, limits included.

44. An ionic polymer comprising at least one repeating unit of Formula 11:

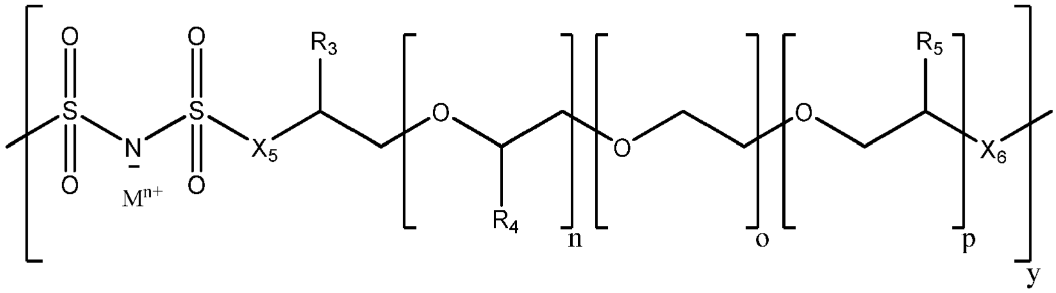

Formula 11

wherein,

$M^{n+}$ is an alkali or alkaline earth metal ion selected from the group consisting of $Na^+$, $K^+$, $Li^+$, $Ca^{2+}$ and $Mg^{2+}$ ions;

$X_5$ and $X_6$ are each independently selected from the group consisting of an oxygen atom, a sulfur atom and a -NH group;

$R_3$, $R_4$ and $R_5$ are alkyl groups independently and at each occurrence selected from the group consisting of $C_1$-$C_{10}$alkyl;

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

45. The ionic polymer of item 44, wherein $M^{n+}$ is an alkali metal ion selected from the group consisting of $Na^+$, $K^+$ and $Li^+$ ions.

46. The ionic polymer of item 44 or 45, wherein $M^{n+}$ is $Li^+$.

47. The ionic polymer of any one of items 44 to 46, wherein $R_3$, $R_4$ and $R_5$ are methyl groups.

48. The ionic polymer of any one of items 44 to 47, wherein $X_5$ and $X_6$ are both oxygen atoms.

49. The ionic polymer of any one of items 44 to 47, wherein $X_5$ and $X_6$ are both sulfur atoms.

50. The ionic polymer of any one of items 44 to 47, wherein $X_5$ and $X_6$ are both -NH groups.

51. The ionic polymer of any one of items 44 to 50, wherein the number average molecular weight of the ionic polymer is from about 8 000 g/mol to about 60 000 g/mol, limits included.

52. An ionic polymer comprising at least one repeating unit of Formula 12:

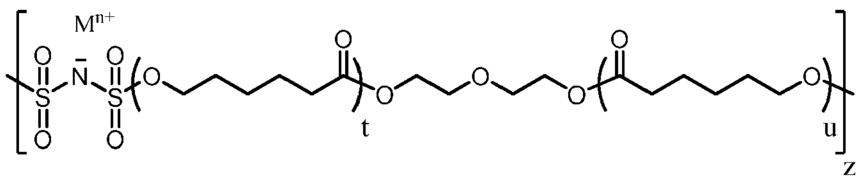

Formula 12

wherein,

$M^{n+}$ is an alkali or alkaline earth metal ion selected from the group consisting of $Na^+$, $K^+$, $Li^+$, $Ca^{2+}$ and $Mg^{2+}$ ions;

t and u are integers selected from the range of 1 to 10; and

z is an integer selected such that the number average molecular weight of the ionic polymer is from about 8 000 g/mol to about 150 000 g/mol, limits included.

53. The ionic polymer of item 52, wherein $M^{n+}$ is an alkali metal ion selected from the group consisting of $Na^+$, $K^+$ and $Li^+$ ions.

54. The ionic polymer of item 53, wherein $M^{n+}$ is $Li^+$.

55. The ionic polymer of any one of items 52 to 54, wherein the number average molecular weight of the ionic polymer is from about 8 000 g/mol to about 60 000 g/mol, limits included.

56. An ionic polymer of Formula 13:

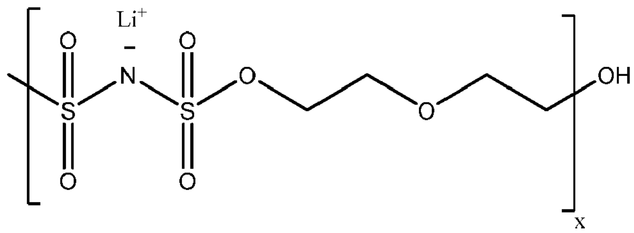

Formula 13

wherein,
x is an integer selected such that the number average molecular weight of the ionic polymer is from about 8 000 g/mol to about 150 000 g/mol, limits included.

57. The ionic polymer of item 56, wherein the number average molecular weight of the ionic polymer is from about 8 000 g/mol to about 60 000 g/mol, limits included.

58. An ionic polymer of Formula 14:

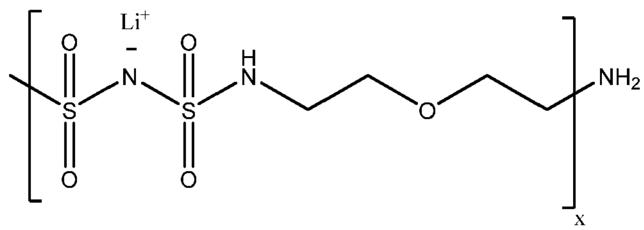

Formula 14

wherein,
x is an integer selected such that the number average molecular weight of the ionic polymer is from about 8 000 g/mol to about 150 000 g/mol, limits included.

59. The ionic polymer of item 58, wherein the number average molecular weight of the ionic polymer is from about 8 000 g/mol to about 60 000 g/mol, limits included.

60. An ionic polymer of Formula 15:

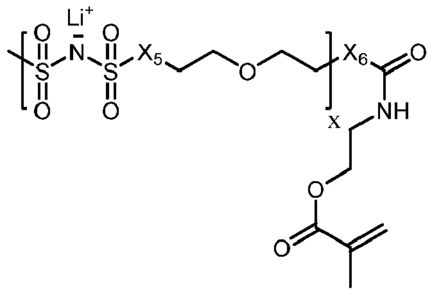

Formula 15

wherein,

$X_5$ and $X_6$ are each independently selected from the group consisting of an oxygen atom, a sulfur atom and a -NH group; and

x is an integer selected such that the number average molecular weight of the ionic polymer is from about 8 000 g/mol to about 150 000 g/mol, limits included.

61. The ionic polymer of item 60, wherein $X_5$ and $X_6$ are both oxygen atoms.

62. The ionic polymer of item 60, wherein $X_5$ and $X_6$ are both sulfur atoms.

63. The ionic polymer of item 60, wherein $X_5$ and $X_6$ are both -NH groups.

64. The ionic polymer of any one of items 60 to 63, wherein the number average molecular weight of the ionic polymer is from about 8 000 g/mol to about 60 000 g/mol, limits included.

65. An ionic polymer of Formula 16:

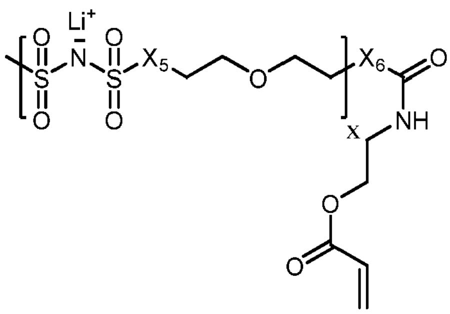

Formula 16

wherein,

$X_5$ and $X_6$ are each independently selected from the group consisting of an oxygen atom, a sulfur atom and a -NH group; and

x is an integer selected such that the number average molecular weight of the ionic polymer is from about 8 000 g/mol to about 150 000 g/mol, limits included.

66. The ionic polymer of item 65, wherein $X_5$ and $X_6$ are both oxygen atoms.

67. The ionic polymer of item 65, wherein $X_5$ and $X_6$ are both sulfur atoms.

68. The ionic polymer of item 65, wherein $X_5$ and $X_6$ are both -NH groups.

69. The ionic polymer of any one of items 65 to 68, wherein the number average molecular weight of the ionic polymer is from about 8 000 g/mol to about 60 000 g/mol, limits included.

70. An ionic polymer of Formula 17:

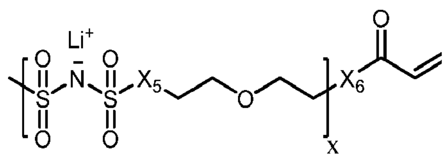

Formula 17

wherein,

$X_5$ and $X_6$ are each independently selected from the group consisting of an oxygen atom, a sulfur atom and a -NH group; and

x is an integer selected such that the number average molecular weight of the ionic polymer is from about 8 000 g/mol to about 150 000 g/mol, limits included.

71. The ionic polymer of item 70, wherein $X_5$ and $X_6$ are both oxygen atoms.

72. The ionic polymer of item 70, wherein $X_5$ and $X_6$ are both sulfur atoms.

73. The ionic polymer of item 70, wherein $X_5$ and $X_6$ are both -NH groups.

74. The ionic polymer of any one of items 70 to 73, wherein the number average molecular weight of the ionic polymer is from about 8 000 g/mol to about 60 000 g/mol, limits included.

75. An ionic polymer of Formula 18:

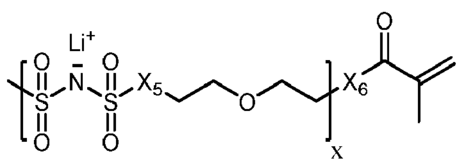

Formula 18

wherein,

$X_5$ and $X_6$ are each independently selected from the group consisting of an oxygen atom, a sulfur atom and a -NH group; and

x is an integer selected such that the number average molecular weight of the ionic polymer is from about 8 000 g/mol to about 150 000 g/mol, limits included.

76. The ionic polymer of item 75, wherein $X_5$ and $X_6$ are both oxygen atoms.

77. The ionic polymer of item 75, wherein $X_5$ and $X_6$ are both sulfur atoms.

78. The ionic polymer of item 75, wherein $X_5$ and $X_6$ are both -NH groups.

79. The ionic polymer of any one of items 75 to 78, wherein the number average molecular weight of the ionic polymer is from about 8 000 g/mol to about 60 000 g/mol, limits included.

80. An ionic polymer of Formula 19:

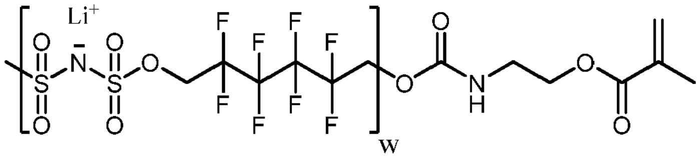

Formula 19

wherein,
w is an integer selected such that the number average molecular weight of the ionic polymer is from about 8 000 g/mol to about 150 000 g/mol, limits included.

81. The ionic polymer of item 80, wherein the number average molecular weight of the ionic polymer is from about 8 000 g/mol to about 60 000 g/mol, limits included.

82. An ionic polymer of Formula 20:

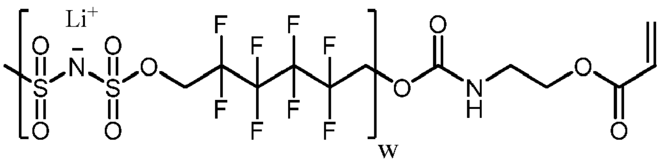

Formula 20

wherein,
w is an integer selected such that the number average molecular weight of the ionic polymer is from about 8 000 g/mol to about 150 000 g/mol, limits included.

83. The ionic polymer of item 82, wherein the number average molecular weight of the ionic polymer is from about 8 000 g/mol to about 60 000 g/mol, limits included.

84. An ionic polymer of Formula 21:

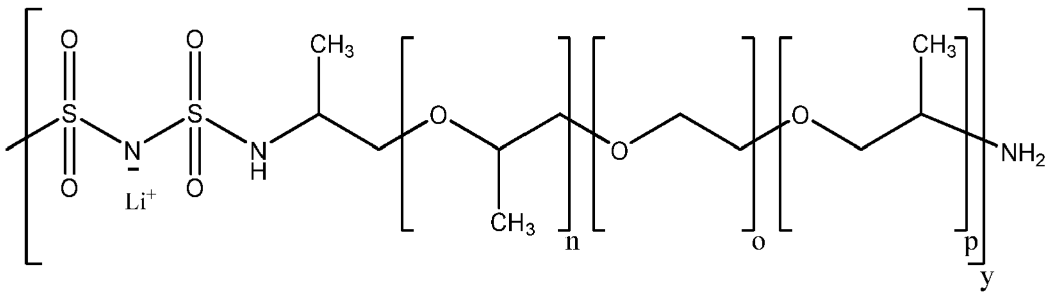

Formula 21

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

85. The ionic polymer of item 84, wherein the number average molecular weight of the ionic polymer is from about 8 000 g/mol to about 60 000 g/mol, limits included.

86. An ionic polymer of Formula 22:

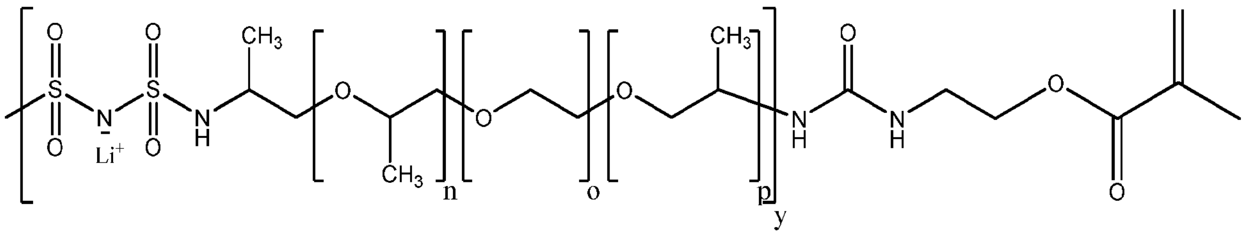

Formula 22

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

87. The ionic polymer of item 86, wherein the number average molecular weight of the ionic polymer is from about 8 000 g/mol to about 60 000 g/mol, limits included.

88. An ionic polymer of Formula 23:

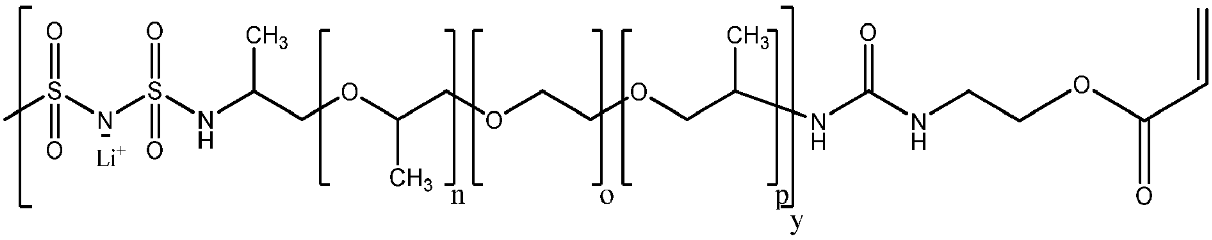

Formula 23

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

89. The ionic polymer of item 88, wherein the number average molecular weight of the ionic polymer is from about 8 000 g/mol to about 60 000 g/mol, limits included.

90. An ionic polymer of Formula 24:

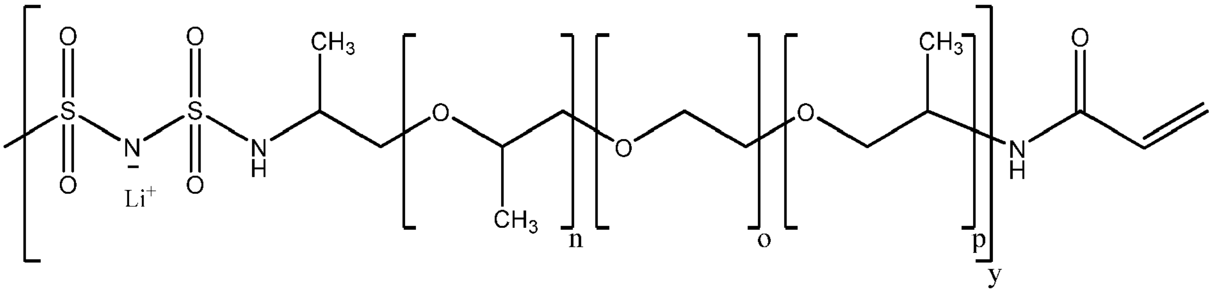

Formula 24

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

91. The ionic polymer of item 90, wherein the number average molecular weight of the ionic polymer is from about 8 000 g/mol to about 60 000 g/mol, limits included.

92. An ionic polymer of Formula 25:

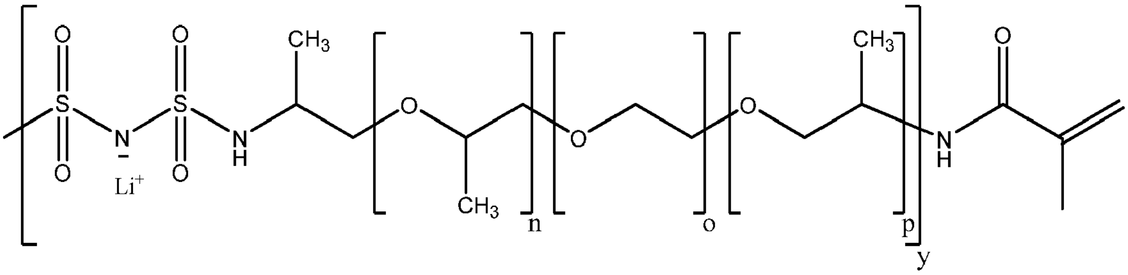

Formula 25

wherein,

n and p are selected such that n + p is in the range of from about 1 to about 6;

o is selected in the range of from about 2 to about 39; and

y is an integer selected such that the number average molecular weight of the ionic polymer is from about 8 000 g/mol to about 150 000 g/mol, limits included.

93. The ionic polymer of item 92, wherein the number average molecular weight of the ionic polymer is from about 8 000 g/mol to about 60 000 g/mol, limits included.

94. An ionic polymer of Formula 26:

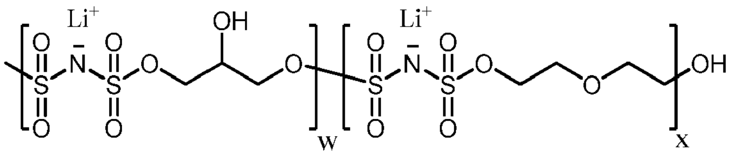

Formula 26

wherein,
w and x are integers selected such that the number average molecular weight of the ionic polymer is from about 8 000 g/mol to about 150 000 g/mol, limits included.

95. The ionic polymer of item 94, wherein the number average molecular weight of the ionic polymer is from about 8 000 g/mol to about 60 000 g/mol, limits included.

96. An ionic polymer of Formula 27:

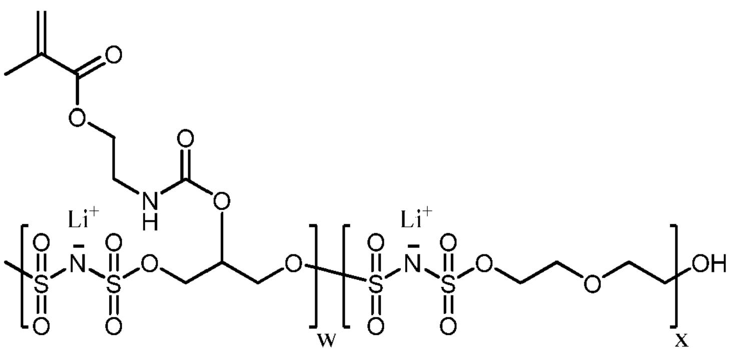

Formula 27

wherein,
w and x are integers selected such that the number average molecular weight of the ionic polymer is from about 8 000 g/mol to about 150 000 g/mol, limits included.

97. The ionic polymer of item 96, wherein the number average molecular weight of the ionic polymer is from about 8 000 g/mol to about 60 000 g/mol, limits included.

98. An ionic polymer of Formula 28:

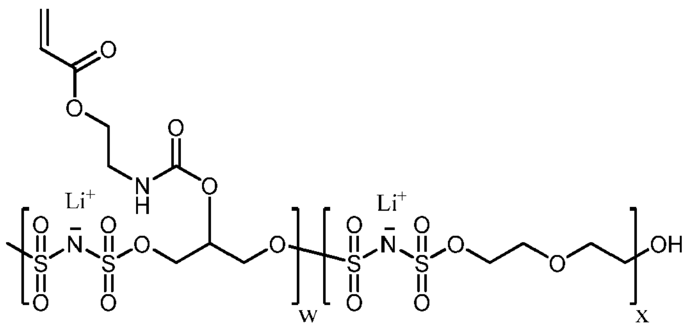

Formula 28

wherein,
w and x are integers selected such that the number average molecular weight of the ionic polymer is from about 8 000 g/mol to about 150 000 g/mol, limits included.

99. The ionic polymer of item 98, wherein the number average molecular weight of the ionic polymer is from about 8 000 g/mol to about 60 000 g/mol, limits included.

100. A polymer composition comprising at least one ionic polymer as defined in any one of items 1 to 99.

101. The polymer composition of item 100, said polymer composition further comprising at least one additional component or additive.

102. The polymer composition of item 101, wherein the additional component or additive is selected from the group consisting of ionic conductors, inorganic particles, glass particles, ceramic particles, a combination of at least two thereof and other similar additives.

103. The polymer composition of item 101 or 102, wherein the additional component or additive is a filler.

104. The polymer composition of item 103, wherein the filler is selected from the group consisting of titanium dioxide ($TiO_2$), alumina ($Al_2O_3$) and silicon dioxide ($SiO_2$) particles or nanoparticles.

105. The polymer composition of any one of items 100 to 104, wherein said polymer composition is a solid polymer electrolyte composition.

106. The polymer composition of any one of items 100 to 104, wherein said polymer composition is a binder in an electrode material.

107. The polymer composition of any one of items 100 to 104, wherein said polymer composition is used in an electrochemical cell.

108. The polymer composition of any one of items 100 to 104, wherein said polymer composition is used in a supercapacitor.

109. The polymer composition of item 108, wherein the supercapacitor is a carbon-carbon supercapacitor.

110. The polymer composition of any one of items 100 to 104, wherein said polymer composition is used in an electrochromic material.

111. A solid polymer electrolyte composition comprising a polymer composition as defined in any one of items 100 to 104.

112. The solid polymer electrolyte composition of item 111, said solid polymer electrolyte composition further comprising at least one salt.

113. The solid polymer electrolyte composition of item 112, wherein the salt is an ionic salt.

114. The solid polymer electrolyte composition of item 113, wherein the ionic salt is selected from the group consisting of a lithium salt, a sodium salt, a potassium salt, a calcium salt and a magnesium salt.

115. The solid polymer electrolyte composition of item 114, wherein the ionic salt is a lithium salt.

116. The solid polymer electrolyte composition of item 115, wherein the lithium salt is selected from the group consisting of lithium hexafluorophosphate ($LiPF_6$), lithium bis(trifluoromethanesulfonyl)imide (LiTFSI), lithium bis(fluorosulfonyl)imide (LiFSI), lithium 2-trifluoromethyl-4,5-dicyanoimidazolate (LiTDI), lithium 4,5-dicyano-1,2,3-triazolate (LiDCTA), lithium bis(pentafluoroethylsulfonyl)imide (LiBETI), lithium tetrafluoroborate ($LiBF_4$), lithium bis(oxalato)borate (LiBOB), lithium nitrate ($LiNO_3$), lithium chloride (LiCl), lithium bromide (LiBr), lithium fluoride (LiF), lithium perchlorate ($LiClO_4$), lithium hexafluoroarsenate ($LiAsF_6$), lithium trifluoromethanesulfonate ($LiSO_3CF_3$) (LiTf), lithium fluoroalkylphosphate $Li[PF_3(CF_2CF_3)_3]$ (LiFAP), lithium tetrakis(trifluoroacetoxy)borate $Li[B(OCOCF_3)_4]$ (LiTFAB), lithium bis(1,2-benzenediolato(2-)-O,O')borate $Li[B(C_6O_2)_2]$ (LBBB) and a combination of at least two thereof.

117. The solid polymer electrolyte composition of any one of items 111 to 116, said solid polymer electrolyte composition further comprising at least one additional component or additive.

118. The solid polymer electrolyte composition of item 117, wherein the additional component or additive is selected from the group consisting of ionically conductive materials, inorganic particles, glass particles, ceramic particles, a combination of at least two thereof and other similar additives.

119. A solid polymer electrolyte comprising a solid polymer electrolyte composition as defined in any one of items 111 to 118, wherein said polymer is optionally crosslinked.

120. An electrode material comprising an electrochemically active material and a polymer composition as defined in any one of items 100 to 104.

121. The electrode material of item 120, wherein the polymer composition is a binder.

122. The electrode material of item 120 or 121, wherein the electrochemically active material is in the form of particles.

123. The electrode material of any one of items 120 to 122, wherein the electrochemically active material is selected from the group consisting of metal oxides, lithium metal oxides, metal phosphates, lithium metal phosphates, titanates and lithium titanates.

124. The electrode material of item 123, wherein the metal of the electrochemically active material is selected from the group consisting of titanium (Ti), iron (Fe), magnesium (Mg), manganese (Mn), vanadium (V), nickel (Ni), cobalt (Co), aluminum (Al) and a combination of at least two thereof.

125. The electrode material of any one of items 120 to 124, said electrode material further comprising at least one electronically conductive material.

126. The electrode material of item 125, wherein the electronically conductive material is selected from the group consisting of carbon black, acetylene black, graphite, graphene, carbon fibers, carbon nanofibers, carbon nanotubes and a combination of at least two thereof.

127. The electrode material of item 126, wherein the electronically conductive material is acetylene black.

128. The electrode material of any one of items 120 to 127, said electrode material further comprising at least one additional component or additive.

129. The electrode material of item 128, wherein the additional component or additive is selected from the group consisting of ionic conductors, inorganic particles, glass or ceramic particles, nanoceramics, salts and other similar additives.

130. The electrode material of item 128 or 129, wherein the additional component or additive is selected from the group consisting of $Al_2O_3$, $TiO_2$ and $SiO_2$.

131. The electrode material of any one of items 120 to 130, wherein said electrode material is a positive electrode material.

132. The electrode material of any one of items 120 to 130, wherein said electrode material is a negative electrode material.

133. The electrode material of item 132, wherein the electrochemically active material is a lithium titanate.

134. The electrode material of item 133, wherein the lithium titanate is a carbon-coated lithium titanate.

135. An electrode comprising an electrode material as defined in any one of items 120 to 134 on a current collector.

136. An electrochemical cell comprising a negative electrode, a positive electrode and an electrolyte, wherein at least one of the negative electrode, the positive electrode and the electrolyte comprises the polymer composition as defined in any one of items 100 to 104.

137. An electrochemical cell comprising a negative electrode, a positive electrode and an electrolyte, wherein at least one of the negative electrode and the positive electrode is as defined in item 135.

138. An electrochemical cell comprising a negative electrode, a positive electrode and a solid polymer electrolyte as defined in item 119.

139. An electrochemical accumulator comprising at least one electrochemical cell as defined in any one of items 136 to 138.

140. The electrochemical accumulator of item 139, wherein said electrochemical accumulator is a battery selected from the group consisting of a lithium battery, a lithium-ion battery, a sodium battery, a sodium-ion battery, a magnesium battery and a magnesium-ion battery.

141. The electrochemical accumulator of item 140, wherein the battery is a lithium or a lithium-ion battery.

142. A process process for the preparation of a polymer composition as defined in any one of items 100 to 104, the process comprising the steps of:

(i) preparation of a metal bis(halosulfonyl)imide; and

(ii) reaction of at least one compound including two or more functional groups as defined is item 1 with said metal bis(halosulfonyl)imide.

143. The process of item 142, said process further comprising a step of preparing a bis(halosulfonyl)imide.

144. The process of item 143, wherein the step of preparing a bis(halosulfonyl)imide is carried out by the reaction between sulfamic acid and a halosulfonic acid in the presence of at least one halogenating agent.

145. The process of item 144, wherein the halogenating agent is selected from the group consisting of phosphorus trichloride, phosphorus pentachloride, thionyl chloride, thionyl fluoride, phosphoryl chloride and oxalyl chloride.

146. The process of item 144 or 145, wherein the halogenating agent is thionyl chloride.

147. The process of any one of items 144 to 146, wherein the halosulfonic acid is chlorosulfonic acid.

148. The process of any one of items 143 to 147, wherein the step of preparing a bis(halosulfonyl)imide is carried out at a temperature in the range of from about 60 °C to about 150 °C, or from about 70 °C to about 145 °C, or from about 80 °C to about 140 °C, or from about 90 °C to about 100 °C, or from about 110 °C to about 140 °C, or from about 120 °C to about 140 °C, or from about 125 °C to about 140 °C, or from about 125 °C to about 135 °C, limits included.

149. The process of any one of items 143 to 148, wherein the step of preparing a bis(halosulfonyl)imide is carried out at a temperature of about 130 °C for a period of about 24 hours.

150. The process of any one of items 143 to 149, wherein the bis(halosulfonyl)imide is a bis(chlorosulfonyl)imide.

151. The process of any one of items 142 to 150, wherein the step of preparing a metal bis(halosulfonyl)imide is carried out by a metalation reaction between a bis(halosulfonyl)imide and at least one metalating agent, in the presence of a solvent.

152. The process of item 151, wherein the metalating agent comprises an alkali or alkaline earth metal selected from the group consisting of lithium, sodium, potassium, calcium and magnesium.

153. The process of item 152, wherein the metalating agent comprises an alkali metal selected from the group consisting of lithium, sodium and potassium.

154. The process of item 153, wherein the metalating agent is a lithiating agent.

155. The process of item 154, wherein the lithiating agent is selected from the group consisting of lithium hydroxide, lithium carbonate, lithium hydrogencarbonate, lithium hydride, lithium chloride, lithium bromide, lithium iodide, a lithium carboxylate of formula $RCO_2Li$ (wherein R is a linear or branched $C_1$-$C_{10}$alkyl group or an aromatic hydrocarbon), lithium oxalate and metallic lithium.

156. The process of item 154 or 155, wherein the lithiating agent is lithium chloride (LiCl).

157. The process of any one of items 151 to 156, wherein the solvent is selected from the group consisting of N,N-dimethylformamide, N-methyl-2-pyrrolidone, dimethylacetamide, carbon tetrachloride, chloroform, acetonitrile, tetrahydrofuran and a miscible combination of at least two thereof.

158. The process of item 157, wherein the solvent is N,N-dimethylformamide.

159. The process of any one of items 142 to 158, wherein the step of preparing a metal bis(halosulfonyl)imide is carried out at a temperature in the range of from about 20 °C to about 150 °C, or from about 30 °C to about 135 °C, or from about 40 °C to about 130 °C, or from about 50 °C to about 125 °C, or from about 60 °C to about 120 °C, or from about 70 °C to about 115 °C, or from about 80 °C to about 110 °C, or from about 90 °C to about 105 °C, limits included.

160. The process of any one of items 142 to 158, wherein the step of preparing a metal bis(halosulfonyl)imide is carried out at a temperature of about 100 °C.

161. The process of any one of items 142 to 159, wherein the step of preparing a metal bis(halosulfonyl)imide is carried out for a time period in the range of from about 10 hours to about 48 hours, or from about 10 hours to about 24 hours, or from about 12 hours to about 24 hours, limits included.

162. The process of item 161, wherein the step of preparing a metal bis(halosulfonyl)imide is carried out for a time period in the range of from about 12 hours to about 24 hours, limits included.

163. The process of any one of items 142 to 162, wherein the reaction of at least one compound including two or more functional groups with the metal bis(halosulfonyl)imide is a polymerization step.

164. The process of item 163, wherein the polymerization is carried out by polycondensation.

165. The process of item 163, wherein the polymerization is carried out by polyesterification.

166. The process of item 165, wherein the polyesterification is carried out by a Fischer esterification reaction.

167. The process of item 165, wherein the polyesterification is carried out by a Steglich esterification reaction.

168. The process of any one of items 142 to 167, wherein the reaction of at least one compound including two or more functional groups with the metal bis(halosulfonyl)imide is carried out in the presence of a solvent.

169. The process of item 168, wherein the solvent is selected from the group consisting of N,N-dimethylformamide, N-methyl-2-pyrrolidone, dimethylacetamide, carbon tetrachloride, chloroform, acetonitrile, tetrahydrofuran and or a miscible combination of at least two thereof.

170. The process of item 169, wherein the solvent is N,N-dimethylformamide.

171. The process of any one of items 163 to 170, wherein the polymerization step is carried out in the presence of at least one base and optionally of at least one polymerization catalyst and/or at least one co-catalyst and/or optionally at least one acylation catalyst.

172. The process of item 171, wherein the polymerization catalyst is selected from the group consisting of an acid catalyst, nucleophilic catalyst and a boron-based catalyst.

173. The process of item 172, wherein the acid catalyst is a Lewis acid catalyst.

174. The process of item 172, wherein the nucleophilic catalyst is selected from the group consisting of 4-dimethylaminopyridine, pyridine and other pyridine derivatives.

175. The process of item 174, wherein the nucleophilic catalyst is 4-dimethylaminopyridine.

176. The process of item 172, wherein the boron-based catalyst is a boric acid-based catalyst or a boronic acid-based catalyst.

177. The process of item 172, wherein the polymerization catalyst is selected from the group consisting of diarylboronic acids of formula Ar2BOH (wherein Ar is an aryl group), diphenylboronic acid, trifluorophenyl boronic acid, 9H-9-bora-10-thiaanthracene-9-ol, 10H-phenoxaborinin-10-ol, boron tribromide, boron trichloride, acyl fluoroborates, triethyloxonium fluoroborate, boron trifluoride etherate, boron trifluoride, tris(pentafluorophenyl)borane, a combination of at least two thereof when compatible and other similar boron-derived catalysts.

178. The process of any one of items 163 to 177, wherein the base is selected from the group consisting of triethylamine, N,N-diisopropylethylamine, pyridine and pyridine derivatives.

179. The process of item 178, wherein the base is triethylamine.

180. The process of any one of items 142 to 179, said process further comprising a post-functionalization or a post-polymerization modification step.

181. The process of item 180, wherein the post-functionalization or the post-polymerization modification step is carried out to introduce at least one crosslinkable functional group.

182. The process of item 181, wherein the post-functionalization or the post-polymerization modification step is carried out by a reaction between at least one functional group and at least one crosslinkable functional group.

183. The process of item 181 or 182, wherein the crosslinkable functional group is selected from the group consisting of $C_1$-$C_{10}$alkyl-acrylate, $C_1$-$C_{10}$alkyl-methacrylate, oxycarbonylamino-$C_1$-$C_{10}$alkyl-methacrylate, oxycarbonylamino-$C_1$-$C_{10}$alkyl-acrylate, carbonylamino-$C_1$-$C_{10}$alkyl-methacrylate and carbonylamino-Ci-Cioalkyl-acrylate.

184. The process of any one of items 142 to 183, said process further comprising a separation or purification step.

185. The process of item 184, wherein the separation or purification step is carried out by a liquid chromatography method or a filtration method.

186. The process of item 185, wherein the liquid chromatography method is steric exclusion chromatography.

187. The process of item 185, wherein the filtration method is a membrane filtration-based method.

188. The process of item 187, wherein the membrane filtration-based method is a nanofiltration method or an ultrafiltration method.

189. The process of item 188, wherein the membrane filtration-based method is an ultrafiltration method.

190. The process of item 189, wherein the membrane has a molecular weight cut off limit of 1,000 DA.

191. The process of any one of items 142 to 190, said process further comprising a step of coating the polymer composition.

192. The process of item 191, the coating step is carried out by at least one of a doctor blade coating method, a comma coating method, a reverse-comma coating method, a printing method such as gravure coating, or a slot-die coating method.

193. The process of item 192, wherein the coating step is carried out by at least one of a doctor blade coating method or a slot-die coating method.

194. The process of any one of items 142 to 193, said process further comprising a step of drying the polymer composition to remove any residual solvent and/or water.

195. The process of item 194, wherein the step of drying the polymer composition and the coating step are performed simultaneously.

196. The process of any one of items 142 to 195, said process further comprising a crosslinking step.

197. The process of item 196, wherein the crosslinking step is carried out by UV irradiation, or by heat treatment, or by microwave irradiation, or by using an electron beam, or by gamma irradiation, or by X-ray irradiation.

198. The process of item 197, wherein the crosslinking step is carried out by UV irradiation, or by heat treatment, or by using an electron beam.

199. The process of any one of items 196 to 198, wherein the crosslinking step is carried out in the presence of at least one of a crosslinking agent, a thermal initiator, a photoinitiator, a catalyst, a plasticizing agent and a combination of at least two thereof.

200. The process of item 199, wherein the photoinitiator is 2,2-dimethoxy-2-phenylacetophenone (Irgacure™ 651).

## EXAMPLES

The following non-limiting examples are illustrative embodiments and should not be construed as further limiting the scope of the present invention. These examples will be better understood in conjunction with the accompanying figures.

### Example 1 - Synthesis of a bis(chlorosulfonyl)imide ($Cl-SO_2-NH-SO_2-Cl$)

The synthesis of the bis(chlorosulfonyl)imide was carried out by the reaction between sulfamic acid and thionyl chloride, then, by reacting the reaction product with chlorosulfonic acid. The bis(chlorosulfonyl)imide was therefore prepared by a process as illustrated in Scheme 5:

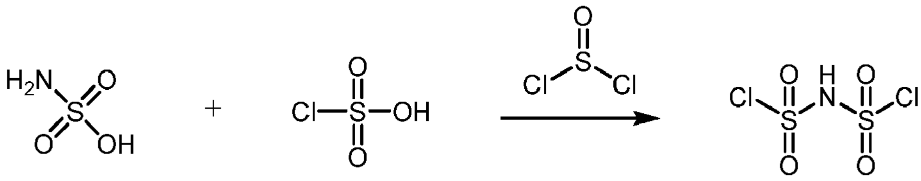

Scheme 5

1.0 equivalent of sulfamic acid was introduced in previously cleaned and dried round-bottom flask equipped with magnetic stir bar and suspended in an excess volume of thionyl chloride (2.75 equivalents). All the manipulations were carried out under a constant flow of nitrogen. 1.0 equivalent of chlorosulfonic acid was added dropwise and the flask was equipped with a vapor trap including an aqueous solution of saturated sodium hydroxide or lithium hydroxide for the neutralization of the hydrochloric acid vapors. The mixture was then heated on a sand bath to a temperature of about 130 °C under constant stirring for about 24 hours.

The mixture was then purified by vacuum distillation at a temperature of about 180 °C, a heat gun was used for heating the mixture. The distillation was carried out without circulating water in the refrigerant and with a liquid nitrogen cold trap. The temperature was increased at the end of the distillation to ensure that it was complete. The distillation was stopped before the formation of smoke to avoid contamination of the product.

The product was then cooled in order to form bis(chlorosulfonyl)imide crystals and stored in a freezer.

**Example 2 - Synthesis of lithium bis(chlorosulfonyl)imide**

The lithium bis(chlorosulfonyl)imide was prepared by a process as illustrated in Scheme 6:

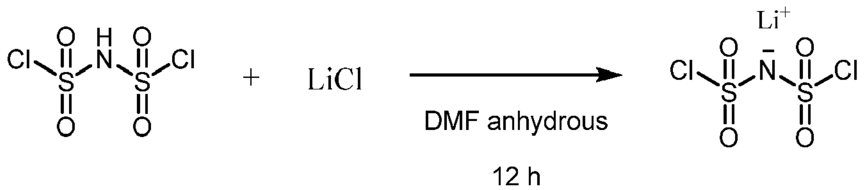


Scheme 6

The synthesis of the lithium bis(chlorosulfonyl)imide was carried out in a glove box under a nitrogen atmosphere. 1.0 equivalent of the bis(chlorosulfonyl)imide prepared in Example 1 was weighed and introduced in a round-bottom flask which was previously cleaned and dried at a temperature of 120 °C for 2 hours to remove any residual water. The round-bottom flask was then closed with a septum. Between about 1.0 to about 1.5 equivalents of lithium chloride dissolved in anhydrous N,N-dimethylformamide was added to the round-bottom flask using a needle through the septum.

The round-bottom flask was then removed from the glove box and placed under a constant stream of nitrogen at a temperature of approximately 100 °C for about 24 hours in order to ensure a complete lithiation of the mixture and the activation of lithium bis(chlorosulfonyl)imide by the N,N-dimethylformamide.

**Example 3 - Polymerization**

*(a) Polymerization of diethylene glycol with the lithium bis(chlorosulfonyl)imide prepared in Example 2 (Polymer 1)*

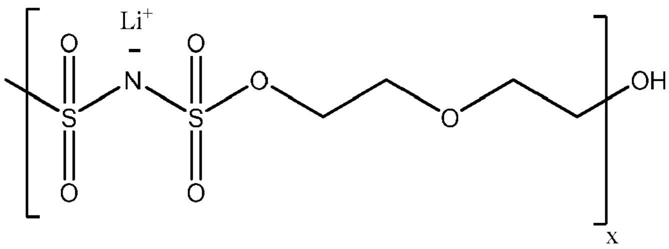

Polymer 1

wherein x is as herein defined.

The polymerization was carried out by a catalyst-controlled polycondensation of diethylene glycol with the lithium bis(chlorosulfonyl)imide prepared in Example 2. The polymerization was controlled with a polymerization catalyst.

The mixture comprising lithium bis(chlorosulfonyl)imide prepared in Example 2 was cooled in an ice bath for 20 minutes. The septum was then removed, and the neck of the round-bottom flask was washed with solvent to recover as much product as possible. The round-bottom flask was then closed with a new septum.

3 equivalents of triethylamine were then added to the mixture. 25 mg of trifluorophenyl boronic acid and 400 mg of 4-dimethylaminopyridine were then added to the mixture. 1 equivalent of diethylene glycol was then added, and the reaction mixture was heated to a temperature of about 100 °C for about 72 hours.

The reaction mixture was then cooled, filtered and precipitated in ethyl acetate. The reaction mixture was then placed in an ice bath for about 30 minutes and subsequently decanted.

The obtained polymer was then dissolved in a solvent mixture comprising isopropanol and acetone (2:8 volume ratio) and placed in a freezer for about 1 hour. The mixture was then filtered in order to remove residual triethylamine chloride. The solvent was then evaporated using a rotary evaporator at a temperature of about 60 °C. Finally, the polymer was dried in a vacuum oven at a temperature of about 60 °C.

Polymer 1 thus obtained was then dissolved in 400 ml of water and filtered by ultrafiltration with a membrane having a molecular weight cut off limit of 1,000 DA for about 7 hours.

*(b) Post-functionalization of the polymer prepared in Example 3 (a) (Polymer 2)*

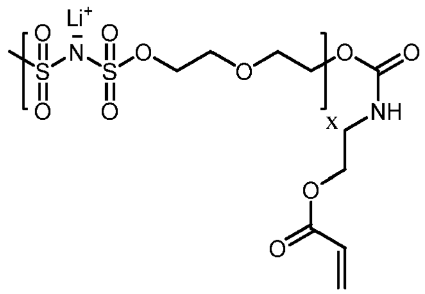

Polymer 2

wherein x is as herein defined.

Polymer 2 was prepared by the post-functionalization of Polymer 1 presented in Example 3 (a) in order to introduce crosslinkable groups.

4 g of the polymer prepared in Example 3 (a) were dissolved in 25 ml of anhydrous N,N-dimethylformamide. 1 ml of 2-isocyanatoethyl acrylate was then added to the solution and the mixture thus obtained was then heated under a nitrogen atmosphere to a temperature of about 50 °C for about 5 to 12 hours.

The polymer thus obtained (Polymer 2) was then dissolved in 400 ml of water and filtered by ultrafiltration with a membrane having a molecular weight cut off limit of 1,000 DA for about 7 hours.

Polymer 2 was analyzed by size exclusion chromatography (SEC), by proton nuclear magnetic resonance ($^1H$ NMR), by Fourier transform infrared spectroscopy (FTIR) and by differential scanning calorimetry (DSC).

Figure 1 shows the results of the size exclusion chromatography analysis obtained for Polymer 2. The results were obtained to determine the average molecular weight of Polymer 2 (g/mol). The steric exclusion chromatography

was performed with a refractive index (RI) detector and at a flow rate of 0.90 ml.min$^{-1}$. The steric exclusion chromatography results obtained with Polymer 2 are presented in Tables 1 and 2.

Table 1: Peak results

| | **Peak 1** | **Peak 2** |
|---|---|---|
| Detector | Refractive index | Refractive index |
| Retention time (RT) (min) | 18.86667 | 20.08333 |
| Molar mass (Mw) (g/mol) | 1 6618 | 5026 |
| Intrinsic viscosity (IV) (dL/g) | 0.089790 | 0.035070 |
| Peak height (mV) | 9.901 | 14.988 |
| Peak height (%) | 39.78 | 60.22 |
| Peak area (mV.s) | 389.477 | 810.563 |
| Area (%) | 32.46 | 67.54 |
| Concentration (mg/mL) | 2.470 | 5.140 |
| Recovery (%) | 100 | |

Table 2: Molecular weight averages

| | **Peak 1** | **Peak 2** |
|---|---|---|
| Mp (g/mol) | 1 5051 | 3 462 |
| Mn (g/mol) | 9 202 | 3 418 |
| Mw (g/mol) | 1 2542 | 3 424 |
| Mz (g/mol) | 1 6300 | 3 430 |
| Mz+1 (g/mol) | 1 9776 | 3 435 |
| Mv (g/mol) | 1 4688 | 3 429 |
| PD | 1.363 | 1.002 |

Figure 2 shows a proton NMR spectrum obtained for Polymer 2.

Figure 3 shows the results of the differential scanning calorimetry analysis obtained for Polymer 2. As seen in Figure 3, Polymer 2 has a glass transition temperature ($T_g$) = -53 °C.

*(c) Polymerization of 2,2,3,3,4,4,5,5-octafluoro-1,6-hexanediol with the lithium bis(chlorosulfonyl)imide prepared in Example 2 (Polymer 3)*

The polymerization was carried out by a catalyst-controlled polycondensation of 2,2,3,3,4,4,5,5-octafluoro-1,6-hexanediol with the lithium bis(chlorosulfonyl)imide prepared in Example 2.

The mixture comprising lithium bis(chlorosulfonyl)imide prepared in Example 2 was cooled in an ice bath for 20 minutes. The septum was then removed, and the neck of the round-bottom flask was washed with solvent to recover as much product as possible. The round-bottom flask was then closed with a new septum.

3 equivalents of triethylamine were then added to the mixture. 25 mg of trifluorophenyl boronic acid and 400 mg of 4-dimethylaminopyridine were then added to the mixture. 1 equivalent of 2,2,3,3,4,4,5,5-octafluoro-1,6-hexanediol was then added, and the reaction mixture was heated to a temperature of about 100 °C for about 72 hours.

The reaction mixture was then cooled, filtered and precipitated in ethyl acetate. The reaction mixture was then placed in an ice bath for about 30 minutes and subsequently decanted.

The polymer was then dissolved in a solvent mixture comprising isopropanol and acetone (2:8 volume ratio) and placed in a freezer for about 1 hour. The mixture was then filtered in order to remove residual triethylamine chloride. The solvent was then evaporated using a rotary evaporator at a temperature of about 60 °C. Finally, the polymer was dried in a vacuum oven at a temperature of about 60 °C.

The polymer thus obtained (Polymer 3) was then dissolved in 400 ml of water and filtered by ultrafiltration with a membrane having a molecular weight cut off limit of 1,000 DA for about 7 hours.

*(d) Post-functionalization of the polymer prepared in Example 3 (c) (Polymer 4)*

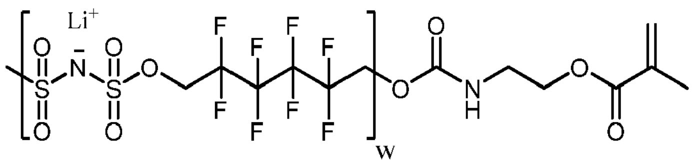

Polymer 4

wherein w is as herein defined.

Polymer 4 was prepared by the post-functionalization of Polymer 3 presented in Example 3 (c) in order to introduce crosslinkable groups.

4 g of the polymer prepared in Example 3 (c) were dissolved in 25 ml of anhydrous N,N-dimethylformamide. 1 ml of 2-isocyanatoethyl methacrylate was then added to the solution and the mixture thus obtained was then heated under a nitrogen atmosphere to a temperature of about 50 °C for about 5 to 12 hours.

The polymer thus obtained (Polymer 4) was then dissolved in 400 ml of water and filtered by ultrafiltration with a membrane having a molecular weight cut off limit of 1,000 DA for about 7 hours.

Polymer 4 was analyzed by size exclusion chromatography. Figure 4 shows the results of the size exclusion chromatography analysis obtained for Polymer 4. The steric exclusion chromatography was performed with a refractive index detector and at a flow rate of 0.80 $ml.min^{-1}$. The steric exclusion chromatography results obtained with Polymer 4 are presented in Tables 3 and 4.

Table 3: Peak results

| | **Peak 1** | **Peak 2** |
|---|---|---|
| Detector | Refractive index | Refractive index |
| Retention time (RT) (min) | 21.08333 | 22.73333 |
| Molar mass (Mw) (g/mol) | 38 018 | 16 881 |
| Intrinsic viscosity (IV) (dL/g) | 0.264825 | 0.009352 |
| Peak height (mV) | 0.866 | 7.619 |
| Peak height (%) | 10.20 | 89.80 |
| Peak area (mV.s) | 23.608 | 479.553 |
| Area (%) | 4.69 | 95.31 |
| Concentration (mg/mL) | 0.235 | 4.765 |
| Recovery (%) | 100 | |

Table 4: Molecular weight averages

| | **Peak 1** | **Peak 2** |
|---|---|---|
| Mp (g/mol) | 1 936 | 16311 |
| Mn (g/mol) | 2 393 | 14 886 |
| Mw (g/mol) | 39 026 | 16 879 |
| Mz (g/mol) | 40 6139 | 18 847 |

(continued)

| | Peak 1 | Peak 2 |
|---|---|---|
| Mz+1 (g/mol) | 88 8519 | 20 673 |
| Mv (g/mol) | 19 3778 | 1 9011 |
| PD | 16.31 | 1.134 |

*(e) Polymerization of glycerol and diethylene glycol with the lithium bis(chlorosulfonyl)imide prepared in Example 2 (Polymer 5)*

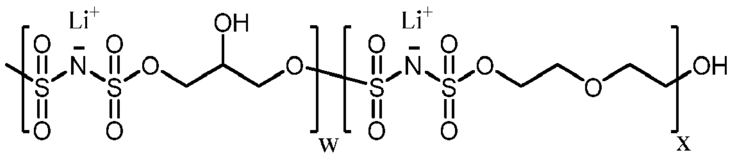

Polymer 5

wherein w and x are as herein defined.

The polymerization was carried out by a catalyst-controlled polycondensation of glycerol and diethylene glycol with the lithium bis(chlorosulfonyl)imide prepared in Example 2.

The mixture comprising lithium bis(chlorosulfonyl)imide prepared in Example 2 was cooled in an ice bath for 20 minutes. The septum was then removed, and the neck of the round-bottom flask was washed with solvent to recover as much product as possible. The round-bottom flask was then closed with a new septum.

3 equivalents of triethylamine were then added to the mixture. 25 mg of diphenylboronic acid and 400 mg of 4-dimethylaminopyridine were then added to the mixture. 1 equivalent of 0.90 equivalent of diethylene glycol and 0.10 equivalent of glycerol of were then added, and the reaction mixture was heated to a temperature of about 100 °C for about 72 hours.

The reaction mixture was then cooled, filtered and precipitated in ethyl acetate. The reaction mixture was then placed in an ice bath for about 30 minutes and subsequently decanted.

The polymer was then dissolved in a solvent mixture comprising isopropanol and acetone (2:8 volume ratio) and placed in a freezer for about 1 hour. The mixture was then filtered in order to remove residual triethylamine chloride. The solvent was then evaporated using a rotary evaporator at a temperature of about 60 °C. Finally, the polymer was dried in a vacuum oven at a temperature of about 60 °C.

The polymer thus obtained (Polymer 5) was then dissolved in 400 ml of water and filtered by ultrafiltration with a membrane having a molecular weight cut off limit of 1,000 DA for about 7 hours.

Polymer 5 was analyzed by proton nuclear magnetic resonance ($^1$H NMR), by carbon-13 nuclear magnetic resonance ($^{13}$C NMR) and by differential scanning calorimetry (DSC).

Polymer 5 obtained was analyzed by proton nuclear magnetic resonance (proton NMR).

Figure 5 shows a proton NMR spectrum obtained for a homopolymer obtained by the polymerization of diethylene glycol with the lithium bis(chlorosulfonyl)imide prepared in Example 2 for example by the process as described in Example 3 (a).

Figures 6 and 7 respectively show a $^1$H NMR spectrum and a $^{13}$C NMR spectrum obtained for Polymer 5.

Figure 8 shows the results of the differential scanning calorimetry analysis obtained for Polymer 5. Figure 8 shows that Polymer 5 has a glass transition temperature ($T_g$) = -73 °C.

*(f) Post-functionalization of the polymer prepared in Example 3 (e) (Polymer 6)*

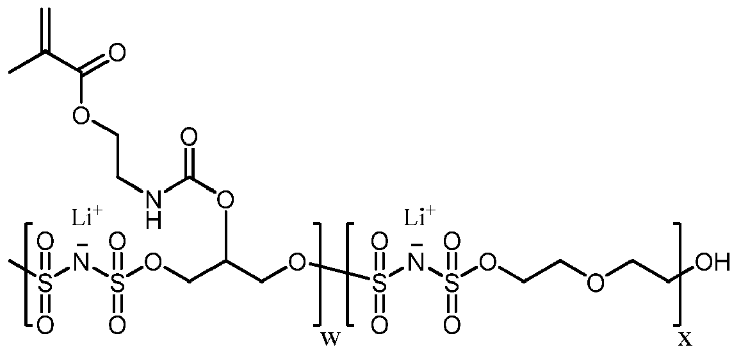

Polymer 6

wherein,
w and x are as herein defined.

Polymer 6 was prepared by the post-functionalization of Polymer 5 presented in Example 3 (e) in order to introduce crosslinkable groups.

4 g of the polymer prepared in Example 3 (e) were dissolved in 25 ml of anhydrous N,N-dimethylformamide. 1 ml of 2-isocyanatoethyl methacrylate was then added to the solution and the mixture thus obtained was then heated under a nitrogen atmosphere to a temperature of about 50 °C for about 5 to 12 hours.

The polymer thus obtained (Polymer 6) was then dissolved in 400 ml of water and filtered by ultrafiltration with a membrane having a molecular weight cut off limit of 1,000 DA for about 7 hours.

**Example 4 - Ionic conductivity**

Examples 4 (a) to 4 (d) relate to the preparation of polymer films for measuring the ionic conductivity of the polymers as defined herein by the method as described in the present application, while Examples 4 (e) and 4 (f) are for comparison.

*a) Preparation of the polymer film comprising Polymer 1*

The ionic conductivity results were obtained for the polymer prepared in Example 3 (a). 1.7 g of the polymer prepared in Example 3 (a) was dissolved in 1.4 g of a solvent mixture comprising water and methanol (80:20 by volume) and without adding any additional lithium salt. 10% by weight of polyvinylidene fluoride (PVdF) were added to the suspension thus obtained.

The suspension was then applied to a substrate or support film using a coating system equipped with a hot plate (Erichsen testing instruments) with a 3-mil slit opening at a speed of 15 mm.s$^{-1}$. The polymer film thus obtained was dried at a temperature of 70 °C directly during coating.

The polymer film was then dried in a vacuum oven at a temperature of 85 °C for 48 hours to remove any residual solvent.

The polymer film was then removed from the surface of the substrate or support film.

*b) Preparation of the polymer film comprising Polymer 2*

The ionic conductivity results were obtained for the polymer prepared in Example 3 (b). 1.7 g of the polymer prepared in Example 3 (b) was dissolved in 1.4 g of a solvent mixture comprising water and methanol (80:20 by volume) and without adding any additional lithium salt.

The suspension thus obtained was then applied to a substrate or support film using a coating system equipped with a hot plate (Erichsen testing instruments) with a 3-mil slit opening at a speed of 15 mm.s$^{-1}$. The polymer film thus obtained was dried at a temperature of 70 °C directly during coating.

The polymer film was then dried in a vacuum oven at a temperature of 85 °C for 48 hours to remove any residual solvent.

After drying, the polymer film was placed in a polycarbonate (lexan) box under a helium atmosphere to reduce the presence of oxygen and moisture. The polymer film was then irradiated for 5 minutes with UV light (wavelength of 254 nm) placed at a distance of about 5 cm from the polymer film.

The polymer film was then removed from the surface of the substrate or support film.

*c) Preparation of the polymer film comprising Polymer 4*

The ionic conductivity results were obtained for the polymer prepared in Example 3 (d). 1.7 g of the polymer prepared in Example 3 (d) was dissolved in 1.4 g of a solvent mixture comprising water and methanol (80:20 by volume) and without adding any additional lithium salt.
The suspension thus obtained was then applied to a substrate or support film using a coating system equipped with a hot plate (Erichsen testing instruments) with a 3-mil slit opening at a speed of 15 $mm.s^{-1}$. The polymer film thus obtained was dried at a temperature of 70 °C directly during coating.
The polymer film was then dried in a vacuum oven at a temperature of 85 °C for 48 hours to remove any residual solvent.
After drying, the polymer film was placed in a polycarbonate (lexan) box under a helium atmosphere to reduce the presence of oxygen and moisture. The polymer film was then irradiated for 5 minutes with UV light (wavelength of 254 nm) placed at a distance of about 5 cm from the polymer film.
The polymer film was then removed from the surface of the substrate or support film.

*d) Preparation of the polymer film comprising Polymer 6*

The ionic conductivity results were obtained for the polymer prepared in Example 3 (f). 1.7 g of the polymer prepared in Example 3 (f) was dissolved in 1.4 g of a solvent mixture comprising water and methanol (80:20 by volume) and without adding any additional lithium salt.
The suspension thus obtained was then applied to a substrate or support film using a coating system equipped with a hot plate (Erichsen testing instruments) with a 3-mil slit opening at a speed of 15 $mm.s^{-1}$. The polymer film thus obtained was dried at a temperature of 70 °C directly during coating.
The polymer film was then dried in a vacuum oven at a temperature of 85 °C for 48 hours to remove any residual solvent.
After drying, the polymer film was placed in a polycarbonate (lexan) box under a helium atmosphere to reduce the presence of oxygen and moisture. The polymer film was then irradiated for 5 minutes with UV light (wavelength of 254 nm) placed at a distance of about 5 cm from the polymer film.
The polymer film was then removed from the surface of the substrate or support film.

*e) Preparation of the polymer film comprising Polymer 7 (comparative)*

The ionic conductivity results were obtained for a polymer as described in US Patent Number 7,897,674 B2 (Zaghib et al.) (US'674). 1.7 g of the polymer prepared was dissolved in 1.4 g of a solvent mixture comprising water and methanol (80:20 by volume) and without adding any additional lithium salt.
The suspension thus obtained was then applied to a substrate or support film using a coating system equipped with a hot plate (Erichsen testing instruments) with a 3-mil slit opening at a speed of 15 $mm.s^{-1}$. The polymer film thus obtained was dried at a temperature of 70 °C directly during coating.
The polymer film was then dried in a vacuum oven at a temperature of 85 °C for 48 hours to remove any residual solvent.
After drying, the polymer film was placed in a polycarbonate (lexan) box under a helium atmosphere to reduce the presence of oxygen and moisture. The polymer film was then irradiated for 5 minutes with UV light (wavelength of 254 nm) placed at a distance of about 5 cm from the polymer film.
The polymer film was then removed from the surface of the substrate or support film.

*f) Preparation of the polymer film comprising Polymer 8 (comparative)*

The ionic conductivity results were obtained for a polymer as described in US Patent Number 6,903,174 B2 (Harvey et al.) (US'174). 1.7 g of the polymer prepared was dissolved in 1.4 g of a solvent mixture comprising water and methanol (80:20 by volume) and without adding any additional lithium salt. 0.5 wt.% of 2,2-dimethoxy-2-phenylacetophenone (Irgacure™ 651) were then added to the suspension thus obtained.
The suspension thus obtained was then applied to a substrate or support film using a coating system equipped with a hot plate (Erichsen testing instruments) with a 3-mil slit opening at a speed of 15 $mm.s^{-1}$. The polymer film thus obtained was dried at a temperature of 70 °C directly during coating.
The polymer film was then dried in a vacuum oven at a temperature of 85 °C for 48 hours to remove any residual solvent.
After drying, the polymer film was placed in a polycarbonate (lexan) box under a helium atmosphere to reduce the presence of oxygen and moisture. The polymer film was then irradiated for 5 minutes with UV light (wavelength of

254 nm) placed at a distance of about 5 cm from the polymer film.

The polymer film was then removed from the surface of the substrate or support film.

*g) Preparation of symmetrical cells for ionic conductivity measurements*

The preparation of the symmetrical cells of Examples 4 (a) to 4 (f) was entirely carried out in an anhydrous chamber with a dew point of approximately -55 °C. The symmetrical cells were assembled in a button cell configuration with an active surface of 2.01 $cm^2$. The symmetrical cells were assembled according to the configurations indicated in Table 5.

Table 5. Symmetrical cell configurations

| Symmetric cell | Polymer film | Polymer |
|---|---|---|
| Cell 1 | Prepared in Example 4 (a) | Polymer 1 |
| Cell 2 | Prepared in Example 4 (b) | Polymer 2 |
| Cell 3 | Prepared in Example 4 (c) | Polymer 4 |
| Cell 4 | Prepared in Example 4 (d) | Polymer 6 |
| Cell 5 (comparative cell) | Prepared in Example 4 (e) | Polymer 7 |
| Cell 6 (comparative cell) | Prepared in Example 4 (f) | Polymer 8 |

*h) Measurement of the ionic conductivity of the polymer films presented in Examples 4 (a) to 4 (f).*

The ionic conductivity measurements were performed by electrochemical impedance spectroscopy with an alternating current and recorded with a VMP3 multi-channel potentiostat. The electrochemical impedance spectroscopy measurement was performed between 200 mHz and 1 MHz over a temperature range of from 20 °C to 80 °C (in increase and in decrease, each 5 °C).

Each electrochemical impedance measurement was obtained after the oven temperature stabilized at the temperature (T).

The polymer films were placed between two stainless steel blocking electrodes with an active surface of 2.01 $cm^2$. The ionic conductivity of the lithium ions was calculated from the electrochemical impedance spectroscopy measurements using Equation 1:

$$\sigma = \frac{1}{R_t} \times \frac{l}{A} \qquad \text{Equation 1}$$

wherein,

σ is the ionic conductivity ($S.cm^{-1}$), l is the thickness of the polymer film placed between the two stainless steel blocking electrodes, A is the contact surface area between the polymer and the two stainless steel electrodes, and $R_t$ is the total resistance measured by electrochemical impedance spectroscopy.

The graphs in Figures 9 to 14 respectively present the of ionic conductivity (S.cm-1) results measured as a function of temperature ($K^{-1}$) for the symmetrical cells assembled in Example 4 (g).

Figure 9 shows that an ionic conductivity value of 1.97 x $10^{-5}$ $S.cm^{-1}$ was obtained at a temperature of 50 °C for Cell 1 as described in Example 4 (g).

Figure 10 shows that an ionic conductivity value of 2,65 x $10^{-5}$ $S.cm^{-1}$ was obtained at a temperature of 50 °C for Cell 2 as described in Example 4 (g).

Figure 11 shows that an ionic conductivity value of 5,37 x $10^{-5}$ $S.cm^{-1}$ was obtained at a temperature of 50 °C for Cell 3 as described in Example 4 (g).

Figure 12 shows that an ionic conductivity value of 3,25 x $10^{-4}$ $S.cm^{-1}$ was obtained at a temperature of 50 °C for Cell 4 as described in Example 4 (g).

Figure 13 shows that an ionic conductivity value of 1,65 x $10^{-4}$ $S.cm^{-1}$ was obtained at a temperature of 50 °C for Cell 5 as described in Example 4 (g) (comparative).

Figure 14 shows that an ionic conductivity value of 1,90 x $10^{-4}$ $S.cm^{-1}$ was obtained at a temperature of 50 °C for Cell 6 as described in Example 4 (g) (comparative).

**Example 5 - Cyclic voltammetry**

*a) Preparation of polymer films for cyclic voltammetry measurements*

The cyclic voltammetry results were obtained for the polymers prepared in Examples 3 (b) and 3 (f) as well as for the polymers as described in the patents US'674 and US'174 and for a polyacrylonitrile (PAN) for comparative purposes.

The polymers prepared in Examples 3 (b) and 3 (f) and the comparative polymers were dissolved in a solvent mixture comprising water and methanol (80:20 by volume).

Once the polymers were dissolved, Ketjen™ Black was added to the mixtures in a polymer:Ketjen™ Black ratio (5:1 by weight).

The resulting mixtures were then mixed using a ball mill to adequately disperse and grind the Ketjen ™ Black agglomerates.

The viscosity of the mixtures thus obtained was then adjusted with the solvent mixture comprising water and methanol (80:20 by volume).

The mixtures thus obtained were then applied on carbon-coated aluminum current collectors using a doctor-blade coating system equipped a heating plate. The polymer films thus obtained were dried at a temperature of 70 °C directly during coating.

The polymer films were then dried in a vacuum oven at a temperature of 85 °C for 48 hours to remove any residual solvent.

*b) Preparation of symmetrical cells for cyclic voltammetry measurements*

The preparation of the symmetrical cells comprising the polymer films prepared in Example 5 (a) was entirely carried out in an anhydrous chamber with a dew point of approximately -55 °C. The symmetrical cells were assembled in a button cell configuration with an active surface of 2.01 $cm^2$. The symmetrical cells were assembled according to the configurations indicated in Table 6.

Table 6. Symmetric cell configurations

| Symmetric cell | Polymer film | Polymer |
|---|---|---|
| Cell 7 (comparative cell) | Prepared in Example 5 (a) | As described in US'674 |
| Cell 8 (comparative cell) | Prepared in Example 5 (a) | As described in US'174 |
| Cell 9 | Prepared in Example 5 (a) | Prepared in Example 3 (b) |
| Cell 10 | Prepared in Example 5 (a) | Prepared in Example 3 (f) |
| Cell 11 (comparative cell) | Prepared in Example 5 (a) | Polyacrylonitrile (PAN) |

*c) Cyclic voltammetry*

The electrochemical stability in oxidation of the symmetrical cells as described in Example 5 (b) was measured using a VMP3 multi-channel potentiostat.

Figure 15 presents the cyclic voltammetry results obtained for Cell 7 (comparative cell) (solid line) recorded at a scanning rate of 0.067 mV/s between 2.7 V and 4.3 V vs Li/Li+.

Figure 15 also presents the cyclic voltammetry results obtained for Cell 8 (comparative cell) (dashed line) recorded at a scanning rate of 0.05 mV/s between 2.7 V and 4.3 V vs $Li/Li^+$.

Figure 16 presents the cyclic voltammetry results obtained for Cell 7 (comparative cell) recorded at a scanning rate of 0.067 mV/s between 2.5 V and 5 V vs Li/Li+. Figure 16 shows that the oxidation of the polymer starts at a potential of about 4.37 V vs Li/Li+.

Figure 17 presents the cyclic voltammetry results obtained for Cell 9 (solid line) and for Cell 10 (dashed line) recorded at a scanning rate of 0.067 mV/s between 2.5 V and 5 V vs Li/Li+.

Figure 18 presents the cyclic voltammetry results obtained for Cell 7 (comparative cell) (dash dot dot line), for Cell 10 (dash dot line), for Cell 9 (dashed line) and for Cell 11 (comparative cell) (solid line) recorded at a scan rate of 0.067 mV/s between 2.5 V and 5.0 V *vs* Li/Li+. Figure 18 shows the results obtained during the first cycle.

Numerous modifications could be made to any of the embodiments described above without distancing from the scope of the present invention. Any references, patents or scientific literature documents referred to in the present

application are incorporated herein by reference in their entirety for all purposes.

## Claims

1. An ionic polymer comprising at least one repeating unit which is the reaction product between at least one compound of Formula 1 comprising two or more functional groups and a metal bis(halosulfonyl)imide of Formula 2:

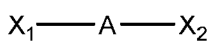

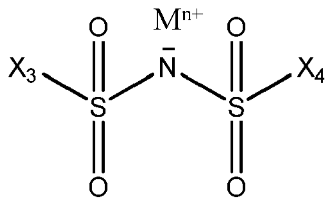

Formula 1 Formula 2

wherein,

A is an optionally substituted organic group selected from a linear or branched $C_1$-$C_{10}$alkylene, a linear or branched $C_1$-$C_{10}$alkyleneoxy$C_1$-$C_{10}$alkylene, a linear or branched poly($C_1$-$C_{10}$alkyleneoxy)$C_1$-$C_{10}$alkylene, a linear or branched polyether and a linear or branched polyester;
$X_1$ and $X_2$ are functional groups independently and at each occurrence selected from the group consisting of a hydroxyl group, a thiol group and an amino group, preferably $X_1$ and $X_2$ are both hydroxyl groups, or both amino groups;
$X_3$ and $X_4$ are halogen atoms each independently selected from the group consisting of F, Cl, Br and I atoms, preferably $X_3$ and $X_4$ are both Cl atoms; and
$M^{n+}$ is an alkali or alkaline earth metal ion selected from the group consisting of $N^{a+}$, $K^+$, $Li^+$, $Ca^{2+}$ and $Mg^{2+}$ ions atoms, preferably $X_3$ and $X_4$ are both Cl atoms.

2. The ionic polymer of claim 1, wherein the compound of Formula 1 is selected from the group consisting of glycerol, alkane diols, 1,3-propanediol, 1,4-butanediol, 1,5-pentanediol, 1,6-hexanediol, 1,8-octanediol, 1,2-propanediol, 1,2-butanediol, 2,3-butanediol, 1,3-butanediol, 1,2-pentanediol, etohexadiol, p-menthane-3,8-diol, 2-methyl-2,4-pentanediol, polycaprolactone diol, ethylene glycol, diethylene glycol, triethylene glycol, tetraethylene glycol, pentaethylene glycol, polyethylene glycol, 2,2,3,3,4,4,5,5-octafluoro-1,6-hexanediol, a combination of at least two thereof and other similar glycols and diols, preferably the compound of Formula 1 is glycerol or a glycol.

3. The ionic polymer of claim 1 or 2, wherein the compound comprising two or more functional groups is selected from the group consisting of alkane diamines, 1,3-propanediamine, 1,4-butanediamine, 1,5-pentanediamine, 1,6-hexanediamine, 1,8-octanediamine, 1,2-propanediamine, 1,2-butanediamine, 2,3-butanediamine, 1,3-butanediamine, 1,2-pentanediamine, 2,4-diamino-2-methylpentane, ethylenediamine, 1,8-diamino-3,6-dioxaoctane, 1,11 -diamino-3,6,9-trioxaundecane, 4,9-dioxa-1,12-dodecanediamine, 1,14-diamino-3,6,9,12-tetraoxatetradecane, poly(ethylene glycol) diamines, JEFFAMINE® D, ED or EDR series products, a combination of at least two thereof and other similar diamines, preferably the compound comprising two or more functional groups is a JEFFAMINE® ED series product selected from the group consisting of JEFFAMINE® ED-600, ED-900 and ED-2003 or a poly(ethylene glycol) diamine of formula $H_2NCH_2CH_2(OCH_2CH_2)_nNH_2$, where n is 1 or 2.

4. The ionic polymer of any one of claims 1 to 3, wherein A is selected from:

i. an optionally substituted linear or branched $C_1$-$C_{10}$alkylene group and the compound comprising two or more hydroxyl groups and is of Formula 3:

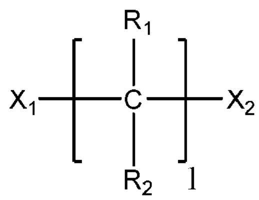

Formula 3

ii. an optionally substituted linear or branched poly($C_1$-$C_{10}$alkyleneoxy)$C_1$-$C_{10}$alkylene and the compound including two or more functional groups and is of Formula 4:

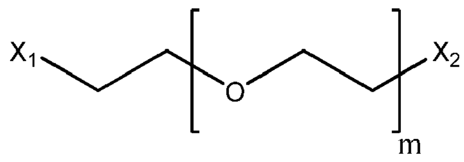

Formula 4

iii. an optionally substituted linear or branched polyether and the compound including two or more functional groups and is of Formula 5:

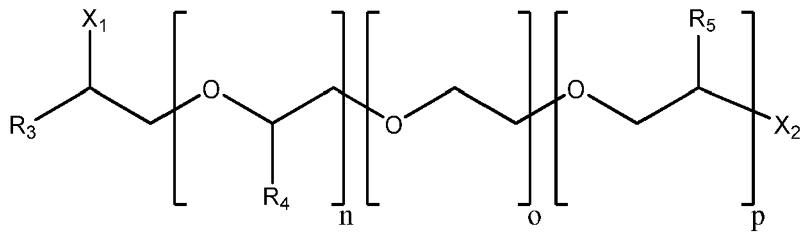

Formula 5

or

iv. an optionally substituted aliphatic polyester such as a polycaprolactone and the compound including two or more functional groups may be of Formula 7:

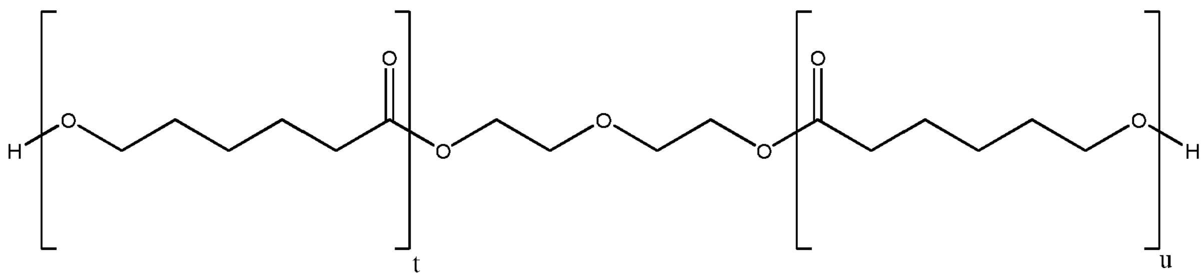

Formula 7

wherein,

$X_1$ and $X_2$ are as defined in claim 1;

$R_1$ and $R_2$ are independently and at each occurrence selected from a hydrogen atom, a hydroxyl group, a thiol group, an amino group, a halogen atom selected from F, Cl, Br and I, and a linear or branched substituent selected from the group consisting of $C_1$-$C_{10}$alkyl, $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkylacrylate, preferably $R_1$ and $R_2$ are independently and at each occurrence selected from a hydrogen atom, a hydroxyl group, a thiol group, an amino group, a fluorine atom and a linear or branched substituent selected from the group consisting of $C_1$-$C_{10}$alkyl-acrylate, $C_1$-$C_{10}$alkyl-methacrylate, oxycarbonylamino-$C_1$-$C_{10}$alkylmethacrylate and oxycarbonylamino-$C_1$-$C_{10}$alkyl-acrylate;
$R_3$, $R_4$ and $R_5$ are alkyl groups independently and at each occurrence selected from the group consisting of $C_1$-$C_{10}$alkyl, preferably $R_3$, $R_4$ and $R_5$ are methyl groups;
l is an integer selected from the range of 1 to 10;
m is an integer selected from the range of 1 to 68, preferably m is an integer selected from the range of 1 to 10;
n, o and p are selected such that the number average molecular weight of the polyether is from about 220 g/mol to about 2 000 g/mol, limits included;
n and p are selected such that n + p is in the range of from about 1 to about 6;
o is selected in the range of from about 2 to about 39; and
t and u are integers selected from the range of 1 to 10.

**5.** An ionic polymer, wherein said ionic polymer:

i. comprises at least one repeating unit of Formula 8 (a) or a polymer of Formula 8 (b):

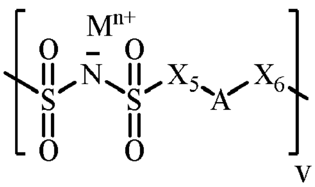

Formula 8 (a)

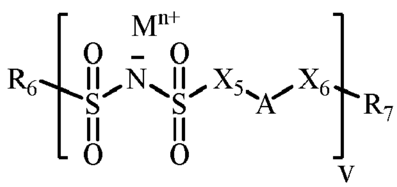

Formula 8 (b)

or
ii. comprises at least one repeating unit of Formulae 9, 10, 11 or 12:

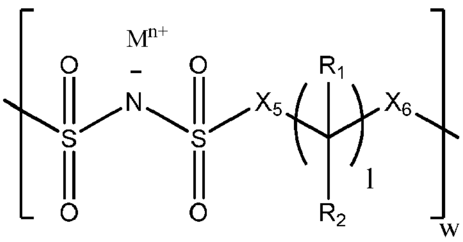

Formula 9

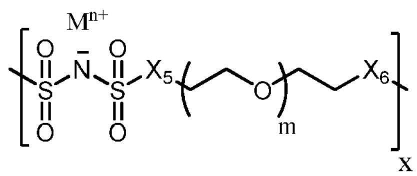

Formula 10

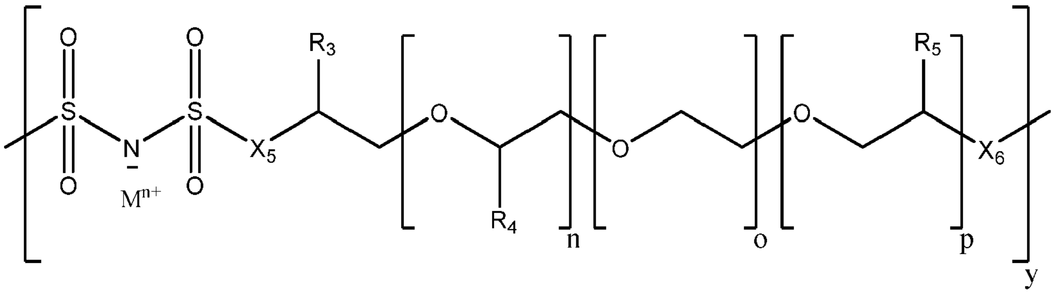

Formula 11

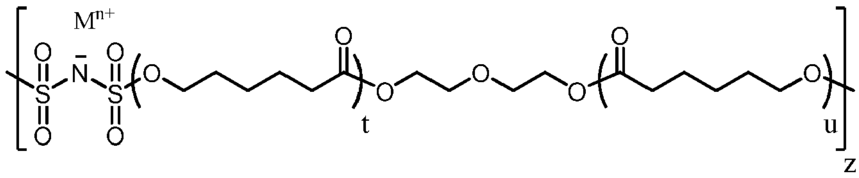

Formula 12

wherein,

A is an optionally substituted organic group independently and at each occurrence selected from a linear or branched $C_1$-$C_{10}$alkylene, a linear or branched $C_1$-$C_{10}$alkyleneoxy$C_1$-$C_{10}$alkylene, a linear or branched poly($C_1$-$C_{10}$alkyleneoxy)$C_1$-$C_{10}$alkylene, a linear or branched polyether and a linear or branched polyester;
$X_5$ and $X_6$ are each independently selected from the group consisting of an oxygen atom, a sulfur atom and a -NH group, preferably $X_5$ and $X_6$ are both oxygen atoms, or both sulfur atoms, or both -NH groups;
$R_1$ and $R_2$ are independently and at each occurrence selected from a hydrogen atom, a hydroxyl group, a thiol group, an amino group, a halogen atom selected from F, Cl, Br and I, and a linear or branched substituent selected from the group consisting of $C_1$-$C_{10}$alkyl, $C_1$-$C_{10}$alkyl-acrylate, $C_1$-$C_{10}$alkyl-methacrylate, oxycarbonylamino-$C_1$-$C_{10}$alkyl-methacrylate and oxycarbonylamino-$C_1$-$C_{10}$alkylacrylate, preferably $R_1$ and $R_2$ are independently and at each occurrence selected from a hydrogen atom, a hydroxyl group, a thiol group, an amino group, a fluorine atom and a linear or branched substituent selected from the group consisting of $C_1$-$C_{10}$alkyl-acrylate, $C_1$-$C_{10}$alkyl-methacrylate, oxycarbonylamino-$C_1$-$C_{10}$alkylmethacrylate and oxycarbonylamino-$C_1$-$C_{10}$alkyl-acrylate;
$R_3$, $R_4$ and $R_5$ are alkyl groups independently and at each occurrence selected from the group consisting of $C_1$-$C_{10}$alkyl, preferably $R_3$, $R_4$ and $R_5$ are methyl groups;
$R_6$ is selected from a hydroxyl group, a thiol group, an amino group and a $R_7$-$X_5$-$AX_6$- group;
$R_7$ is a crosslinkable group independently and at each occurrence selected from $C_1$-$C_{10}$alkyl-acrylate, $C_1$-$C_{10}$alkyl-methacrylate, carbonylamino-$C_1$-$C_{10}$alkyl-methacrylate and carbonylamino-Ci-Cioalkyl-acrylate;
$M^{n+}$ is an alkali or alkaline earth metal ion selected from the group consisting of $Na^+$, $K^+$, $Li^+$, $Ca^{2+}$ and $Mg^{2+}$ ions, preferably $M^{n+}$ is an alkali metal ion selected from the group consisting of Na+, $K^+$ and Li+ ions, more preferably $M^{n+}$ is Li+;
l is an integer selected from the range of 1 to 10;
m is an integer selected from the range of 1 to 68;
n and p are selected such that n + p is in the range of from about 1 to about 6;
o is selected in the range of from about 2 to about 39;
t and u are integers selected from the range of 1 to 10; and
v, w, x, y and z are integers selected such that the number average molecular weight of the ionic polymer is from about 8 000 g/mol to about 150 000 g/mol, limits included.

**6.** An ionic polymer selected from an ionic polymer of Formulae 13, 14, 15, 16, 17, 18, 19, 20, 21, 22, 23, 24 and 25:

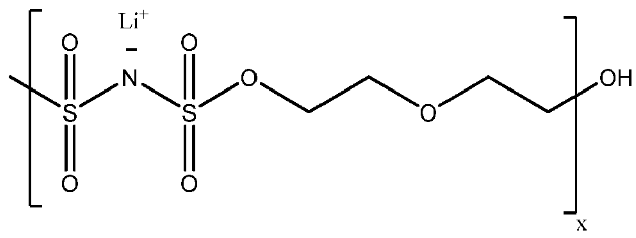

Formula 13

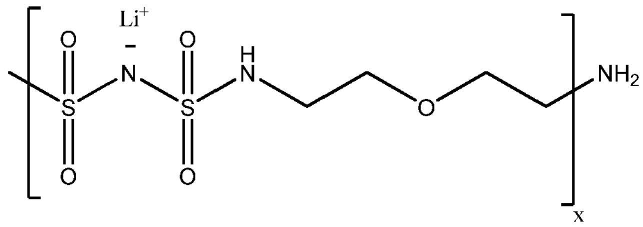

Formula 14

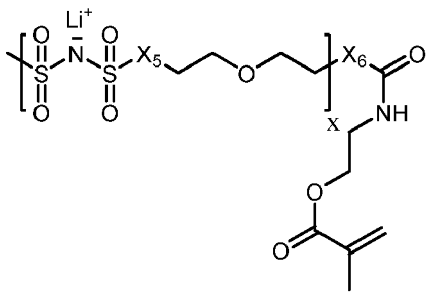

Formula 15

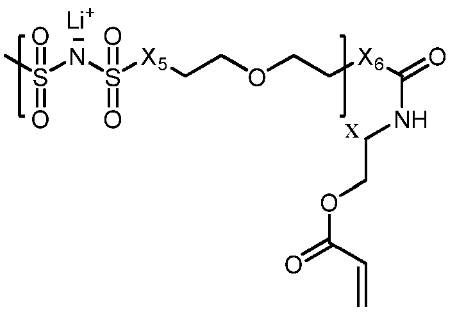

Formula 16

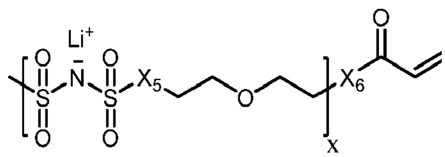

Formula 17

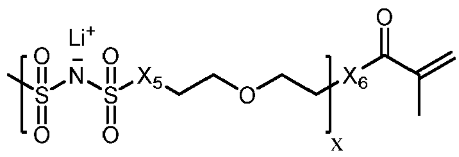

Formula 18

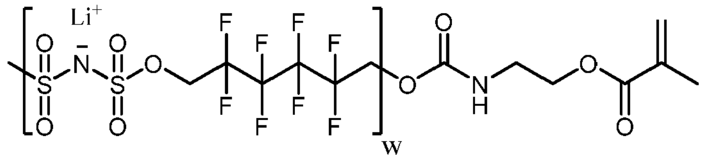

Formula 19

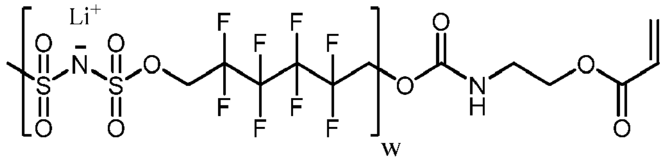

Formula 20

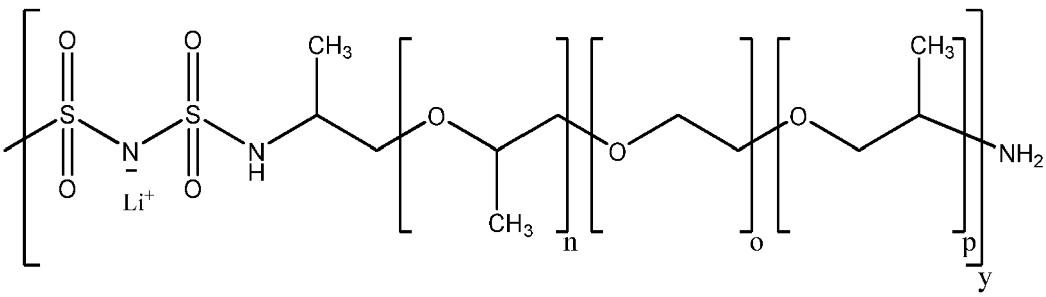

Formula 21

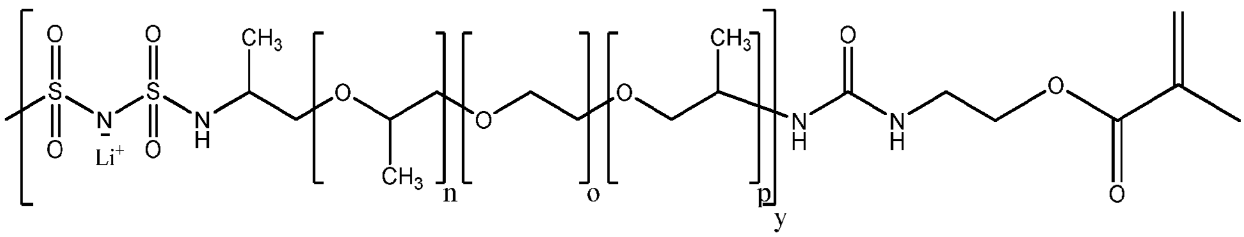

Formula 22

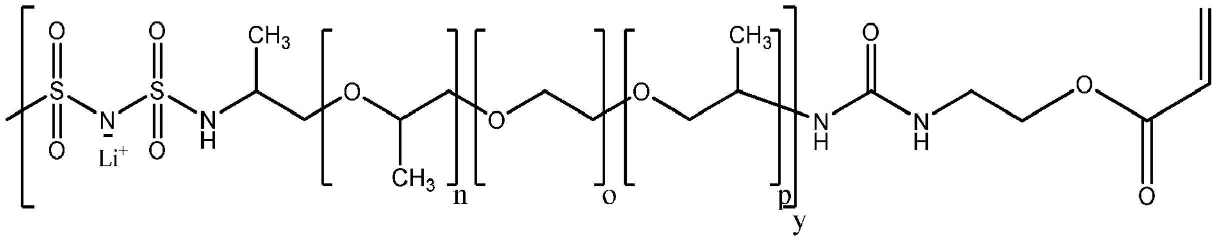

Formula 23

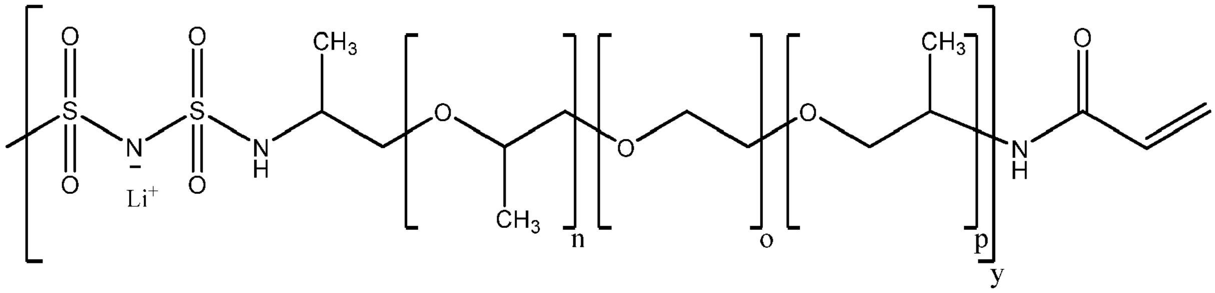

Formula 24

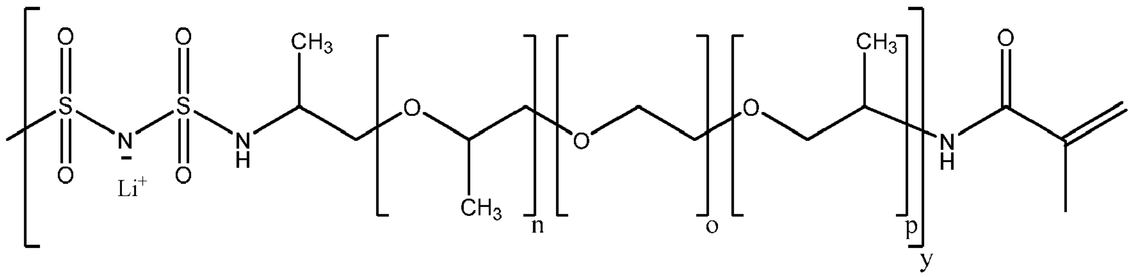

Formula 25

wherein,

$X_5$ and $X_6$ are each independently selected from the group consisting of an oxygen atom, a sulfur atom and a -NH group, preferably $X_5$ and $X_6$ are both oxygen atoms, or both sulfur atoms, or both -NH groups;
n and p are selected such that n + p is in the range of from about 1 to about 6;
o is selected in the range of from about 2 to about 39; and
w, x and y are integers selected such that the number average molecular weight of the ionic polymer is from about 8 000 g/mol to about 150 000 g/mol, preferably from about 8 000 g/mol to about 60 000 g/mol, limits included.

**7.** An ionic polymer selected from an ionic polymer of Formulae 26, 27 and 28:

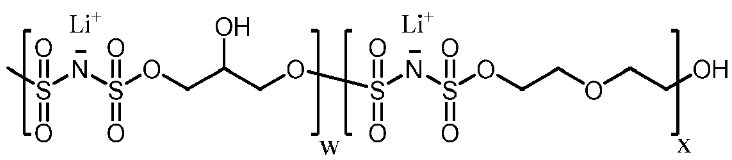

Formula 26

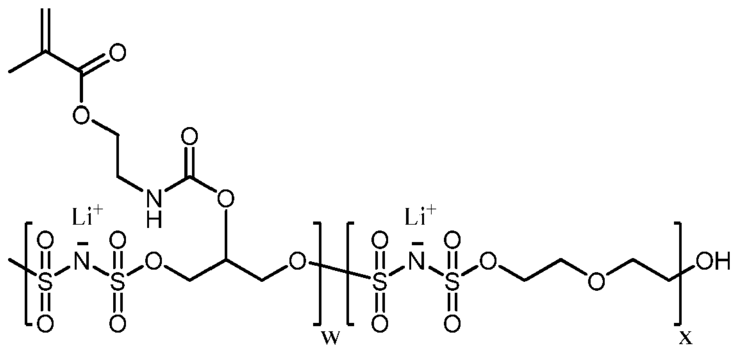

Formula 27

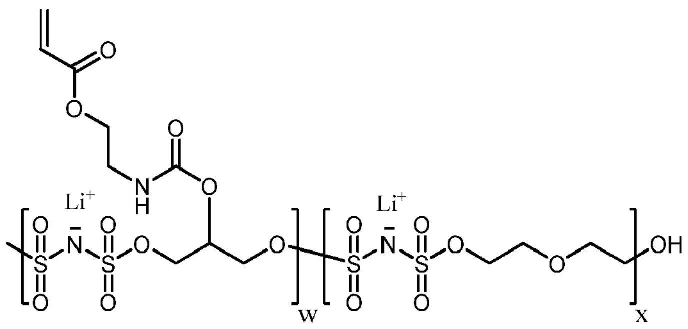

Formula 28

wherein,
w and x are integers selected such that the number average molecular weight of the ionic polymer is from about 8 000 g/mol to about 150 000 g/mol, preferably from about 8 000 g/mol to about 60 000 g/mol, limits included.

**8.** A polymer composition comprising at least one ionic polymer as defined in any one of claims 1 to 7 and optionally further comprising at least one additional component or additive, preferably the additional component or additive is selected from the group consisting of ionic conductors, inorganic particles, glass particles, ceramic particles, a combination of at least two thereof and other similar additives, more preferably a filler, even more preferably filler is selected from the group consisting of titanium dioxide ($TiO_2$), alumina ($Al_2O_3$) and silicon dioxide ($SiO_2$) particles or nanoparticles.

**9.** The polymer composition of claim 8, wherein said polymer composition:

i. is a solid polymer electrolyte composition;
ii. is a binder in an electrode material;
iii. is used in an electrochemical cell;
iv. is used in a supercapacitor, preferably the supercapacitor is a carbon-carbon supercapacitor; or
v. is used in an electrochromic material.

**10.** A solid polymer electrolyte composition:

i. comprising a polymer composition as defined in claim 8;
ii. further optionally comprising at least one salt, preferably the salt is an ionic salt selected from the group consisting of a lithium salt, a sodium salt, a potassium salt, a calcium salt and a magnesium salt, more preferably a lithium salt, and even more preferably the lithium salt is selected from the group consisting of lithium hexafluorophosphate ($LiPF_6$), lithium bis(trifluoromethanesulfonyl)imide (LiTFSI), lithium bis(fluorosulfonyl)imide (LiFSI), lithium 2-trifluoromethyl-4,5-dicyanoimidazolate (LiTDI), lithium 4,5-dicyano-1,2,3-triazolate (LiDCTA), lithium bis(pentafluoroethylsulfonyl)imide (LiBETI), lithium tetrafluoroborate ($LiBF_4$), lithium bis(oxalato)borate

(LiBOB), lithium nitrate ($LiNO_3$), lithium chloride (LiCl), lithium bromide (LiBr), lithium fluoride (LiF), lithium perchlorate ($LiClO_4$), lithium hexafluoroarsenate ($LiAsF_6$), lithium trifluoromethanesulfonate ($LiSO_3CF_3$) (LiTf), lithium fluoroalkylphosphate $Li[PF_3(CF_2CF_3)_3]$ (LiFAP), lithium tetrakis(trifluoroacetoxy)borate $Li[B(OCOCF_3)_4]$ (LiTFAB), lithium bis(1,2-benzenediolato(2-)-O,O')borate $Li[B(C_6O_2)_2]$ (LBBB) and a combination of at least two thereof; and
iii. further optionally comprising at least one additional component or additive, preferably the additional component or additive is selected from the group consisting of ionically conductive materials, inorganic particles, glass particles, ceramic particles, a combination of at least two thereof and other similar additives.

**11.** A solid polymer electrolyte comprising a solid polymer electrolyte composition as defined in claim 10, wherein said polymer is optionally crosslinked.

**12.** An electrode material comprising:

i. an electrochemically active material, said electrochemically active material preferably being in the form of particles and/or said electrochemically active material preferably being selected from the group consisting of metal oxides, lithium metal oxides, metal phosphates, lithium metal phosphates, titanates and lithium titanates, wherein the metal of the electrochemically active material is preferably selected from the group consisting of titanium (Ti), iron (Fe), magnesium (Mg), manganese (Mn), vanadium (V), nickel (Ni), cobalt (Co), aluminum (Al) and a combination of at least two thereof;
ii. a polymer composition as defined in claim 8, said polymer composition preferably being a binder;
iii. further optionally comprising at least one electronically conductive material, said electronically conductive material preferably being selected from the group consisting of carbon black, acetylene black, graphite, graphene, carbon fibers, carbon nanofibers, carbon nanotubes and a combination of at least two thereof, and more preferably the electronically conductive material is acetylene black; and
iv. further optionally comprising at least one additional component or additive, said additional component or additive preferably being selected from the group consisting of ionic conductors, inorganic particles, glass or ceramic particles, nanoceramics, salts and other similar additives, and more preferably selected from the group consisting of $Al_2O_3$, $TiO_2$ and $SiO_2$;

wherein said electrode material is a positive electrode material or a negative electrode material, preferably a negative electrode material wherein the electrochemically active material is a lithium titanate, and more preferably a carbon-coated lithium titanate.

**13.** An electrode comprising an electrode material as defined in claim 12 on a current collector.

**14.** An electrochemical cell comprising a negative electrode, a positive electrode and an electrolyte, wherein at least one of the negative electrode, the positive electrode and the electrolyte comprises the polymer composition as defined in claim 8, or wherein at least one of the negative electrode and the positive electrode is as defined in claim 13, or wherein the electrolyte is a solid polymer electrolyte as defined in claim 11.

**15.** An electrochemical accumulator comprising at least one electrochemical cell as defined in claim 14, preferably said electrochemical accumulator is a battery selected from the group consisting of a lithium battery, a lithium-ion battery, a sodium battery, a sodium-ion battery, a magnesium battery and a magnesium-ion battery, and more preferably a lithium or a lithium-ion battery.

**16.** A process for the preparation of a polymer composition as defined in claim 8, the process comprising the steps of:

(i) preparation of a metal bis(halosulfonyl)imide; and
(ii) reaction of at least one compound including two or more functional groups as defined is claim 1 with said metal bis(halosulfonyl)imide, wherein the reaction is preferably carried out in the presence of a solvent, preferably the solvent is selected from the group consisting of N,N-dimethylformamide, N-methyl-2-pyrrolidone, dimethylacetamide, carbon tetrachloride, chloroform, acetonitrile, tetrahydrofuran and or a miscible combination of at least two thereof, and more preferably N,N-dimethylformamide.

**17.** The process of claim 16, said process further comprising at least one of:

(iii) a step of preparing a bis(halosulfonyl)imide preferably carried out by the reaction between sulfamic acid

and a halosulfonic acid in the presence of at least one halogenating agent, preferably the bis(halosulfonyl)imide is a bis(chlorosulfonyl)imide, the halosulfonic acid is chlorosulfonic acid, and the halogenating agent is selected from the group consisting of phosphorus trichloride, phosphorus pentachloride, thionyl chloride, thionyl fluoride, phosphoryl chloride and oxalyl chloride, preferably wherein the step of preparing a bis(halosulfonyl)imide is carried out at a temperature in the range of from about 60 °C to about 150 °C, or from about 70 °C to about 145 °C, or from about 80 °C to about 140 °C, or from about 90 °C to about 100 °C, or from about 110 °C to about 140 °C, or from about 120 °C to about 140 °C, or from about 125 °C to about 140 °C, or from about 125 °C to about 135 °C, limits included, and more preferably carried out at a temperature of about 130 °C for a period of about 24 hours;

(iv) a post-functionalization or a post-polymerization modification step, wherein the post-functionalization or the post-polymerization modification step is preferably carried out to introduce at least one crosslinkable functional group and is preferably carried out by a reaction between at least one functional group and at least one crosslinkable functional group, wherein said crosslinkable functional group is preferably selected from the group consisting of $C_1$-$C_{10}$alkyl-acrylate, $C_1$-$C_{10}$alkylmethacrylate, oxycarbonylamino-$C_1$-$C_{10}$alkyl-methacrylate, oxycarbonylamino-$C_1$-$C_{10}$alkyl-acrylate, carbonylamino-$C_1$-$C_{10}$alkyl-methacrylate and carbonylamino-$C_1$-$C_{10}$alkyl-acrylate;

(v) a separation or purification step preferably carried out by a liquid chromatography method or by a filtration method, preferably by a steric exclusion chromatography or a membrane filtration-based method, preferably the membrane filtration-based method is a nanofiltration method or an ultrafiltration method, and even more preferably an ultrafiltration method wherein the membrane has a molecular weight cut off limit of 1,000 DA;

(vi) a step of coating the polymer composition, preferably the coating step is carried out by at least one of a doctor blade coating method, a comma coating method, a reverse-comma coating method, a printing method such as gravure coating, or a slot-die coating method;

(vii) a step of drying the polymer composition to remove any residual solvent and/or water, wherein the step of drying the polymer composition and the coating step, if present, are preferably performed simultaneously; and

(ix) a crosslinking step preferably carried out by UV irradiation, heat treatment, microwave irradiation, electron beam, gamma irradiation, or X-ray irradiation, preferably wherein the crosslinking step is carried out in the presence of at least one of a crosslinking agent, a thermal initiator, a photoinitiator, a catalyst, a plasticizing agent and a combination of at least two thereof.

**18.** The process of claim 16 or 17, wherein the step of preparing a metal bis(halosulfonyl)imide is carried out by a metalation reaction between a bis(halosulfonyl)imide and at least one metalating agent, in the presence of a solvent, wherein the metalating agent preferably comprises an alkali or alkaline earth metal selected from the group consisting of lithium, sodium, potassium, calcium and magnesium, preferably an alkali metal selected from the group consisting of lithium, sodium and potassium, more preferably the metalating agent is a lithiating agent preferably selected from the group consisting of lithium hydroxide, lithium carbonate, lithium hydrogencarbonate, lithium hydride, lithium chloride, lithium bromide, lithium iodide, a lithium carboxylate of formula $RCO_2Li$ (wherein R is a linear or branched $C_1$-$C_{10}$alkyl group or an aromatic hydrocarbon), lithium oxalate and metallic lithium, and wherein the solvent is selected from the group consisting of N,N-dimethylformamide, N-methyl-2-pyrrolidone, dimethylacetamide, carbon tetrachloride, chloroform, acetonitrile, tetrahydrofuran and a miscible combination of at least two thereof, preferably N,N-dimethylformamide.

**19.** The process of any one of claims 16 to 18, wherein the step of preparing a metal bis(halosulfonyl)imide is carried out at a temperature in the range of from about 20 °C to about 150 °C, or from about 30 °C to about 135 °C, or from about 40 °C to about 130 °C, or from about 50 °C to about 125 °C, or from about 60 °C to about 120 °C, or from about 70 °C to about 115 °C, or from about 80 °C to about 110 °C, or from about 90 °C to about 105 °C, limits included, preferably at a temperature of about 100 °C, and/or wherein the step of preparing a metal bis(halosulfonyl)imide is carried out for a time period in the range of from about 10 hours to about 48 hours, or from about 10 hours to about 24 hours, or from about 12 hours to about 24 hours, limits included, preferably from about 12 hours to about 24 hours, limits included.

**20.** The process of any one of claims 16 to 19, wherein the reaction of at least one compound including two or more functional groups with the metal bis(halosulfonyl)imide is a polymerization step, preferably the polymerization is carried out by polycondensation or by polyesterification, prefeferably the polyesterification is carried out by a Fischer or a Steglich esterification reaction.

**21.** The process of claim 20, wherein the polymerization step is carried out in the presence of:

- at least one base, said base preferably being selected from the group consisting of triethylamine, N,N-diisopropylethylamine, pyridine and pyridine derivatives, and more preferably triethylamine;
- optionally of at least one polymerization catalyst, said polymerization catalyst preferably being selected from the group consisting of an acid catalyst, nucleophilic catalyst and a boron-based catalyst, preferably wherein the acid catalyst is a Lewis acid catalyst, preferably wherein the nucleophilic catalyst is selected from the group consisting of 4-dimethylaminopyridine, pyridine and other pyridine derivatives, more preferably the nucleophilic catalyst is 4-dimethylaminopyridine, preferably wherein the boron-based catalyst is a boric acid-based catalyst or a boronic acid-based catalyst, and/or preferably wherein the polymerization catalyst is selected from the group consisting of diarylboronic acids of formula $Ar_2BOH$ (wherein Ar is an aryl group), diphenylboronic acid, trifluorophenyl boronic acid, 9H-9-bora-10-thiaanthracene-9-ol, 10H-phenoxaborinin-10-ol, boron tribromide, boron trichloride, acyl fluoroborates, triethyloxonium fluoroborate, boron trifluoride etherate, boron trifluoride, tris(pentafluorophenyl)borane, a combination of at least two thereof when compatible and other similar boron-derived catalysts;
- optionally at least one co-catalyst; and
- optionally at least one acylation catalyst.

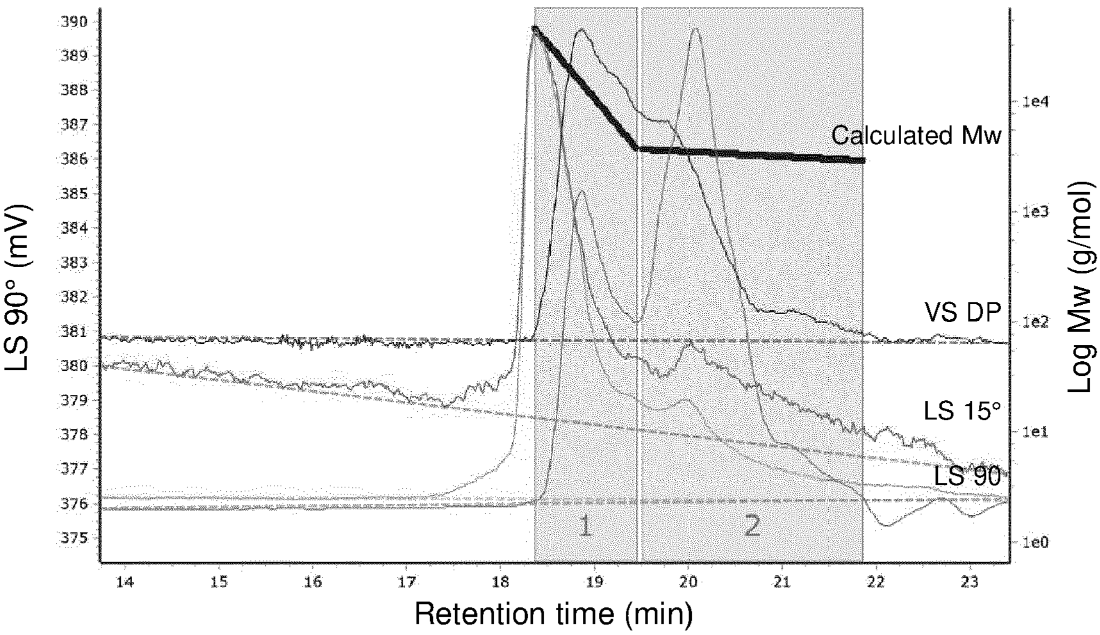


**Figure 1**

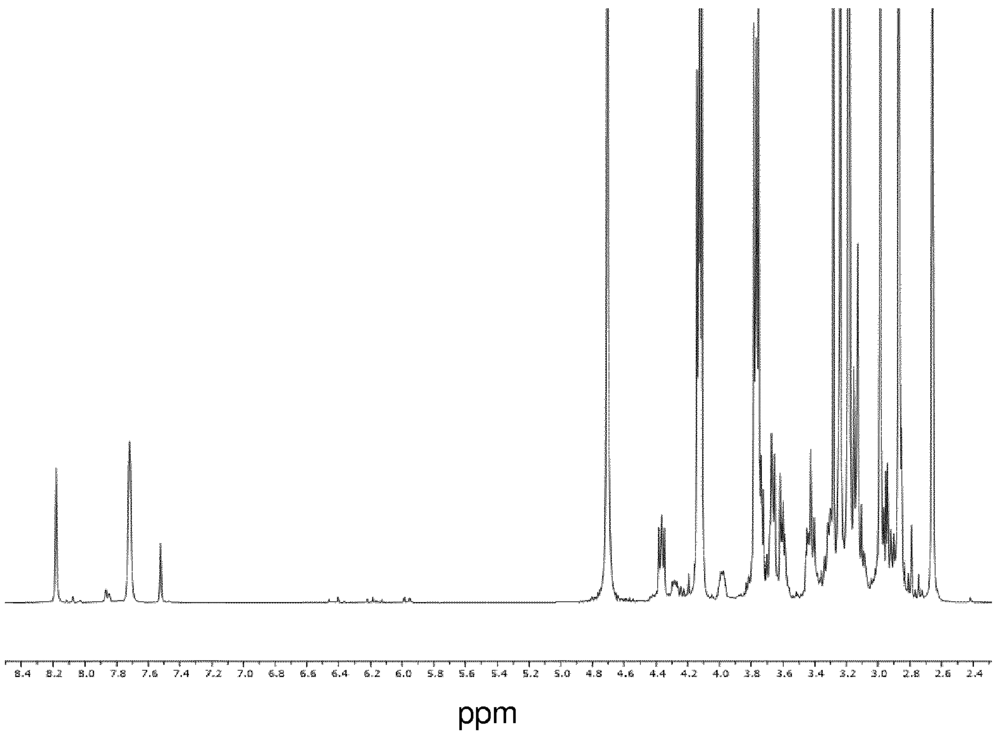


**Figure 2**

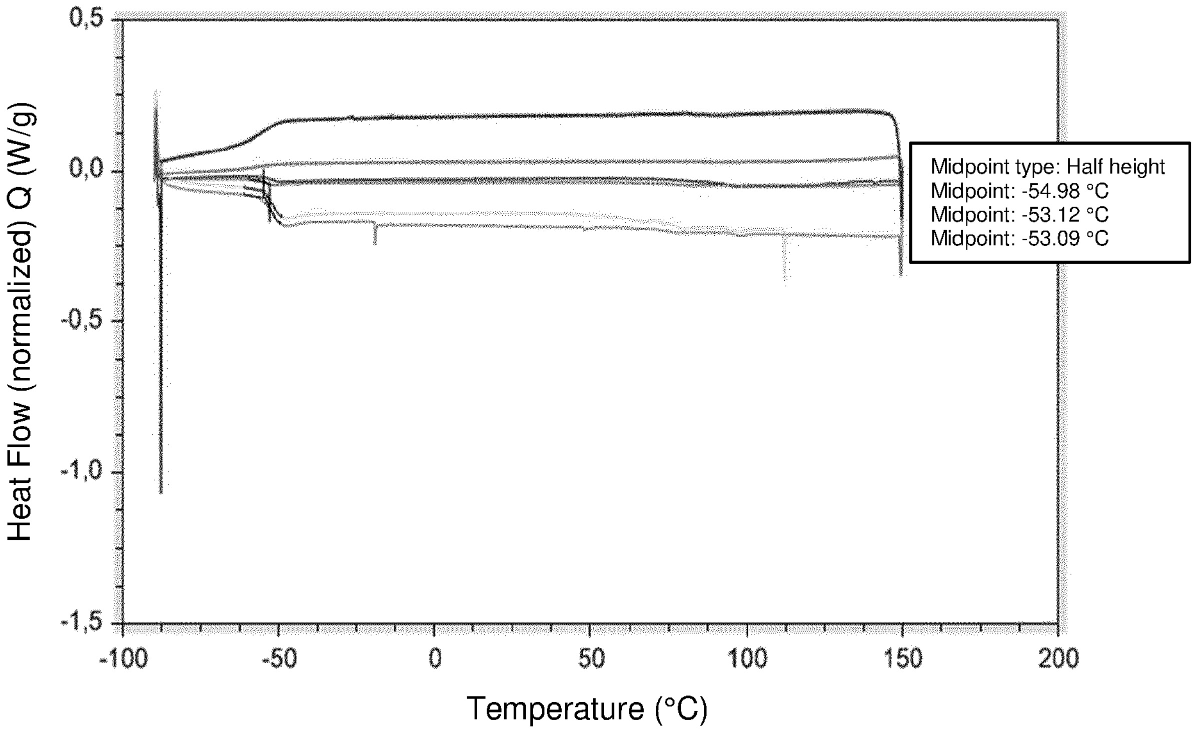


**Figure 3**

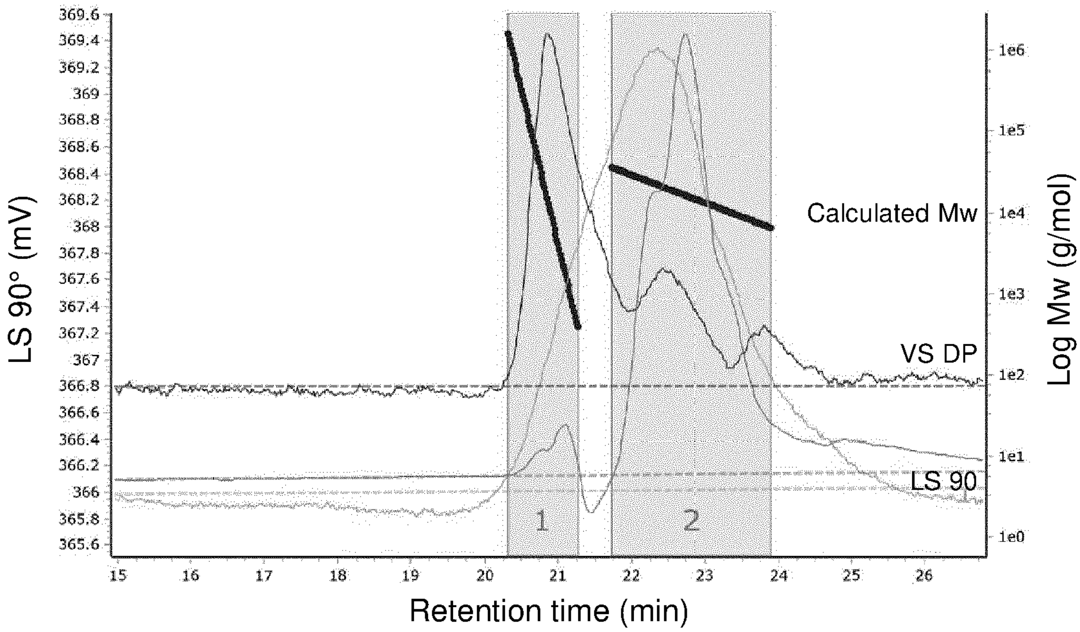


**Figure 4**

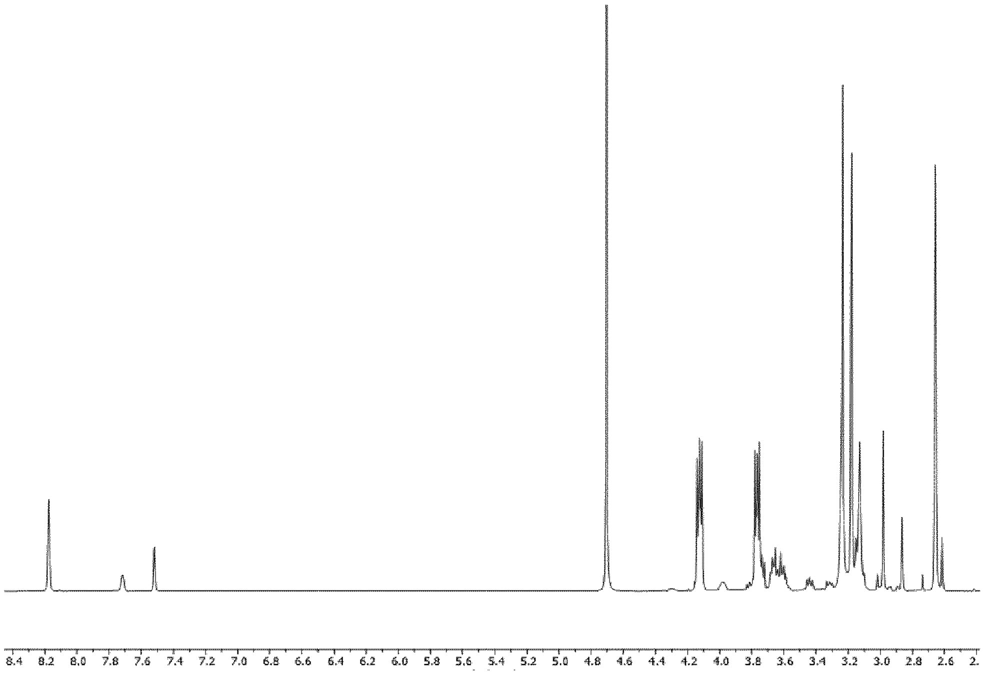


ppm

**Figure 5**

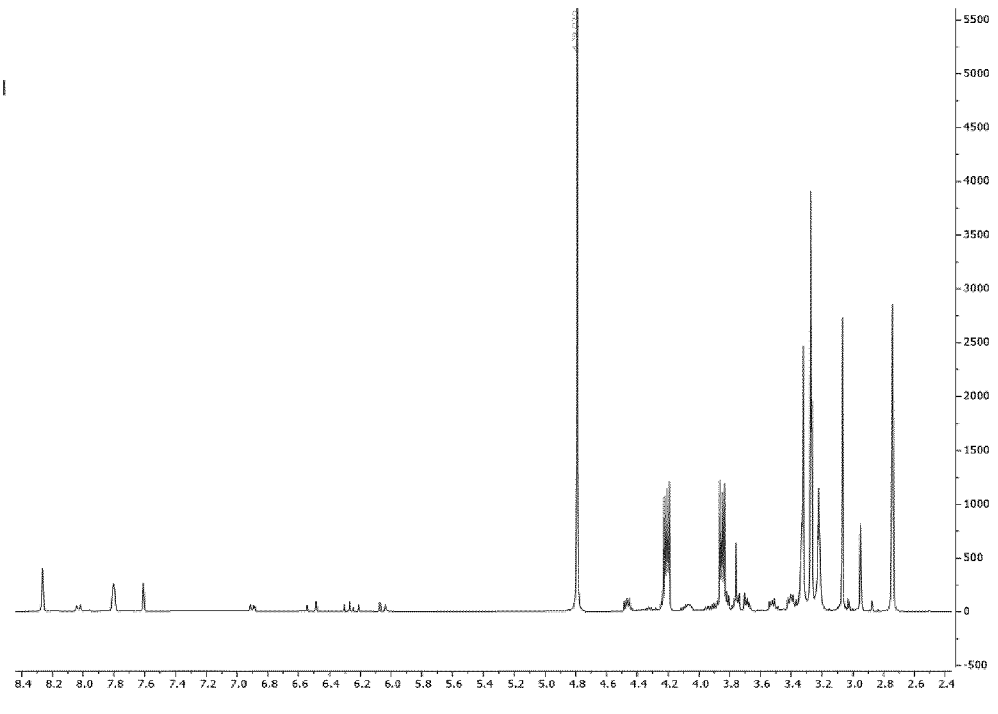


ppm

**Figure 6**

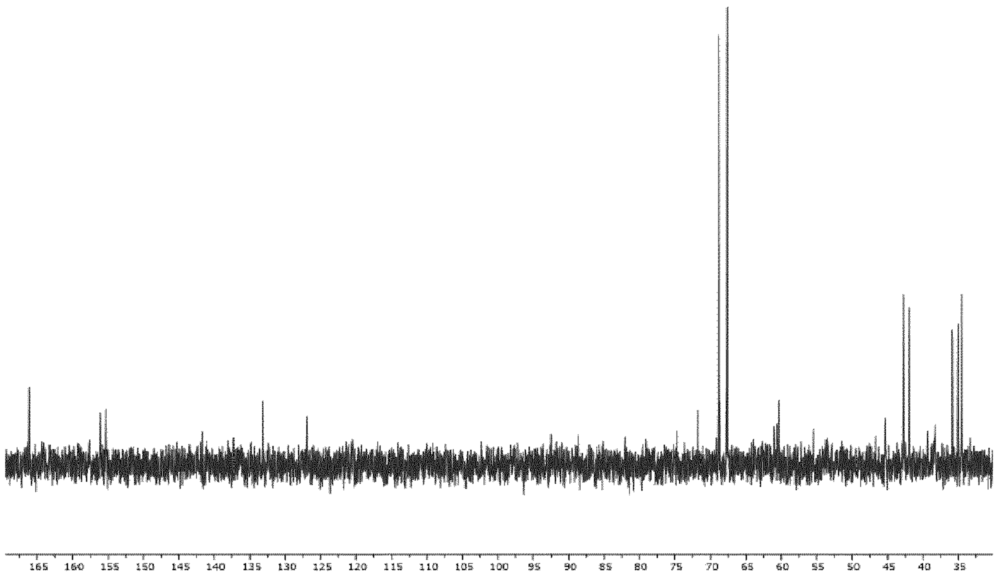


**Figure 7**

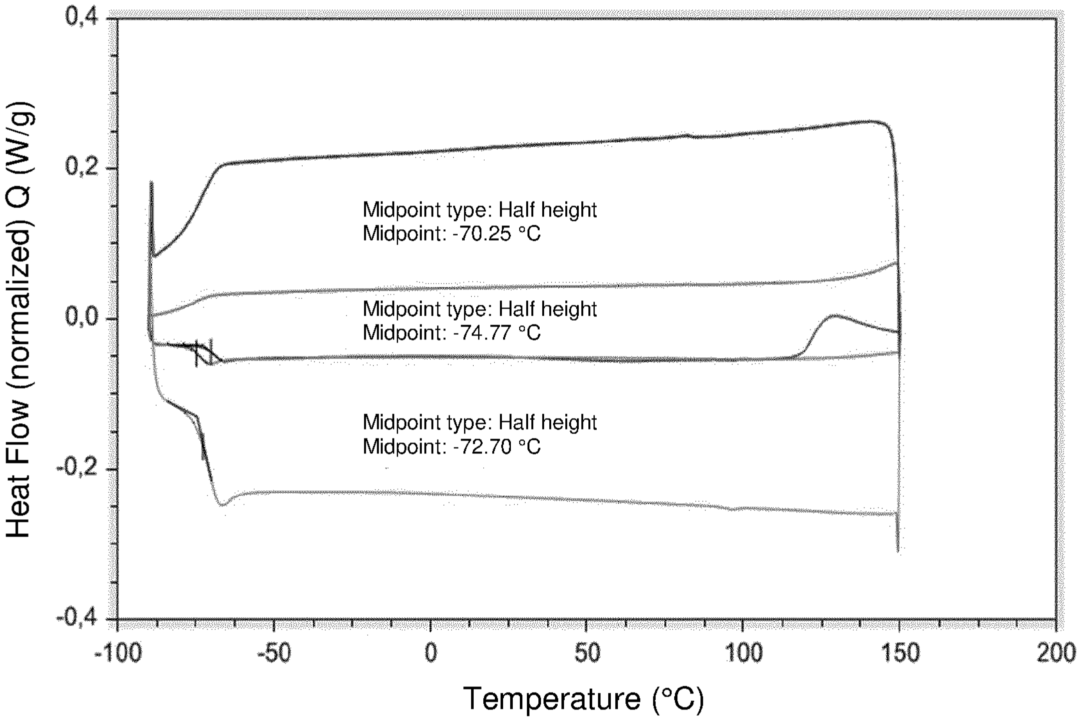


**Figure 8**

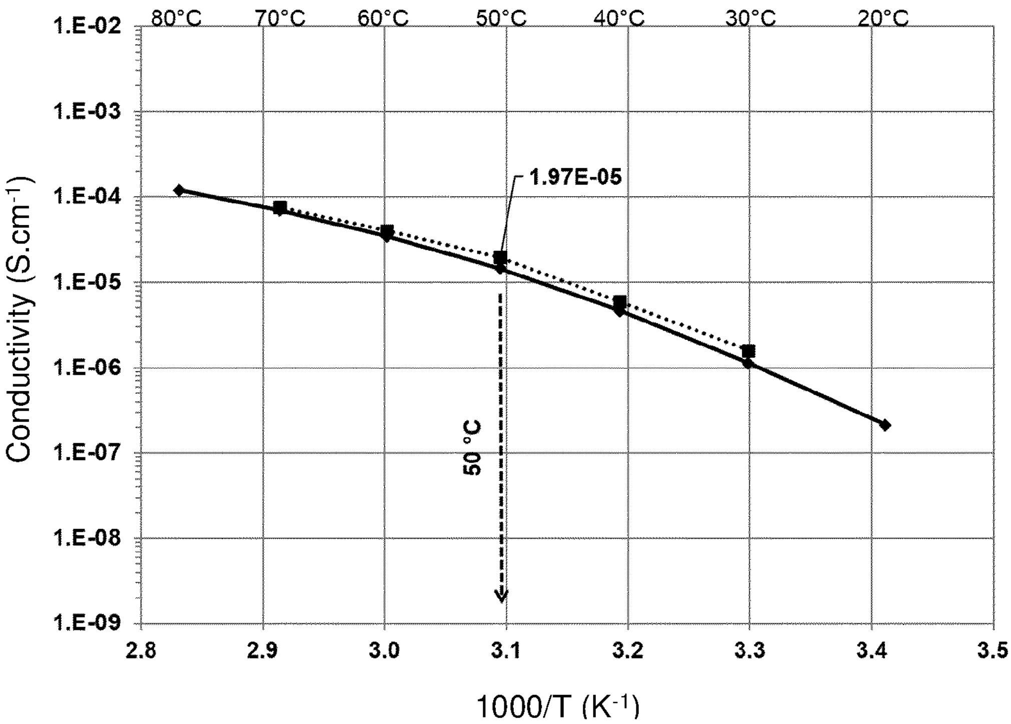


Figure 9

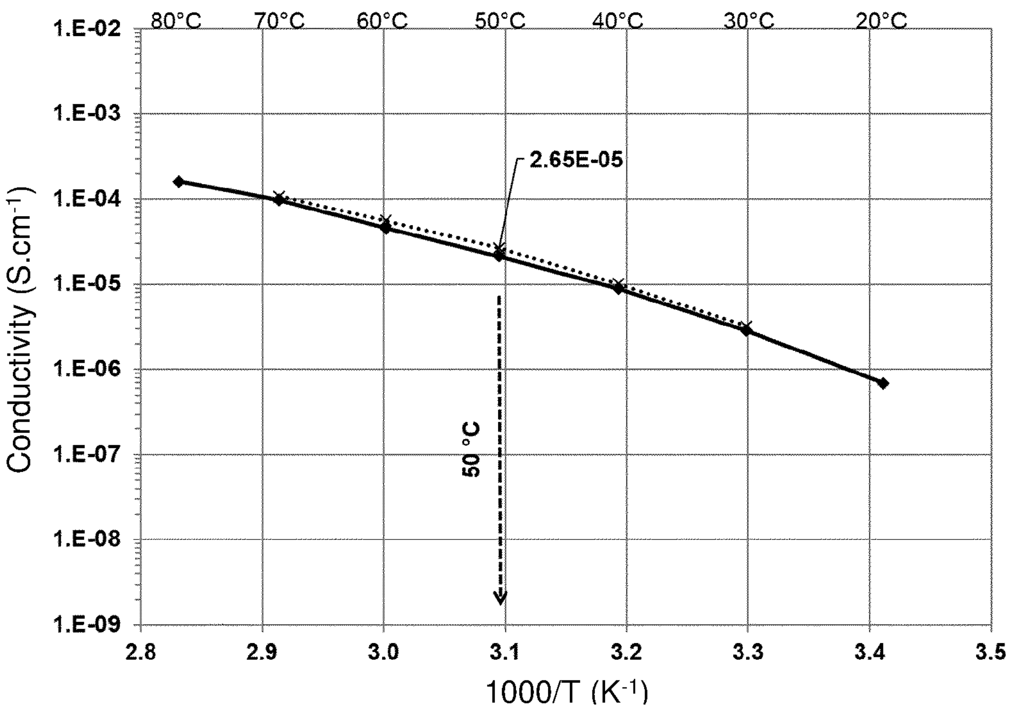


Figure 10

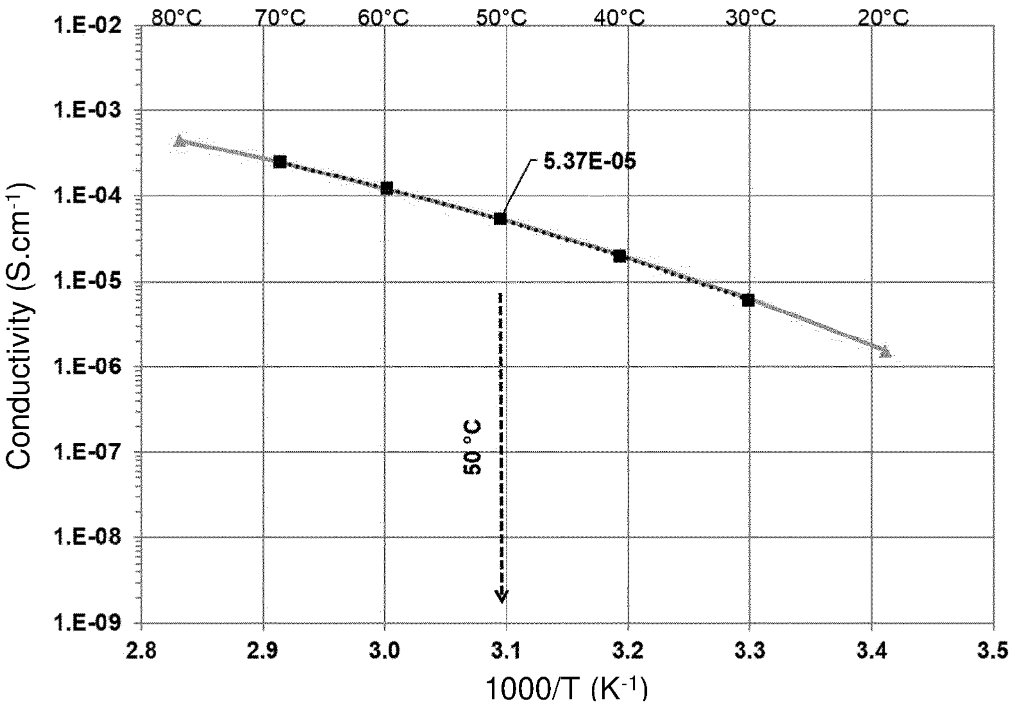


**Figure 11**

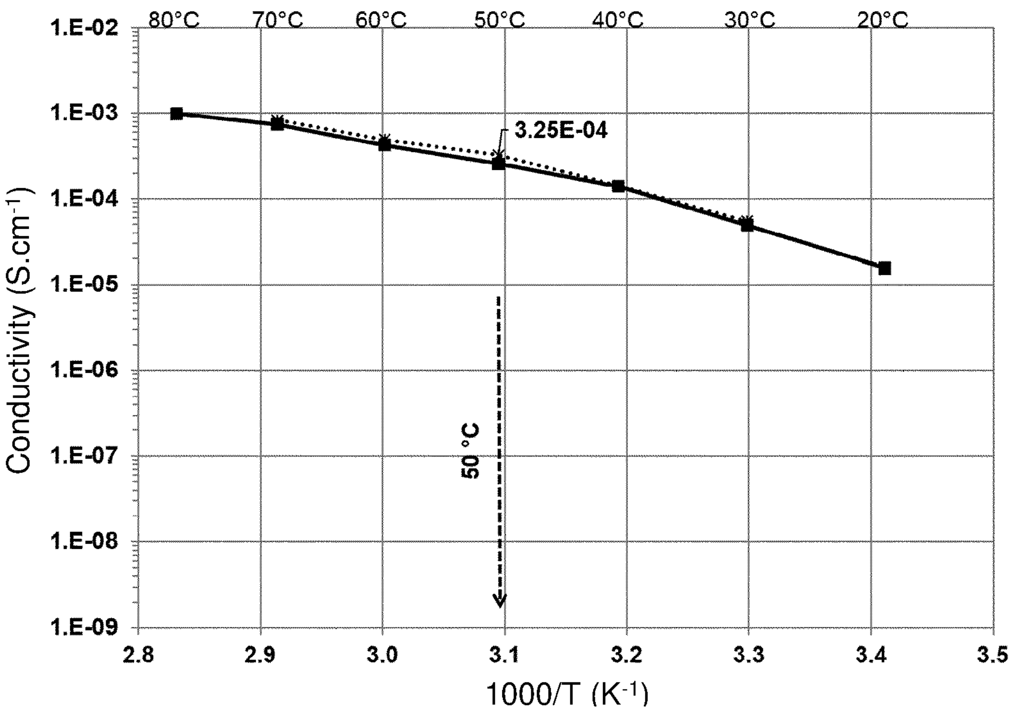


**Figure 12**

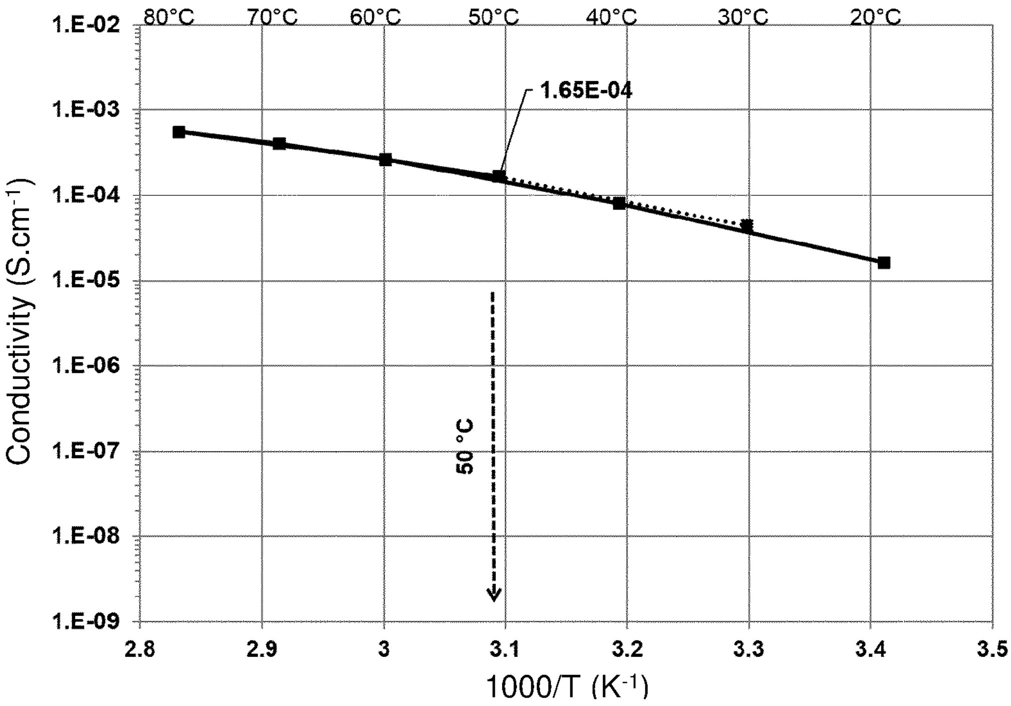


**Figure 13**

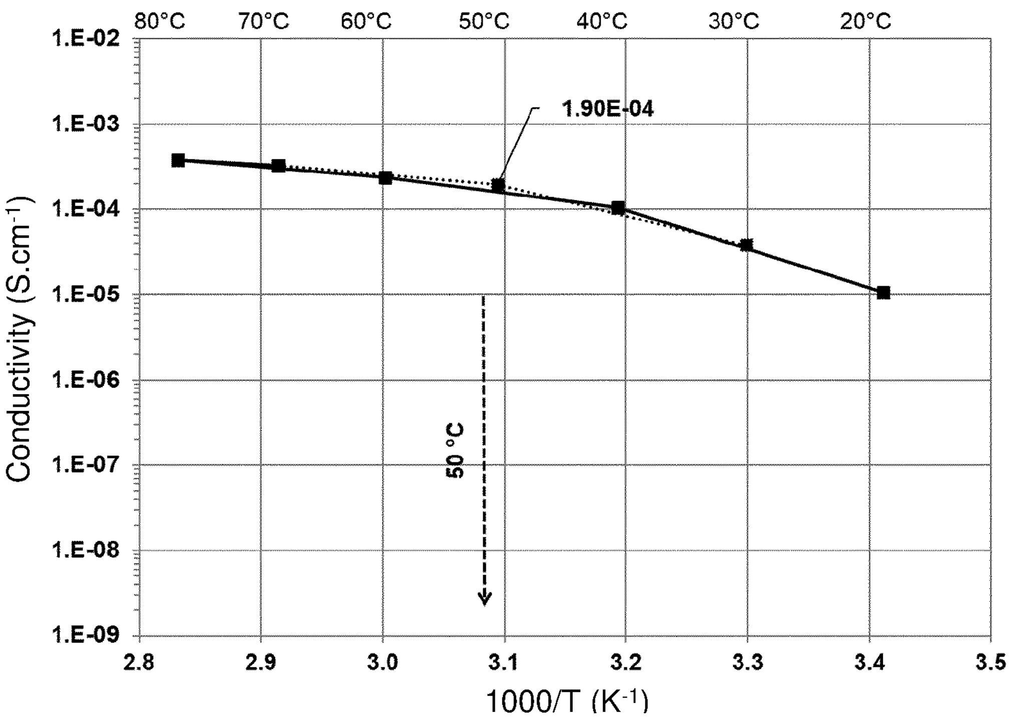


**Figure 14**

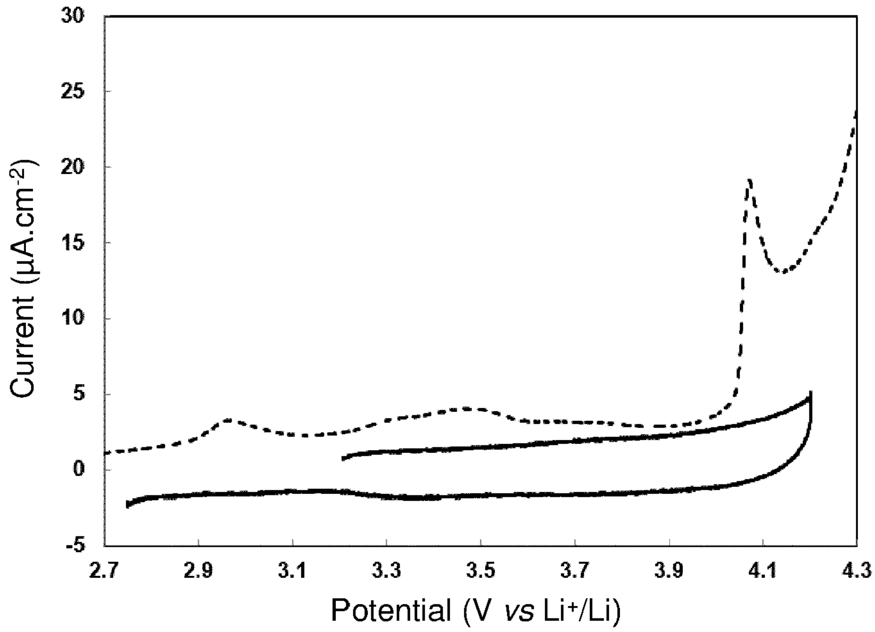


**Figure 15**

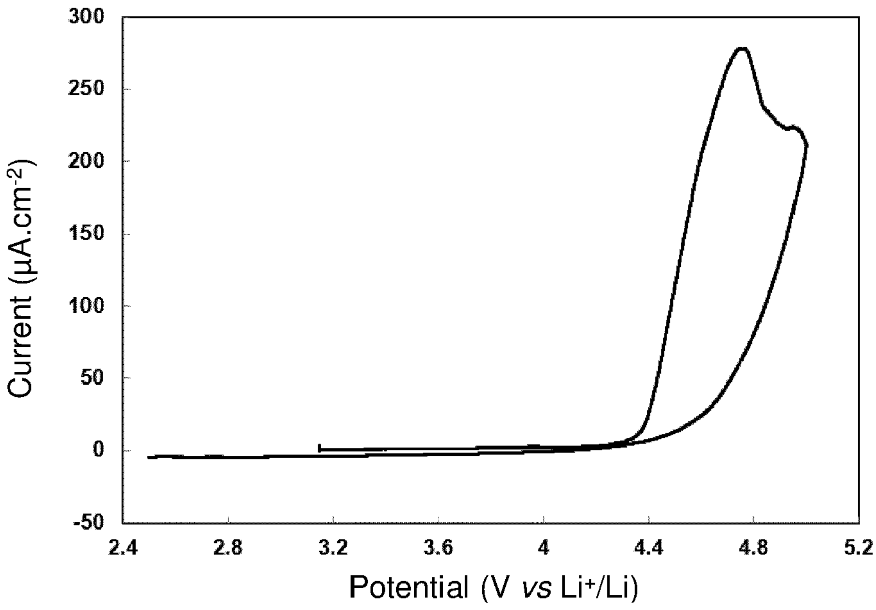


**Figure 16**

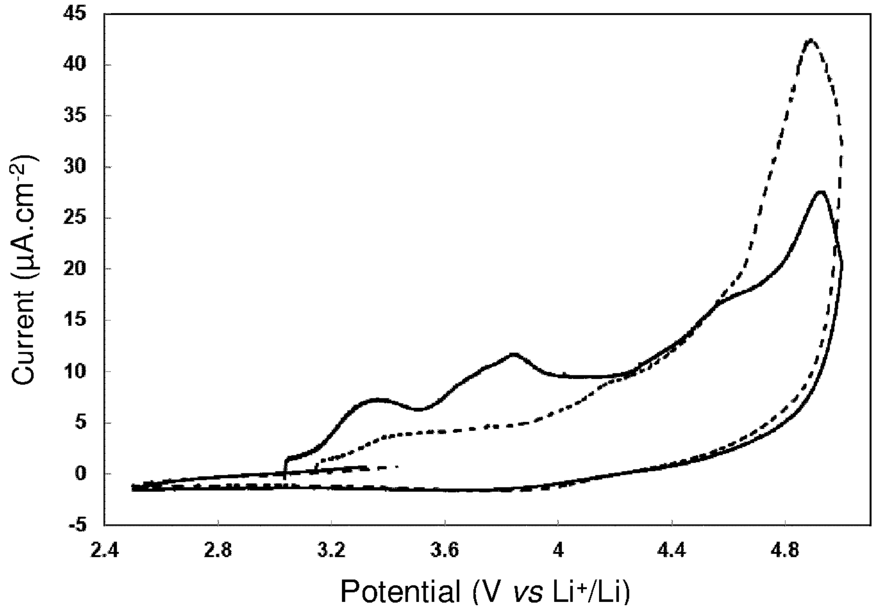


**Figure 17**

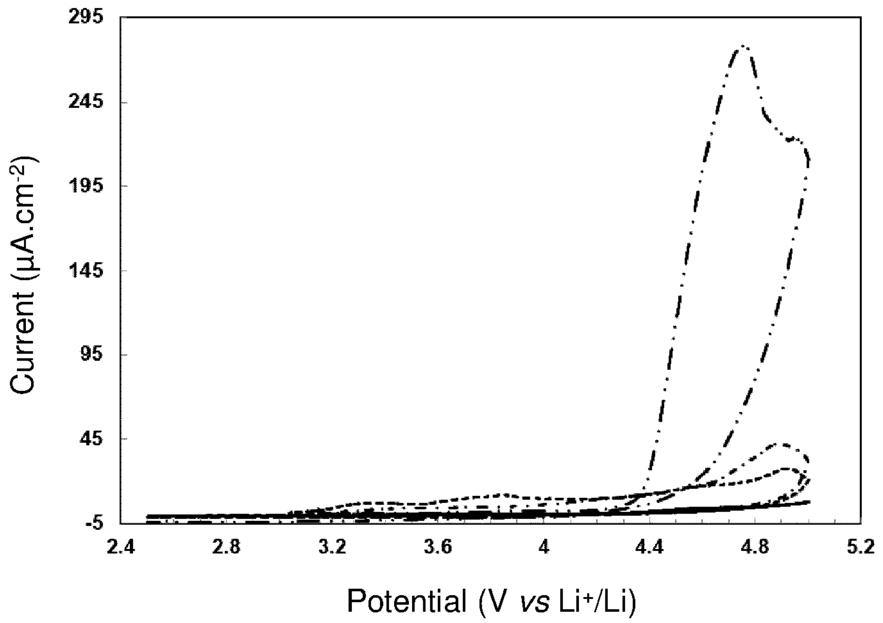


**Figure 18**

Europäisches Patentamt
European Patent Office
Office européen des brevets

# EUROPEAN SEARCH REPORT

Application Number
EP 20 20 6000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU DA-FAN ET AL: "New type of lithium poly(polyfluoroalkoxy)sulfonylimides as salts for PEO-based solvent-free electrolytes", JOURNAL OF APPLIED POLYMER SCIENCE, vol. 82, no. 8, 21 November 2001 (2001-11-21), pages 1882-1885, XP55798086, US ISSN: 0021-8995, DOI: 10.1002/app.2032 * page 1882 - page 1885 * ----- | 1-21 | INV. C08G75/30 C08L81/10 H01L21/00 H01M10/00 |
| X | JP 2003 215791 A (CENTRAL GLASS CO LTD) 30 July 2003 (2003-07-30) * paragraph [0001] - paragraph [0037]; claims 1-4; examples * ----- | 1-21 | |
| X | CN 1 320 979 A (UNIV HUAZHONG SCIENCE TECH [CN]) 7 November 2001 (2001-11-07) * page 1 - page 5; claims 1-6; examples * ----- | 1-21 | |
| | | | TECHNICAL FIELDS SEARCHED (IPC) |
| X | JP H10 168194 A (TOYOTA MOTOR CORP) 23 June 1998 (1998-06-23) * paragraph [0001] - paragraph [0020]; claims 1-4; examples * ----- | 1-21 | C08G H01M C08L H01L |
| X | US 6 235 921 B1 (KOBAYASHI HIROSHI [JP] ET AL) 22 May 2001 (2001-05-22) * column 1, line 5 - column 5, line 34; claims 1-9; examples * ----- | 1-21 | |

The present search report has been drawn up for all claims

1

| Place of search | Date of completion of the search | Examiner |
|---|---|---|
| The Hague | 22 April 2021 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 20 6000

This annex lists the patent family members relating to the patent documents cited in the above-mentioned European search report. The members are as contained in the European Patent Office EDP file on
The European Patent Office is in no way liable for these particulars which are merely given for the purpose of information.

22-04-2021

| Patent document cited in search report | Publication date | Patent family member(s) | Publication date |
|---|---|---|---|
| JP 2003215791 A | 30-07-2003 | NONE | |
| CN 1320979 A | 07-11-2001 | NONE | |
| JP H10168194 A | 23-06-1998 | NONE | |
| US 6235921 B1 | 22-05-2001 | JP 3250777 B2 | 28-01-2002 |
| | | JP H08217745 A | 27-08-1996 |
| | | US 6235921 B1 | 22-05-2001 |
| | | US 2001012903 A1 | 09-08-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7897674 B2, Zaghib
- US 5356553 A
- US 6903174 B2, Harvey


### Non-patent literature cited in the description


- **HALLINAN et al.** *Annual review of materials research,* 2013, vol. 43, 503-525
- **ARMAND, M.** *Solid State Ionics,* 1983, vol. 9, 745-754
- **BERAN et al.** *Zeitschrift für anorganische und allgemeine Chemie,* 2005, vol. 631.1, 55-59
- **PAUL et al.** *Journal of Inorganic and Nuclear Chemistry,* 1977, vol. 39.3, 441-442
- **HIGASHI et al.** *Journal of Polymer Science: Polymer Chemistry Edition,* 1984, vol. 22 (7), 1653-1660
- **SLAVKO et al.** *Chemical Science,* 2017, vol. 8.10, 7106-7111